# EUROPEAN PATENT SPECIFICATION

(11) **EP 4 350 866 B1**
(45) Date of publication and mention of the grant of the patent: **08.07.2026**
(21) Application number: 22810250.5
(22) Date of filing: 15.04.2022
(51) Int. Cl.: H01M 50/298, H01M 50/50, H02J 7/00, B25F 5/00, H01M 10/42, H01M 10/48, H01M 50/204, H01M 50/244, H01M 50/213, H01M 50/247, H01M 50/262, H01M 50/264, H01M 50/284, H01M 50/296, H01M 50/519, H02J 50/00

(54) **BATTERY PACK, ELECTRIC TOOL SYSTEM, AND CHARGING SYSTEM**
BATTERIEPACK, ELEKTROWERKZEUGSYSTEM UND LADESYSTEM
BLOC-BATTERIE, SYSTÈME D'OUTILS ÉLECTRIQUES, ET SYSTÈME DE CHARGE

(30) Priority: 28.05.2021 CN 202110599056; 28.05.2021 CN 202110599414; 28.05.2021 CN 202110597537; 28.05.2021 CN 202121180953 U; 28.05.2021 CN 202110594839; 28.05.2021 CN 202121189483 U; 28.05.2021 CN 202110598060; 28.05.2021 CN 202121190274 U; 28.05.2021 CN 202110592720; 28.05.2021 CN 202121190241 U; 28.05.2021 CN 202110594819; 28.05.2021 CN 202121189296 U; 28.05.2021 CN 202110592719; 28.05.2021 CN 202121190311 U; 28.05.2021 CN 202110596913; 28.05.2021 CN 202121186384 U; 28.05.2021 CN 202110599310; 28.05.2021 CN 202121181551 U; 28.05.2021 CN 202110599060; 28.05.2021 CN 202121186466 U; 28.05.2021 CN 202110596483; 28.05.2021 CN 202121189685 U; 28.05.2021 CN 202110596769; 28.05.2021 CN 202121189300 U; 28.05.2021 CN 202121182145 U; 07.07.2021 CN 202110766898; 07.07.2021 CN 202121540534 U
(43) Date of publication of application: 10.04.2024
(73) Proprietor: Globe (Jiangsu) Co., Ltd., Changzhou, Jiangsu 213023 (CN)
(72) Inventor: LUO, Ming, Changzhou, Jiangsu 213023 (CN); ZHUANG, Xian, Changzhou, Jiangsu 213023 (CN); LI, Baoan, Changzhou, Jiangsu 213023 (CN); LU, Chuntao, Changzhou, Jiangsu 213023 (CN); YAN, An, Changzhou, Jiangsu 213023 (CN); HUO, Xiaohui, Changzhou, Jiangsu 213023 (CN); LI, Zhiyuan, Changzhou, Jiangsu 213023 (CN)
(74) Representative: Bergenstråhle & Partners AB
(86) International application number: PCT/CN2022/087124
(87) International publication number: WO 2022/247517

(56) References cited:
- WO-A1-2017/189786
- CN-A- 112 259 866
- CN-A- 112 259 866
- CN-U- 207 868 253
- CN-U- 208 539 628
- CN-U- 214 797 631
- CN-U- 215 070 214
- CN-U- 215 418 445
- CN-U- 215 911 524
- US-A1- 2016 241 065
- US-A1- 2020 280 033

## Description

### TECHNICAL FIELD

The disclosure relates to a technical field of battery pack, in particular to a battery pack, power tool system and charging system.

### BACKGROUND

**In** recent years, with the development of battery material technology, the application range of battery cells have been greatly improved. At present, the power tool products on the market have been widely used, however, currently, the charging and discharging connectors of the battery pack generally use mechanical terminals, and the input and output voltage are single, resulting in poor matching with the access devices, a small scope of application and inconvenience for users. And the current battery pack can only supply power to the electrical device with the same voltage, the output is relatively single, which causes that the limitations are relatively large, and other consumer electronic products may not use this power source to supply power.

**And** the conventional charger can usually only charge a single battery pack, they can not charge multiple battery packs at the same time, so that users need to spend a long time charging the battery packs one by one after each use of power tools. And the conventional charger charges the battery pack through a single port, and its charging process is slow and takes a long time.

**And** when the battery pack works in a humid environment, the battery pack needs to have a high waterproof performance. However, the conventional battery pack housing has gaps and poor sealing performance, which cannot effectively prevent water from entering the battery pack, and often causes a short circuit due to water entering the battery pack.

**In** view of this, it is necessary to improve the conventional battery packs and chargers to solve the problems mentioned above.

Patent publication CN 112 259 866 A discloses a battery pack and an electric tool and system using the battery pack, in which the battery pack can be charged and discharged. A circuit board is integrated with a power supply terminal, a first power supply system, and a second power supply system. A first power supply circuit is used when the battery pack is charged through CH+ and CH-/P- ports using the industrial fast charge adapter and a second power supply circuit is used when the battery assembly is charged using the Type-C interface.

Patent publication US 2016/241065 A1 discloses a battery pack configured to couple to a power tool by sliding in a sliding direction. Terminals of the power tool are formed between sliding rails in the upper surface of the battery pack.

Patent publication US 2020/280033 A1 discloses a battery pack for use with a power tool and including a housing having an internal cavity in which one or more battery cells are supported. The housing has a set of openings, wherein each of the openings corresponds to one of the battery pack contacts.

### SUMMARY

The present invention provides a battery pack as defined in independent claim 1. Preferred embodiments of the present invention are defined by the dependent claims 2 to 13. The present invention also provides a power tool system as defined by dependent claim 11 and a charging system as defined by dependent claim 13, both comprising the battery pack as defined in independent claim 1. A preferred embodiment of the power tool system is defined by claim 12.

The battery pack of the present invention arranges a plurality of Type-C connectors on the battery pack housing, so that the electrical connection between the Type-C connectors and the circuit board may be used to realize the electrical connection between the battery cell assembly and the Type-C connectors, which may supply power to multiple different power tools at the same time to improve product applicability, and may further provide a possibility of supplying power to mobile phones, notebooks, digital cameras and other electronic products, and a plurality of chargers may also be connected to charge the battery pack to improve charging efficiency.

The battery pack of the disclosure is provided with a sealing waterproof structure on the power supply terminal and other structures of the battery pack to improve its sealing waterproof performance, which effectively prevents water from entering the battery pack, thereby avoiding a problem of a damage to a battery due to water entering in the battery pack.

The battery pack of the disclosure can be charged/discharged according to a type of a device, not only can be quickly charged through the Type-C connectors, but also can be quickly discharged for an access device with Type-C connectors, and charging/discharging power can be adjusted within a certain range according to the access device, which is suitable for a variety of access devices with different voltages, and is convenient for users.

### BRIEF DESCRIPTION OF THE DRAWINGS

In order to explain technical solutions of embodiments of the disclosure more clearly, the following will briefly introduce drawings used in a description of the embodiments. Hereafter "embodiments" refer to embodiments of the disclosure.
**FIG.** 1 is a schematic structural view of a battery pack of the disclosure.
FIG. 2 is a schematic structural view of a circuit board in the battery pack of the disclosure.
FIG. 3 is a schematic structural view of an upper housing in the battery pack of the disclosure.
FIG. 4 is a schematic structural view of a lower housing in the battery pack of the disclosure.
FIG. 5 is a schematic structural view of a battery cell assembly in the battery pack of the disclosure.
FIG. 6 is a schematic position view of charging connectors on two sides of the battery pack housing of the disclosure.
FIG. 7 is a schematic position view of charging connectors on a same side of the battery pack housing of the disclosure.
FIG. 8 is a schematic position view of charging connectors on two sides of the plug-in part of the disclosure.
FIG. 9 is a schematic position view of charging connectors on a same side of the plug-in part of the disclosure.
**FIG.** 10 is a schematic position view of charging connectors at a position of a terminal connector of the disclosure.
FIG. 11 is a schematic position view of charging connectors on a top of the battery pack of the disclosure.
FIG. 12 is another schematic position view of charging connectors on the top of the battery pack of the disclosure.
FIG. 13 is a schematic structural view of a Type-C connector in the battery pack of the disclosure.
FIG. 14 is a schematic structural view of a limiting component and a mounting groove cover of the battery pack of the disclosure.
FIG. 15 is a schematic structural view of the limiting component of the battery pack of the disclosure.
FIG. 16 is a schematic structural top view of the limiting component of the battery pack of the disclosure.
FIG. 17 is a schematic structural view of an upper housing according to an embodiment of the disclosure.
**FIG.** 18 is a schematic structural view of a waterproof battery pack of the disclosure.
**FIG.** 19 is a schematic structural view of a battery cell bracket according to an example of the disclosure.
FIG. 20 is a schematic structural view of a circuit board according to an embodiment of the disclosure.
FIG. 21 is a schematic structural view of a first connector according to an embodiment of the disclosure.
FIG. 22 is a schematic structural view of a lower housing according to an embodiment of the disclosure.
FIG. 23 is a schematic structural view of the lower housing from another angle according to an embodiment of the disclosure.
FIG. 24 is an assembling schematic view of a protective plug and the first connector according to an embodiment of the disclosure.
FIG. 25 is an assembling schematic view of a rotating protective cover and the first connector according to an embodiment of the disclosure.
FIG. 26 is an assembling schematic view of a protective sliding cover and the first connector according to an example of the disclosure.
FIG. 27 is another assembling schematic view of the protective sliding cover and the first connector according to an example of the disclosure.
FIG. 28 is a schematic internal structural view of the upper housing according to an embodiment of the disclosure.
FIG. 29 is a schematic exploded view of a power supply terminal according to an embodiment of the disclosure.
FIG. 30 is a schematic structural view of a water guiding groove according to an example of the disclosure.
FIG. 31 is a schematic structural view of a battery pack with a wireless interface according to an embodiment of the disclosure.
FIG. 32 is a structural block view of the battery pack according to an embodiment of the disclosure.
FIG. 33 is a second structural block view of a battery pack according to an embodiment of the disclosure.
FIG. 34 is a structural block view of a charging/discharging control system according to an embodiment of the disclosure.
FIG. 35 is another structural block view of a charging/discharging control system according to an embodiment of the disclosure.
FIG. 36 is a schematic structural view of a wireless voltage regulation module according to an example of the disclosure.
FIG. 37 is yet another structural block view of a charging/discharging control system according to an embodiment of the disclosure.
FIG. 38 is a schematic view of an internal communication connection of a control module according to an embodiment of the disclosure.
FIG. 39 is a schematic workflow view of a charging/discharging control method according to an example of the disclosure.
FIG. 40 is a schematic workflow view of detecting a device type according to an embodiment of the disclosure.
FIG. 41 is a schematic workflow view of a wireless charging protection logic according to an example of the disclosure.
FIG. 42 is a schematic workflow view of a wireless discharging protection logic according to an example of the disclosure.
FIG. 43 is a schematic workflow view of a charging protection logic according to an embodiment of the disclosure.
FIG. 44 is a schematic workflow view of a discharging protection logic according to an example of the disclosure.
FIG. 45 is another schematic workflow view of a charging/discharging control method according to an embodiment of the disclosure.
FIG. 46 is a schematic workflow view of a charging/discharging protection logic according to an embodiment of the disclosure.
FIG. 47 is a schematic structural view of a charging combination according to an embodiment of the disclosure.
FIG. 48 is a schematic view of a circuit of a battery pack of the disclosure.
FIG. 49 is a schematic structural view of a power tool and a battery pack of a power supply system according to an embodiment of the disclosure.
FIG. 50 is a simplified principle block view of the power tool and the battery pack of the power supply system according to an embodiment of the disclosure.
FIG. 51 is a schematic perspective view of the power tool of the power supply system according to an embodiment of the disclosure.
FIG. 52 is a bottom view of the power tool of the power supply system according to an embodiment of the disclosure.
FIG. 53 is a schematic exploded view of the battery pack according to an embodiment of the disclosure.
FIG. 54 is a structural block view of a discharging control circuit of the battery pack of the power supply system according to an embodiment of the disclosure.
FIG. 55 is a schematic workflow view of a discharging circuit of the battery pack of the power supply system according to an embodiment of the disclosure.
FIG. 56 is a second schematic structural view of a power tool and a battery pack of the power supply system in another embodiment of the disclosure.
FIG. 57 is a second simplified principle block view of the power tool and the battery pack of the power supply system in another embodiment of the disclosure.
FIG. 58 is a perspective schematic structural view of the battery pack of the power supply system in another embodiment of the disclosure.
FIG. 59 is a third schematic structural view of the power tool and the battery pack of a power supply system of the disclosure.
FIG. 60 is a third simplified principle block view of the power tool and the battery pack of the power supply system of the disclosure.
FIG. 61 is a structural block view of a circuit of the power supply system of the disclosure.
**FIG.** 62 is a schematic flow chart of a discharge process of the power supply system of the disclosure.
FIG. 63 is a schematic structural view of the power tool and the battery pack through a terminal of the disclosure.
FIG. 64 is a circuit block view of the power supply system through the Type-C connector of the disclosure.
FIG. 65 is a circuit block view of the power supply system through the terminal of the disclosure.
FIG. 66 is a flow chart of an activation of the battery pack of the disclosure.
FIG. 67 is a flow chart of a terminal discharging mode of the battery pack of the disclosure.
FIG. 68 is a flow chart of a discharging logic of the battery pack through the Type-C connector of the disclosure.
FIG. 69 is a flow chart of a Type-C discharging mode of the battery pack of the disclosure.
FIG. 70 is another schematic structural view of a charging system of the disclosure.
FIG. 71 is a schematic structural view of a circuit of a charger of the disclosure.
FIG. 72 is another schematic structural view of the charging combination according to an embodiment of the disclosure.
FIG. 73 is a schematic structural view of the charger according to an embodiment of the disclosure.
**FIG.** 74 is a schematic structural top view of the charger according to an embodiment of the disclosure.
**FIG.** 75 is a structural block view of the charger according to an embodiment of the disclosure.
**FIG.** 76 is another structural block view of the charger according to an embodiment of the disclosure.
**FIG.** 77 is a third structural block view of the battery pack according to an embodiment of the disclosure.
**FIG.** 78 is a structural block view of a detection module according to an embodiment of the disclosure.
**FIG.** 79 is a fourth structural block view of the battery pack according to an embodiment of the disclosure.
**FIG.** 80 is a structural block view of the charging combination according to an embodiment of the disclosure.
**FIG.** 81 is a schematic workflow view of a charging method according to an embodiment of the disclosure.
**FIG.** 82 is another structural block view of a communication control system according to an embodiment of the disclosure.
**FIG.** 83 is a schematic workflow view of a communication control method according to an embodiment of the disclosure.
**FIG.** 84 is a schematic workflow view of a charging/discharging according to the type of the device according to an embodiment of the disclosure.
**FIG.** 85 is another schematic workflow view of the communication control method according to an embodiment of the disclosure.
**FIG.** 86 is an application view of an adapter device.
FIG. 87 is a perspective structural view of a casing.
FIG. 88 is an exploded view of the adapter device.
FIG. 89 is a structural view of a first housing.
FIG. 90 is a structural view of a side of a second housing.
FIG. 91 is a structural view of the other side of a second housing.
FIG. 92 is a block diagram of a control system of the battery pack.
FIG. 93 is a block diagram of a control system of a charging device.
FIG. 94 is a block diagram of a control system of a charging conversion.
FIG. 95 is a flow chart of a charging of the battery pack.
FIG. 96 is a flow chart of the charging device charging for the battery pack.
FIG. 97 is a flow chart of a charging conversion method.
FIG. 98 is a perspective structural view of the casing in another embodiment.
FIG. 99 is a structural view of the first housing in another embodiment.
FIG. 100 is a side structural view of a first structure of the first housing in another embodiment.
FIG. 101 is a flow chart of a discharging of the battery pack.
FIG. 102 is a block diagram of a control system of the power tool.
FIG. 103 is a block diagram of a control system of the charger.
FIG. 104 is a flow chart of a power tool (charger) entering a working mode (battery pack charged).
FIG. 105 is a block diagram of the control system of the charging conversion.
FIG. 106 is a flow chart of a voltage conversion of the adapter device.
FIG. 107 is a schematic structural view of a multi-groove charger of the disclosure.
FIG. 108 is a front view of the multi-groove charger in FIG. 107.
FIG. 109 is a top view of the multi-groove charger in FIG. 107.
FIG. 110 is a schematic structural view of the charging system according to an embodiment of the disclosure.
FIG. 111 is a front view of an assembly of battery pack and the multi-groove charger.
FIG. 112 is a schematic structural view of a charging box in the multi-groove charger and the charging system of the disclosure.
FIG. 113 is a top view of the charging box.
FIG. 114 is a schematic structural view of charging housing in the multi-groove charger and the charging system of the disclosure.
FIG. 115 is a partial schematic structural view of a charging box in the multi-groove charger and the charging system of the disclosure.
FIG. 116 is another schematic view of the charging box in the multi-groove charger and the charging system of the disclosure.
FIG. 117 is a left view of an assembly of the battery pack and the multi-groove charger.
FIG. 118 is a schematic structural view of the multi-groove charger and the battery pack in the charging system of the disclosure.
FIG. 119 is a bottom view of the battery pack.
FIG. 120 is a schematic structural view of a backpack battery pack of the disclosure.
FIG. 121 is a schematic structural view of the battery pack housing according to an embodiment of the disclosure.
FIG. 122 is a schematic structural view of the battery pack housing from another angle according to an embodiment of the disclosure.
FIG. 123 is a schematic view of a connection of the battery pack and the power tool according to an embodiment of the disclosure.
FIG. 124 is a schematic view of a connection of the battery pack and the charger according to an embodiment of the disclosure.

### DETAILED DESCRIPTION

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

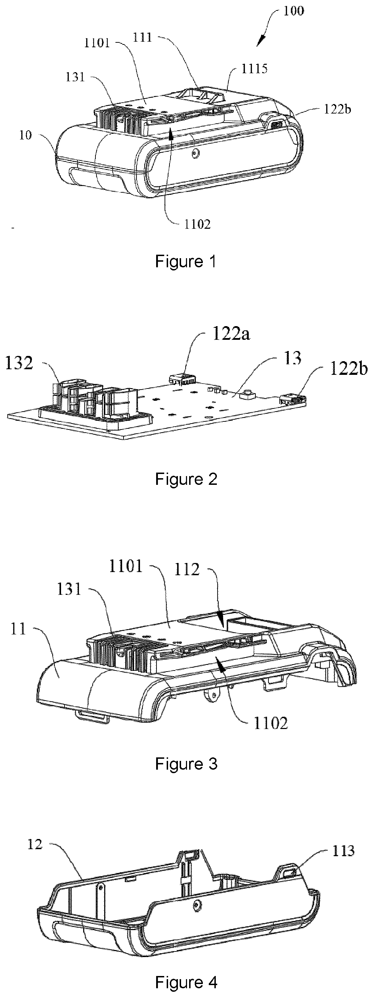

Please refer to FIG. 1 through FIG. 10. The disclosure provides a battery pack 100, used to supply power for a power tool and an electrical device. The battery pack 100 includes a battery pack housing 10, multiple Type-C connectors and power supply terminals. Specifically, the battery pack 100 further includes a battery cell assembly 120 and a circuit board 13 housed in the battery pack housing 10, the battery cell assembly 120 includes a plurality of battery cells, the plurality of the battery cells are mounted in a battery cell bracket 14, the battery cell bracket 14 is located in the battery pack housing 10, the battery cells are electrically connected by an electrode piece 141, and the battery cells are electrically connected with the circuit board 13.

Please refer to FIG. 1 and FIG. 2. A power supply terminal 132 is mounted on the circuit board 13 and electrically connected with the circuit board 13, and the power supply terminal 132 is close to a terminal connector 131 at a top of the battery pack housing 10, and is partially exposed to the terminal connector to connect an external power tool. An output voltage of the battery pack 100 is 24V, an output current of the battery pack 100 is 40A, and an output power of the battery pack 100 is 960W, but they should not be limited to this. In this embodiment, the battery pack is used in a power tool system, the power tool system includes the battery pack and the power tool in above embodiments. The power tool includes a functional module that perform corresponding functions and a plurality of tool Type-C connectors. When the battery pack 100 is connected with the power tool, the plurality of Type-C connectors of the battery pack are connected with the plurality of the tool Type-C connectors, and the battery pack outputs energy to the power tool to drive the functional module to work. The power tool includes but is not limited to a string trimmer, a blower, a hedge trimmer, a chain saw, a lawn mower, a pressure washer, a vacuum cleaner, a robotic mower, a robotic cleaning device and a riding mower.

Please refer to FIG.3 and FIG. 4. In this embodiment, the battery pack housing 10 includes an upper housing 11 and a lower housing 12. The upper housing 11 is fixedly connected with the lower housing 12, the battery cell assembly 120 and the circuit board 13 are housed in an accommodating space formed by an assembly of the upper housing 11 and the lower housing 12, a top surface of the upper housing 11 is provided with a plug-in part 1101, two sides of the plug-in part 1101 are provided with sliding rails 1102, and the terminal connector 131 is arranged at one end of the plug-in part 1101, and is located between the sliding rails 1102 on both sides of the plug-in part 1101. When an external power tool is connected with the battery pack 100 through the sliding rails 1101, the power supply terminal 132 is electrically connected with the external power tool. The upper housing 11 of the battery pack housing 10 is provided with a limiting component mounting groove 112, a limiting component 111 is mounted in the limiting component mounting groove 112, and the limiting component mounting groove 112 is sealed by a mounting groove cover 1121, the limiting component 111 is used to enable the battery pack 100 to be easily separated when plugging and unplugging the battery pack 100.

Please refer to FIG. 3 and FIG. 4. In this embodiment, the battery pack housing 10 is provided with a plug-in port 113, the battery pack 100 further includes the Type-C connector mounted in the battery pack housing 10 and partially located in the plug-in port 113, the Type-C connector and the circuit board 13 are electrically connected to realize an electrical connection between the battery cell and the Type-C connector, so as to facilitate a use of the Type-C connector to realize a power output/input of the battery cell assembly 120.

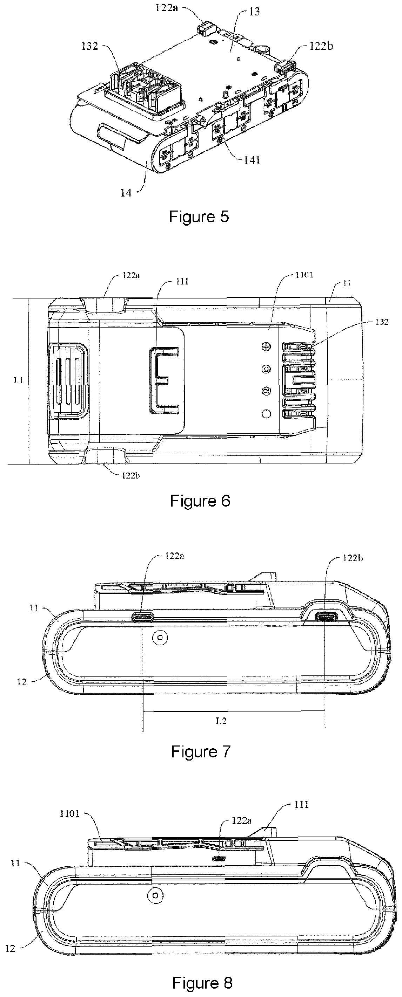

Please refer to FIG. 1 and FIG. 6. In this embodiment, the battery pack housing 10 is roughly rectangular, the Type-C connector is arranged on a long side of the battery pack housing 10, and the limiting component 111 is arranged near a short side of the upper housing 11. In this embodiment, the battery pack housing 10 is provided with the Type-C connectors on both long sides arranged oppositely. The Type-C connector includes: a first Type-C connector 122a and a second Type-C connector 122b. Correspondingly, there are two the plug-in ports 113 and they are arranged on the two long sides of the battery pack housing 10, specifically on the two long sides of the upper housing 11. An orientation of the plug-in port 113 is perpendicular to the two long sides.

Please refer to FIG. 6 through FIG. 12. In this embodiment, the first Type-C connector 122a and the second Type-C connector 122b are located on a same side or two sides of the battery pack housing 10 respectively. When the first Type-C connector 122a and the second Type-C connector 122b are located on two sides of the battery pack housing 10, a preferred arrangement is a symmetrically arrangement, they may also be asymmetrically arranged, and in some embodiments, the Type-C connectors are arranged roughly flush with the circuit board in a height direction, and a distance L1 between the two Type-C connectors ranges from 0mm to 140mm. In this embodiment, the first Type-C connector 122a and the second Type-C connector 122b are roughly flush with a second circuit board 13 in the height direction, when the battery pack is used on a tool, the two Type-C connectors may also be discharged the external device at the same time, or supply power for the external device separately through the two Type-C connectors. Please refer to FIG. 7. When the first Type-C connector 122a and the second Type-C connector 122b are located on the same side of the battery pack housing, a distance L2 between the two Type-C connectors ranges from 0mm to 160mm.

Please refer to FIG. 6 through FIG. 12. In addition, in some embodiments, the first Type-C connector 122a and the second Type-C connector 122b are located on two sides respectively or a same side of the plug-in part 1101, specifically, the first Type-C connector 122a and the second Type-C connector 122b are located at the sliding rails 1102, so that when the battery pack is used on the tool, the first Type-C connector 122a and the second Type-C connector 122b are completely blocked, which prevents foreign objects generated during a use of the tool from entering the battery pack 100.

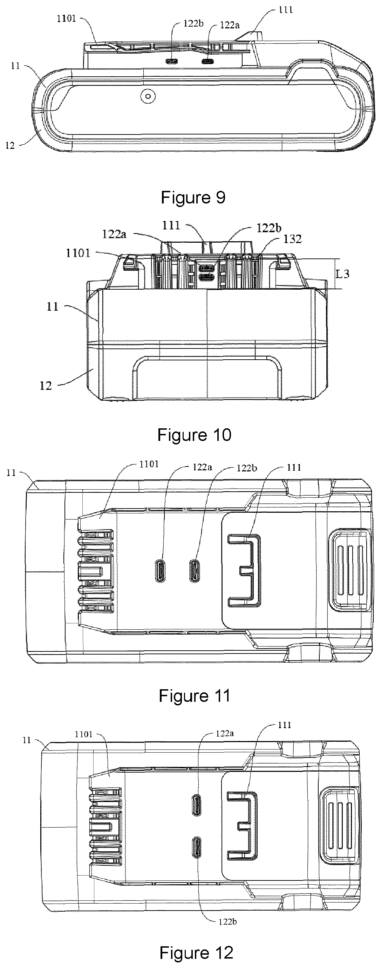

In addition, please refer to FIG. 10. in some embodiments, the first Type-C connector 122a and the second Type-C connector 122b are located at the terminal connector 131 and are arranged vertically. When the battery pack is used on the tool, the first Type-C connector 122a and the second Type-C connector 122b are completely blocked, which prevents foreign objects generated during the use of the tool from entering the battery pack 100. A height L3 from a top surface of the battery pack to a bottom surface of a guiding rail ranges from 0mm to 30mm, preferably 11.85mm, and the two Type-C connectors are distributed between the top surface of the battery pack and the bottom surface of the guiding rail.

In addition, please refer to FIG. 11 and FIG. 12. In some embodiments, the first Type-C connector 122a and the second Type-C connector 122b are located at a top surface of the terminal connector 1102 and are arranged side by side. When the battery pack is used on the tool, the first Type-C connector 122a and the second Type-C connector 122b are completely blocked, which prevents foreign objects generated during the use of the tool from entering the battery pack 100. Or one of the Type-C connectors is located on the top surface and the other one is located on a side surface. Of course, in other embodiments, the first Type-C connector 122a and the second Type-C connector 122b may also be arranged in other positions, as long as a transmission of power may be achieved, which is not limited herein.

Please refer to FIG. 1 through FIG. 5. The Type-C connector is an electrical connector that may realize a charging and discharging, and an output voltage of the Type-C connector is from 5V to 20V, in some embodiments, the output voltage of the Type-C connector is 5V, 9V, 12V, 15V, 20V. An output current is from 1A to 5A, in some embodiments, the output current is 1A, 2A, 3A, 4A, 5A. An output power is from 15W to 100W, in some embodiments, the output power is 15W, 18W, 30W, 45W, 60W, 100W.

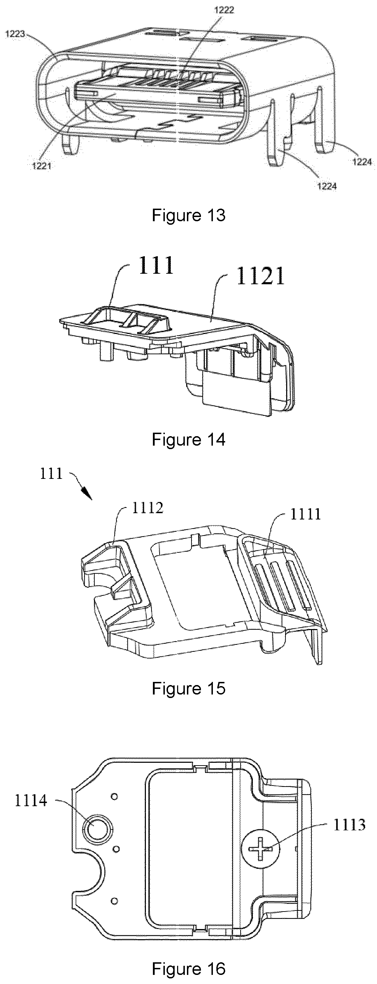

Please refer to FIG. 13, in this embodiment, the Type-C connector includes an insulating body 1221, a conductive terminal 1222 fixed on the insulating body 1221, and a cover housing 1223 covering an outside of the insulating body 1221 and the conductive terminal 1222. The conductive terminal 1222 and the cover housing 1223 are made of metal materials, and the conductive terminal 1222 is in contact with an inner wall of the cover housing 1223, thereby realizing an electrical conduction of the conductive terminal 1222 and the cover housing 1223. The cover housing 1223 is provided with a pin 1224 welded and fixed with the circuit board 13. Through this arrangement, the conductive terminal 1222 of the Type-C connectors can be electrically connected with the battery cell through the pin 1224 of the cover housing 1223 and the circuit board 13, and then electronic devices including mobile phones, laptops, digital cameras, wearable robotic devices and other electronic products can be charged through the Type-C connectors.

Please refer to FIG. 1 through FIG. 5 and FIG. 13. In this embodiment, the Type-C connectors and circuit board 13 are arranged in parallel, the parallel arrangement includes a case that the Type-C connectors are fixed on an upper side of the circuit board 13, but also includes a case that the Type-C connectors are fixed on a lower side of the circuit board 13. Since the Type-C connectors and the circuit board 13 are directly welded, a distance between an outer edge of the plug-in port 113 and the circuit board 13 is less than a longitudinal length of the plug-in port 113. Specifically, the distance between the outer edge of the plug-in port 113 and the circuit board 13 is from 0mm to 20mm, in some embodiments, from 0mm to 15mm, further in some embodiments, from 0mm to 10mm, and an optimal distance is 7.75mm.

Please refer to FIG. 1 through FIG. 5 and FIG. 13. In this embodiment, the circuit board 13 is integrated with the power supply terminal 132, the power supply terminal 132 is also electrically connected with the battery cell through the circuit board 13, one end of the upper housing 11 away from the limiting component 111 is provided with the terminal connector 131, and the power supply terminal 132 is arranged close to the terminal connector 131 and partially exposed to the terminal connector 131. An extending direction of the power supply terminal 132 and an orientation of the terminal connector 131 are parallel to the two long sides. An arrangement of the power supply terminal 31 and the terminal connector 131 enables the battery pack 100 of the disclosure to also be plugged into the power tool, thereby supplying power to the power tool.

Please refer to FIG. 1 through FIG. 5 and FIG. 13. In this embodiment, the battery pack housing 10 is further provided with a first display device 1115, the first display device 1115 may be used to display a remaining power of the battery pack 100, may also be used to display a voltage, current, cell temperature and fault, etc. of the battery pack 100. When the battery pack 100 is combined with the power tool and works, the display device may also display operating parameters of the power tool, such as a rotating speed of a motor and so on. The display device is preferably an LCD display, but should not be limited to this.

Please refer to FIG. 1, FIG. 14 through FIG. 16. In this embodiment, the first display device 1115 is fixed on the upper housing 11 and is located at a side of the limiting component 111. Specifically, the limiting component 111 includes a limiting pressing part 1111 and a limiting column 1112, the limiting pressing part 1111 is used for an operator to operate and release a lock between the battery pack 100 and the power tool. The limiting column 1112 is used to realize a fixed connection between the battery pack 100 and the external device. In addition, in this embodiment, two ends of a bottom of the limiting component 111 are provided with a spring mounting column 1113 and a guiding sleeve 1114 respectively, the spring mounting column 1113 is mounted with a limiting spring, a bottom end of the limiting spring abuts against the limiting component mounting groove 112 of the upper housing 11, which is used for the limiting component 111 to reset. The guiding sleeve 1114 is sleeved on a guiding column on the limiting component mounting groove 112, and plays a guiding role in a process of a pressing and rising of the limiting component 11.

Please refer to FIG. 1, FIG. 14 through FIG. 16. In this embodiment, the first display device 1115 is fixed on the upper housing 11 and is located between the limiting pressing part 1111 and the limiting column 1112. The purpose of such arrangement is that when the battery pack 100 is combined with the power tool, the operator can see a content displayed on the first display device 1115 during use, when abnormalities occur during the operation or during a working process of the battery pack 100 and/or the power tool, it can be found and dealt with in time to avoid an occurrence of danger.

Of course, the first display device 1115 may also be mounted on a front side of the battery pack 100, which means located on a side of the limiting pressing part 1111 away from the limiting column 1112. However, such mounting way needs to consider whether a guiding wire between the first display device 1115 and the circuit board 13 will be interfered by the limiting pressing part 1111, and a wiring will be limited.

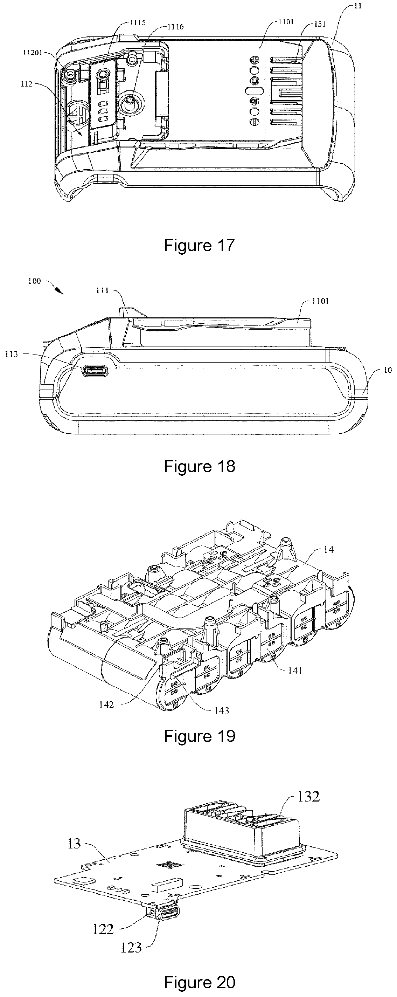

Please refer to FIG. 17, in addition, in this embodiment, the first display device 1115 is provided with a waterproof label 11151 to enhance a waterproof performance of this part. In this embodiment, the limiting component mounting groove 112 is further provided with a ventilation hole 1116, the battery pack 100 will generate gas during use or air inside the battery pack may expand due to a heating of the battery cell, the ventilation hole 1116 is used to discharge the air inside the battery pack 100. During a whole button movement: a bottom circular groove of the limiting component 111 always covers the ventilation hole 1116, which prevents water from entering the battery pack 100 through the ventilation hole 1116.

Please refer to FIG. 18 through FIG. 20. Due to an existence of a gap in the battery pack housing, a sealing performance is poor, which can not effectively prevent water from entering the battery pack and often cause damage to the battery due to the water entering battery pack. The port of the battery pack is provided with a waterproof structure. The battery pack further includes a first connector 122 arranged on a side of a housing, the first connector 122 is mounted on a bottom surface of the circuit board 13 and electrically connected with the circuit board 13. The battery cell bracket 14 is provided with a port mounting part 142, the first connector 122 is located in the port mounting part 142, and the port mounting part 142 is a limiting blocking plate, located on a side surface of the first connector 122 to achieve a limiting of the first connector 122 and ensure that the first connector 122 will not be displaced after a force, thereby ensuring a normal use of a function of the first connector 122. In this embodiment, the first connector 122 is preferably a Type-C connector. In another embodiment, the first connector 122 is mounted above the circuit board 13.

In addition, please refer to FIG. 18 through FIG. 21. In this embodiment, one end of the first connector 122 protrudes from a side surface of the battery cell bracket 14, and the end of the first connector 122 protruding from the side surface of the battery cell bracket 14 is provided with a first sealing component 123, the first sealing component 123 is deformed under an extrusion of the battery pack housing 10 and the first connector 122 to achieve a sealing.

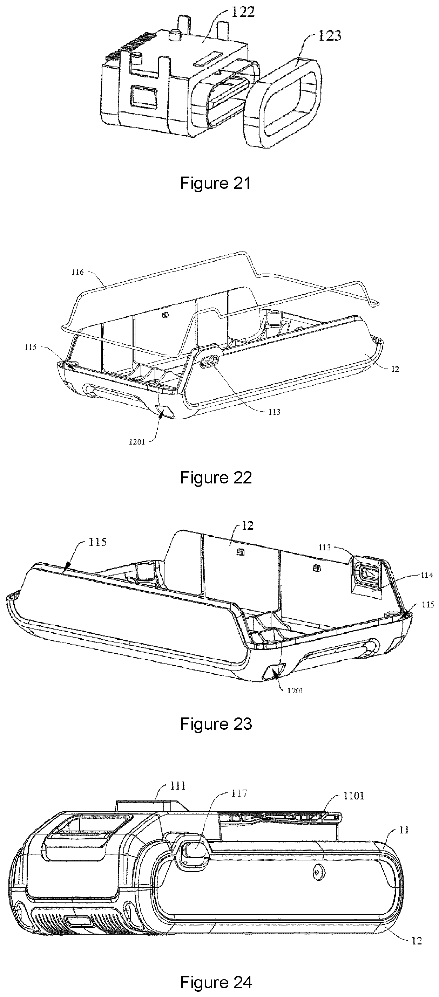

Please refer to FIG. 22. In this embodiment, an edge of the lower housing 12 connecting the upper housing 11 is provided with a sealing groove 115, the sealing groove 115 is mounted with a sealing ring 116 therein, when the lower housing 12 and the upper housing 11 are fixedly assembled, the second sealing ring 116 is deformed under an extrusion of the upper housing 11 and the lower housing 12 to fill a gap between the upper housing 11 and the lower housing 12 so as to form the sealing.

Please refer to FIG. 22. In this embodiment, the upper housing 11 and the lower housing 12 are connected by screws. Specifically, four corners of the lower housing 12 are respectively provided with threaded through holes 1201, an interior of the upper housing 11 is further provided with four threaded holes with a certain depth, screws extend from a bottom of the lower housing 12 into the threaded through holes 1201, and are connected with the threaded holes of the upper housing 11, and a threaded connection between the upper housing 11 and the lower housing 12 enables the threaded hole to be located at the bottom of the lower housing 12, thereby preventing water from entering the battery pack from the threaded hole.

Please refer to FIG. 19 through FIG. 23. In this example, an inner side of the lower housing 12 is provided with a concave groove 114, and the concave groove 114 is located below the plug-in port 113. In addition, the side surface of the battery cell bracket 14 is provided with a protruding rib 143, and the protruding rib 143 is located below the first connector 122 and protrudes from one end of the first connector 122 mounted with the first sealing component 123. When the battery cell bracket 14 is mounted together with the lower housing 12, the protruding rib 143 of the battery cell bracket 14 moves downward to the lower housing 12, the lower housing 12 is extruded outward and deformed until the protruding rib 143 is mounted into the corresponding concave groove 114 of the lower housing 12, so that the lower housing 12 is used to extrude the first sealing component 123 on the first connector 122 to deform the first sealing component 123 to fill a gap between the first connector 122 and the lower housing 12, in order to prevent an entering of the water. In this embodiment, the protruding rib 143 and the concave groove 114 are in an L-shaped structure and are matched with each other.

Please refer to FIG. 24, in this embodiment, the battery pack housing 10 of the battery pack is further mounted with a protective cover, the protective cover is located at the plug-in port 113 to cover the first connector 122, thereby playing a waterproof and dustproof effect. Specifically, in this embodiment, the protective cover is a protective plug 117, a first end of the protective plug 117 is inserted into the first connector 122 to be matched with the first connector 122, and a second end is matched with the plug-in port 113, thereby covering the first connector 122 to achieve a sealing effect, to further improve an effect of waterproof and dustproof.

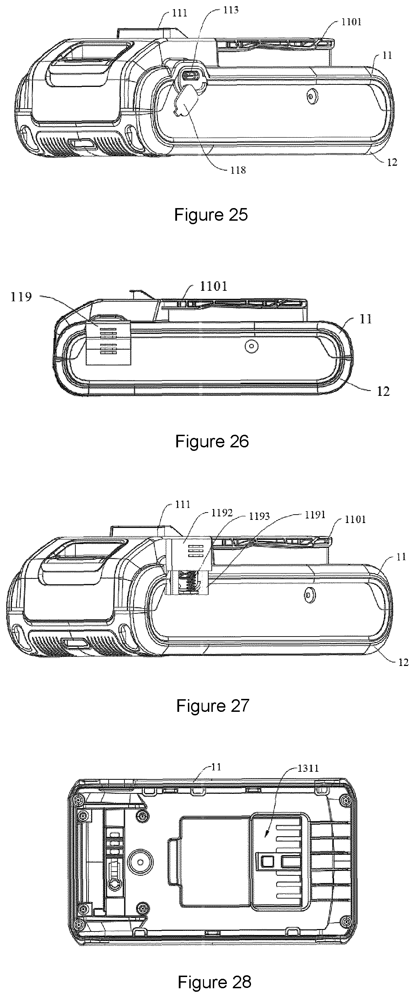

Please refer to FIG. 25. In some other embodiments, the protective cover is a rotating protective cover 118, the rotating protective cover 118 matches the first connector 122, one end of the rotating protective cover 118 is rotatably connected with the lower housing 12 by a rotation shaft, rotating around the rotating shaft, and the rotating protective cover 118 is rotated to the plug-in port 113 to cover the first connector 122, thereby performing a sealing effect and further improving the waterproof and dustproof effect.

Please refer to FIG. 26 and FIG. 27. In another example, the protective cover is a protective sliding cover 119, matched with the first connector 122. The protective sliding cover 119 includes a sliding rail 1191 and a sliding cover 1192, the sliding rail 1191 is mounted on the lower housing 12, and the sliding rail 1191 is provided with a limiting rib. Through manually sliding the sliding cover 1192 to the limiting rib, under an action of the limiting rib, the sliding cover 1192 is fixed to cover the first connector 122, thereby performing a sealing effect and further improving the waterproof and dustproof effect.

Please refer to FIG. 26 and FIG. 27. In addition, the protective sliding cover may further include the sliding rail 1191, the sliding cover 1192 and a spring 1193, the sliding rail 1191 is mounted on the lower housing 12, the sliding cover 1192 is mounted on the sliding rail 1191, a first end of the spring 1193 is connected with a platform of a lower end of the sliding rail 1192, and a second end of the spring 1193 is connected with a top of an inside of the sliding cover 1192. Under an elastic force of the spring 1193, the sliding cover 1192 automatically covers the plug-in port 113, and then covers the first connector 122, thereby performing a sealing effect and further improving the waterproof and dustproof effect.

**The** first connector is sealed by the sealing ring, and the first sealing component is deformed under an extrusion of the battery pack housing and the first connector to achieve sealing, thereby improving its sealing performance and effectively prevent water from entering the battery pack, which avoids a problem of damage to the battery caused by water entering the battery pack. And the second sealing ring is mounted at a connection between the lower housing and the upper housing to further improve the waterproof effect. Through arranging the protective cover on the battery pack housing to cover the first connector, the waterproof effect is further improved, and at the same time, a purpose of dust protection can be achieved.

In another embodiment, please refer to FIG. 20 through FIG. 29. The power supply terminal 132 is mounted on the circuit board 13, and is located at the terminal connector 131. Specifically, in this embodiment, an interior of the upper housing 11 is provided with a terminal mounting groove 1311, the power supply terminal 132 is mounted on the circuit board 13, and is located in the terminal mounting groove 1311, so that a first sealing ring 1324 on the power supply terminal 132 is matched between a plugging piece mounting base 1321 and a terminal mounting groove 1311 to achieve the sealing effect.

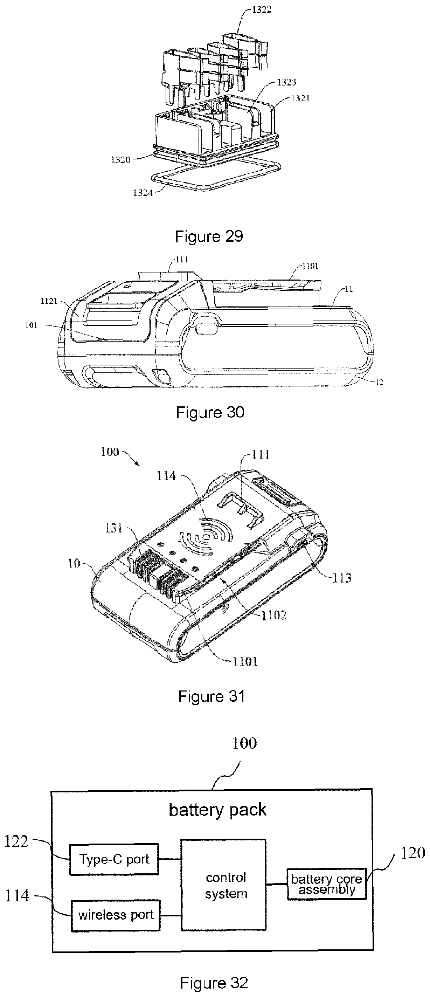

Please refer to FIG. 28 and FIG. 29. In this embodiment, the power supply terminal 132 includes the plugging piece mounting base 1321 and a plurality of plugging pieces 1322, the plugging piece mounting base 1321 is mounted on the circuit board 13, the plurality of the plugging pieces 1322 are mounted on the plugging piece mounting base 1321, and a height of the plugging piece mounting base 1321 is higher than a height of the plugging piece 1322. And a bottom of the plugging piece 1322 is electrically connected with the circuit board 13, and every two plugging pieces 1322 are separated from each other by a vertical lattice rib 1323. Specifically, the plugging piece mounting base 1321 is configured as a mounting groove with two adjacent surfaces opened, a plurality of the vertical lattice ribs 1323 are arranged at intervals within the mounting groove, in order to divide the mounting groove into a plurality of spaces that are separated and spaced from each other for mounting the plugging piece 1322. And a height of the vertical lattice rib 1323 is higher than a height of the plugging piece 1322, so as to isolate each plugging piece 1322 separately to avoid a mutual influence among a plurality of the plugging pieces 1322. In addition, in this embodiment, a bottom of the plugging piece mounting base 1321 is provided with a circle of sealing groove 1320, the sealing groove 1320 is provided with the first sealing ring 1324, the first sealing ring 1324 is deformed under an extrusion of the plugging piece mounting base 1321 and the battery pack housing 10 to fill a gap between the plugging piece mounting base 1321 and the battery pack housing 10, thereby achieving the sealing effect. When the water enters the terminal connector 131, since the plugging piece 1322 is separated separately, so that the plugging piece 1322 will not interfere with each other, and due to the sealing effect of the first sealing ring 1324, there is no gap between the plugging piece mounting base 1321 and the battery pack housing 10, so that the water entering from the terminal connector 131 can not enter the battery pack, and easy to be discharged from the terminal connector 131.

Please refer to FIG. 17 and FIG. 30. In this embodiment, the upper housing 11 of the battery pack housing 10 is provided with a limiting component mounting groove 112, the limiting component 111 is mounted in the limiting component mounting groove 112, and the limiting component mounting groove 112 is sealed by the mounting groove cover 1121, the limiting component 111 is used to enable the battery pack 100 to be easily separated when the battery pack 100 is plugged out. The water guiding groove 101 is arranged between the mounting groove cover 1121 and the battery pack housing 10. The water entering the limiting component mounting groove 112 can quickly flow out from the water guiding groove 101 to avoid water accumulation thereof, thereby affecting the waterproof performance of the battery pack.

**Please** refer to FIG. 17. In this embodiment, The limiting component mounting groove 112 is provided with a plurality of threaded holes, the bolt is fixedly connected with the mounting groove cover 1121 through the threaded hole, in addition, the threaded hole is provided with a boss 11201, a height of the boss 11201 is higher than a bottom surface of the limiting component mounting groove 112 to prevent the bolt from being immersed in the water, and can also prevent water from entering the battery pack from a gap between the bolt and the threaded hole.

Please refer to FIG. 31. In this embodiment, the battery pack housing 10 is provided with a wireless interface 114, the battery pack may be charged and discharged through the wireless interface 114. In this embodiment, the battery pack includes a plurality of discharging modes, the discharging mode includes at least a wireless discharging mode, a Type-C connector discharging mode and a power supply terminal discharging mode, and a discharging process is one of the wireless discharging mode, the Type-C connector discharging mode and the power supply terminal discharging mode or multiple modes simultaneously. In this embodiment, the battery pack includes a plurality of charging modes, the charging mode includes at least a wireless charging mode, a Type-C connector charging mode and a power supply terminal charging mode, and a charging process is one of the wireless charging modes, the Type-C connector charging mode and the power supply terminal charging mode or multiple modes simultaneously.

Please refer to FIG. 31. In addition, in this embodiment, the battery pack is charged via the wireless interface while being externally discharged via the Type-C connector; the battery pack being charged via the Type-C connector while being externally discharged via the wireless interface, and the battery pack being charged via the power supply terminal while being externally discharged via the wireless interface and the Type-C connector.

Please refer to FIG. 32. An embodiment of the disclosure provides a charging/discharging control system, the control system may be applied to the battery pack 100 using the Type-C connector 122 and/or the wireless interface 114 for charging/discharging. It should be understood that battery pack 100 includes the battery cell assembly 120, the battery cell assembly 120 includes a plurality of battery cells, the plurality of the battery cells may be connected in series and/or parallel to form the battery cell assembly 120. The battery cell assembly 120 is used for storing electrical energy, and after the plurality of the battery cells is connected with each other, it may be charged/discharged by the Type-C connector 122 and/or the wireless interface 114.

**A** first end of the control system is electrically connected with the battery cell assembly 120, and a second end of the control system is electrically connected with the wireless interface 114 and each Type-C connector 122 respectively for detecting a device type of an access device on the Type-C connector 122 and/or the wireless interface 114, and a charging/discharging of the battery pack 100 via Type-C connector 122 and/or wireless interface 114 depends on the device type. Wherein, the device types include charging device and discharging device.

It should be understood that the above Type-C connector 122 is a USB standard port, and its port type is a double-sided model that can adapt to forward and reverse plugging, and supports USB PD fast charging protocol (USB Power Delivery Specification, USB fast charging standard). In this embodiment, pins of the Type-C connector 122 include VBUS, CC, D+, D-, GND.

In addition, a communication protocol of Type-C connector 122 is not limited to the above-mentioned standardized USB PD fast charging protocol, but also supports proprietary protocols, the proprietary protocols are generally designed by each manufacturer according to their own conditions, which is not limited here.

Correspondingly, the access device is also provided with the Type-C connector, and an interaction between the access device and the battery pack 100 should meet a Type-C general communication protocol and proprietary protocol. Wherein, when the access device is a charging device, it may be a gallium nitride charger. When the access device is a discharging device, it may be a variety of power tools and garden tools, as well as mobile phones, notebooks, Bluetooth speakers and other electrical devices.

**The** wireless interface 114 adopts a WPC coil (Wireless Power Consortium), which meets an international wireless charging standard Qi, and may charge/discharge the access devices with wireless interfaces.

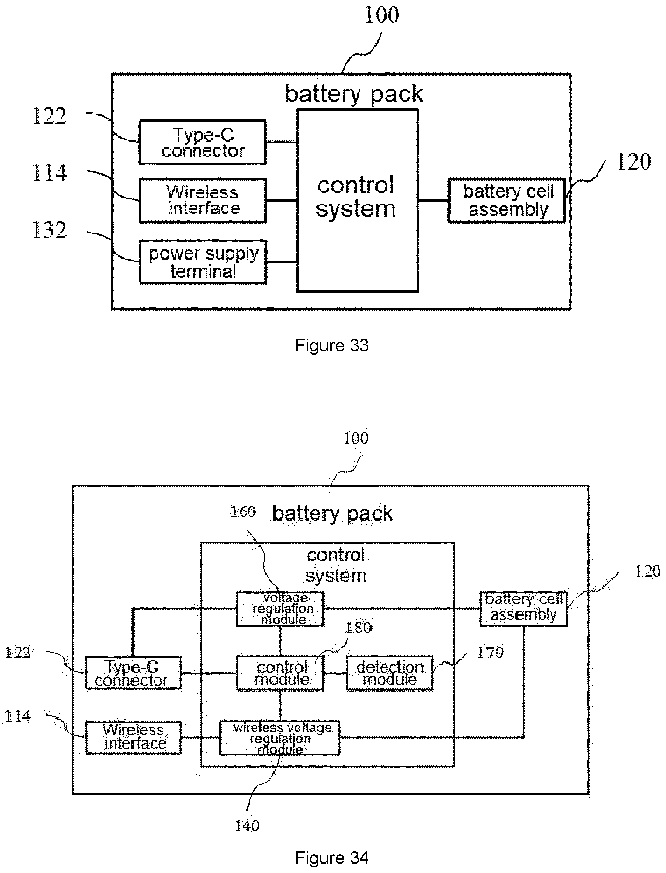

Please refer to FIG. 33. The battery pack 100 in this embodiment may further include the power supply terminal 132, and the control system is further configured to detect the device type of the access device connected to the power supply terminal 132, and configured to charge/discharge the battery pack 100 through the power supply terminal 132 according to the device type.

It should be understood that the power supply terminal 132 is a commonly used connecting port in garden tools, there are a variety of models to choose, the pins in the embodiment includes P+, CHG, COM, P-.

It should be noted that the embodiment includes the Type-C connector 122 and/or the power supply terminal 132, in a practical application, a plurality of Type-C connectors 122 may be provided as needed, by adjusting charging or discharging power, a speed of charging and discharging may be accelerated, which is convenient for users.

Please refer to FIG. 34. The control system includes a detection module 170, a control module 180, a voltage regulation module 160 and a wireless voltage regulation module 140.

**The** detection module 170 is used for a real-time acquisition of battery parameters of the battery cell assembly 120, also for a real-time acquisition of loop parameters of a Type-C loop and a wireless loop. Wherein, the battery parameters include a voltage, current and temperature of the battery cell assembly 120. The loop parameters include a loop voltage, loop current, power device temperature, and input/output voltage.

It should be understood that a Type-C loop is a related circuit from the Type-C connector 122 to the battery cell assembly 120 inside the battery pack 100, and the Type-C loop in this embodiment includes the Type-C connector 122, the detection module 170, the control module 180, the voltage regulation module 160 and the battery cell assembly 120.

It should be understood that a wireless loop is a related circuit from the wireless interface 114 to the battery cell assembly 120 inside the battery pack 100, and the Type-C loop in this embodiment includes the wireless interface 114, the detection module 170, the control module 180, the wireless voltage regulation module 140 and the battery cell assembly 120.

**The** control module 180 is used for determining the device type of the access device according to a port signal of the Type-C connector 122. It is further used to receive a key signal of a wireless charging/discharging button, and determine the device type of the access device connected with the wireless interface 114 according to the key signal. It is further used to output control signals to the voltage regulation module 160 and wireless voltage regulation module 140 according to the device type, the battery parameters and the loop parameters.

In this embodiment, a data exchange between the detection module 170 and the control module 180 is realized through an I2C bus.

**The** voltage regulating module 160 is connected in series between the battery cell assembly 120 and the Type-C connector 122, and a control terminal of the voltage regulation module 160 is electrically connected with the control module 180, which is used for adjusting an input/output voltage of the battery cell assembly 120 according to the control signals of the control module 180.

The wireless voltage regulating module 140 is connected in series between the battery cell assembly 120 and the wireless interface 114, and a control terminal of the wireless voltage regulation module 140 is electrically connected with the control module 180, which is used for adjusting the input/output voltage of the battery cell assembly 120 according to the control signals of the control module 180.

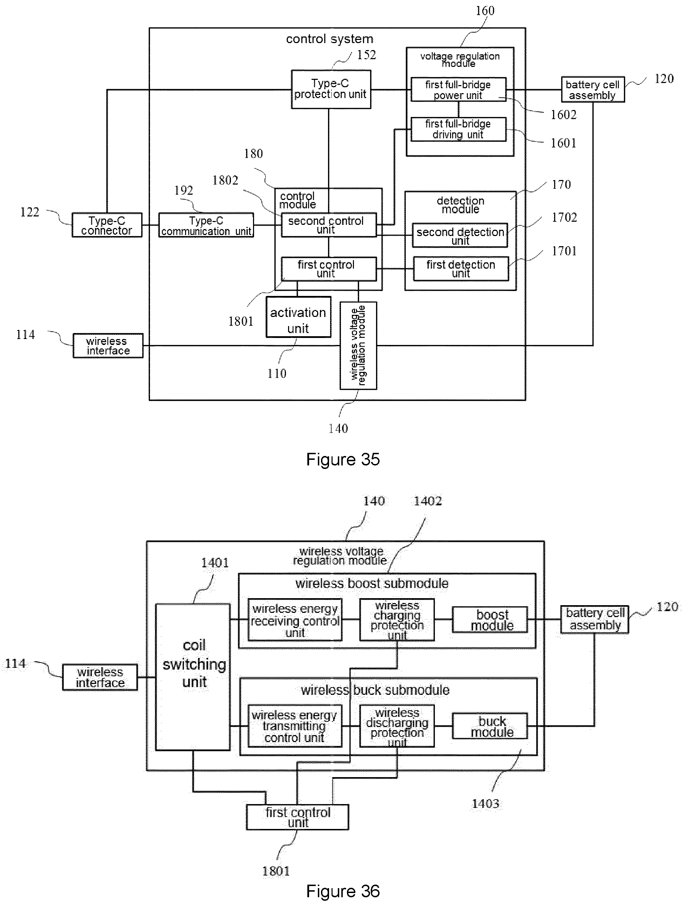

Please refer to FIG. 35, in some embodiments, the control module 180 includes a first control unit 1801 and a second control unit 1802.

**The** first control unit 1801 is used for obtaining a battery pack state according to the battery parameters, and transmitting them to the second control unit 1802. It is further used to receive the key signal of the wireless charging/discharging button and determine the device type of the access device connected with the wireless interface 114 according to the button signal. For a convenience of description, the device type of the access device connected with the wireless interface 114 is recorded as a wireless device type.

**The** first control unit 1801 is further used to output the control signal to the wireless voltage regulation module 140 according to the wireless device type, battery pack state and the loop parameters.

The second control unit 1802 is used to determine the device type of access device according to the port signal of Type-C connector 122. For a convenient description, the device type of the access device on the Type-C connector 122 is recorded as a Type-C device type.

The second control unit 1802 is further used to output the control signal to the voltage regulation module 160 according to the Type-C device type, battery pack state and the loop parameters.

It should be understood that in a charging/discharging process of the battery pack 100, a parameter range of the battery cell assembly 120 may be preset according to needs of use, and the battery pack state is determined according to the parameter range. The battery pack state in the embodiment includes abnormal, normal, charging protection and discharging protection. In practical applications, the user may further subdivide it as needed.

Specifically, if a voltage of the battery cell assembly 120 is less than a preset first threshold, or greater than a fourth threshold or a temperature of the battery cell assembly 120 is greater than any of preset temperature thresholds, the battery pack state is abnormal and a charging/discharging is not allowed.

If the voltage of the battery cell assembly 120 is between a preset second threshold and a preset third threshold, the battery pack state is normal, the charging/discharging is allowed.

If the voltage of the battery cell assembly 120 is between the preset first threshold and the preset second threshold, the battery pack state is charging protection, which is only used for charging.

If the voltage of the battery cell assembly 120 is between the preset third threshold and the preset forth threshold, the battery pack state is discharging protection, which is only used for discharging.

Wherein, a voltage values of the first threshold, the second threshold, the third threshold and the fourth threshold increase in turn.

It should be understood that the first threshold, the second threshold, the third threshold and the fourth threshold are preset values, which may be determined according to index parameters of the battery pack 100. The index parameters generally include capacity, voltage, charging voltage, charging current, discharging voltage, discharging current, which may be set according to user's own needs, and a specific value is not limited here.

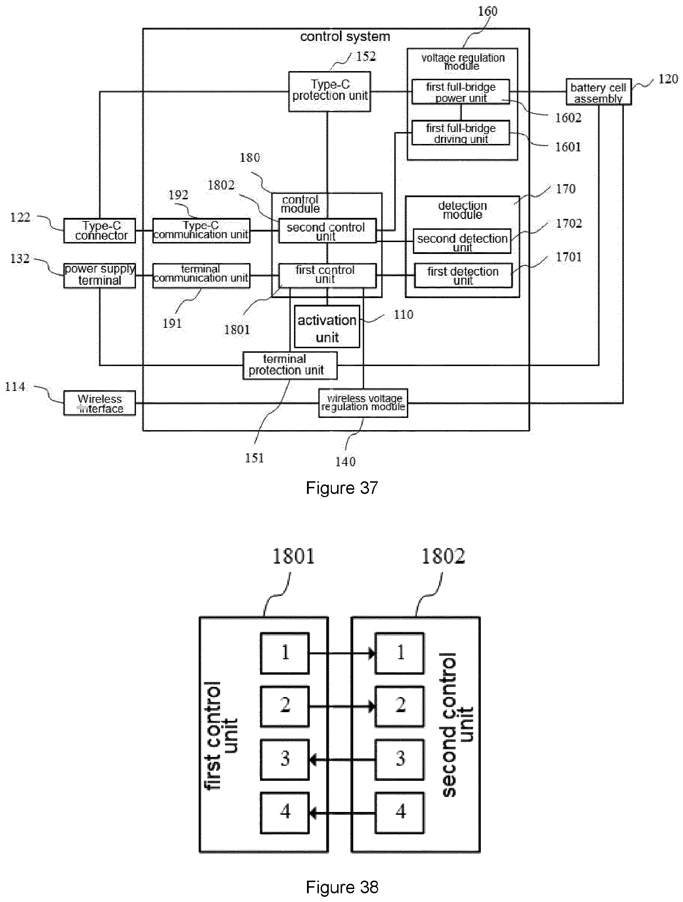

Please refer to FIG. 38. The first control unit 1801 may be connected with the second control unit 1802 by a variety of communication methods, wherein the communication methods include an I2C bus communication, a UART serial port communication and an SPI communication. In order to improve communication efficiency and anti-interference performance, in the embodiment, four groups of I/O ports are selected in a plurality of I/O ports of the first control unit 1801 and the second control unit 1802 to achieve data interaction, and a specific communication protocol is described as follows:

defining a first pin and a second pin of the first control unit 1801 as a first transmitting terminal, and a third pin and a fourth pin of the first control unit 1801 as a first receiving terminal; defining a first pin and a second pin of the second control unit 1802 as the second receiving terminal, and a third pin and a fourth pin of the second control unit 1802 as the second transmitting terminal; and defining an output high voltage level of the first control unit 1801 and/or the second control unit 1802 as 1, a low voltage level of the first control unit 1801 and/or the second control unit 1802 as 0.

**The** first control unit 1801 obtains the battery pack state according to the battery parameters, and transmits it to the second control unit 1802 through the high and low voltage levels of each pin, and the second control unit 1802 charges/discharges the battery pack 100 through the Type-C connector 122 according to the battery pack state. Wherein, a corresponding parameter of the battery pack state is recorded as OVP.

The second control unit 1802 performs matching of a common protocol with the access device on the Type-C connector 122, which determines whether the access device is a charging device or a discharge device, and transmit the common protocol to the first control unit 1801 through the high and low voltage levels of each pin.

Here's a definition of the battery pack state:
when OVP=00, at this time, battery pack 100 is in an abnormal state and the charging/discharging is not allowed;
when OVP=01, at this time, battery pack 100 is in a normal state and the charging/discharging is allowed;
when OVP=10, at this time, the battery pack 100 is in a charging protection state, and it is only used for charging; and
when OVP=11, at this time, the battery pack 100 is in a discharging protection state, and it is only used for discharging.

It should be noted that the above communication protocol is still applicable to a plurality of Type-C connector 122. Any Type-C connector 122 is connected with the access device provided with the Type-C connector 122, and after a communication handshake with the second control unit 1802 is successful, the second control unit 1802 may exchange data with the first control unit 1801.

With this method, during the charging/discharging process, the control system detects the battery parameters and the loop parameters in real time, executes a charging/discharging protection logic according to the battery parameters and the loop parameters, and dynamically adjusts an input/output power, which realizes a safe and fast charging/discharging function of the battery pack 100.

Please refer to FIG. 35. In some embodiments, the voltage regulation module 160 includes a first full-bridge driving unit 1601 and a first full-bridge power unit 1602.

**The** first full-bridge driving unit 1601 is used for outputting a driving signal to the first full-bridge power unit 1602 according to the control signal of the second control unit 1802. Wherein, the control signal of the second control unit 1802 is a PWM signal.

**The** first full-bridge power unit 1602 is connected in series between the Type-C connector 122 and the battery cell assembly 120, and a control end of the first full-bridge power unit 1602 is connected with the first full-bridge driving unit 1601 for adjusting the input/output voltage of the battery cell assembly 120 according to the driving signal.

It should be understood that the first full-bridge driving unit 1601 may output the driving signal to the first full-bridge power unit 1602 according to the control signal, thereby adjusting the input/output voltage of the battery cell assembly 120 through the first full-bridge power unit 1602.

In some embodiments, the detection module 170 includes a first detection unit 1701 and a second detection unit 1702.

**The** first detection unit 1701 is used for a real-time acquisition of the battery parameters and transmits them to the first control unit 1801.

**The** second detection unit 1702 is used for a real-time acquisition of the loop parameters and transmits them to the second control unit 1802, and the second control unit 1802 transmits the loop parameters to the first control unit 1801 for use by the first control unit 1801.

Please refer to FIG. 36. In some embodiments, the wireless voltage regulation module 140 includes a coil switching unit 1401, a wireless boost submodule 1402 and a wireless buck submodule 1403.

A first end of the coil switching unit 1401 is wirelessly connected with the wireless interface 114, and a second end of the coil switching unit 1401 is electrically connected with the wireless boost submodule 1402 and the wireless buck submodule 1403 respectively. And the control end of the coil switching unit 1401 is electrically connected with the first control unit 1801 for switching a loop according to the control signal of the first control unit 1801.

The wireless boost submodule 1402 is connected in series between the coil switching unit 1401 and the battery cell assembly 120, is used to boost a received voltage to a voltage required for charging the battery cell assembly 120 according to the control signal of the first control unit 1801.

The wireless boost submodule 1402 specifically includes a wireless energy receiving control unit, a wireless charging protection unit and a boost unit.

The wireless energy receiving control unit communicates and receives energy according to the international wireless charging standard Qi and the access device on the wireless interface 114.

The wireless charging protection unit is connected in series between the wireless energy receiving control unit and the boost unit, and a control end of the wireless charging protection unit is connected with the first control unit 1801 for controlling a connection or disconnection of a wireless circuit according to the control signal of the first control unit 1801.

The boost unit is connected in series between the wireless charging protection unit and the battery cell assembly 120, boosts the received voltage to the voltage required for charging the battery cell assembly 120.

The wireless buck submodule 1403 is connected in series between the coil switching unit 1401 and the battery cell assembly 120, is used to reduce the received voltage to a voltage required for charging the wireless interface 114 according to the control signal of the first control unit 1801.

The wireless buck submodule 1403 specifically includes a wireless energy transmitting control unit, a wireless discharging protection unit and a buck unit.

The wireless energy transmitting control unit communicates and receives energy according to the international wireless charging standard Qi and the access device on the wireless interface 114.

The wireless discharging protection unit is connected in series between the wireless energy transmitting control unit and the buck unit, and a control end of the wireless discharging protection unit is connected with the first control unit 1801 for controlling the connection or disconnection of the wireless circuit according to the control signal of the first control unit 1801.

The buck unit is connected in series between the wireless discharging protection unit and the battery cell assembly 120, and is configured to reduce a voltage of the battery cell assembly 120 to an output voltage of the wireless interface 114.

In addition, the control system further includes an activation unit 110.

The activation unit 110 is used for activating the first control unit 1801 according to an activation signal. The activation signal is obtained through any one or several of a connecting state of the Type-C connector 122, pressing an activation button or pressing wireless charging/discharging buttons. It should be understood that the battery pack 100 is provided with the activation button to control an on-off of a power loop, and after the activation button is pressed, the activation signal may be generated to pull up or down. The battery pack 100 is further provided with the wireless charging/discharging button, after the wireless charging/discharging button is pressed, a pull-up or pull-down activation signal may be generated. The first control unit 1801 may also determine the wireless device type of the wireless interface 114 according to a button signal of the wireless charging/discharging button.

**The** first control unit 1801 is further used to detect the battery pack state after being activated, if the battery pack state is not abnormal, the second control unit 1802 is activated.

With this method, the battery pack 100 is in a sleep state without the activation signal, at this time both the first control unit 1801 and the second control unit 1802 are powered off. When receiving the activation signal, the first control unit 1801 first detects the battery pack state, if the battery pack state is not abnormal, the second control unit 1802 is activated, otherwise the charging / discharging process is stopped, which not only saves electric energy, but also prevents damage to the battery cell assembly 120.

In addition, after the charging/discharging of the battery pack 100 is completed, the first control unit 1801 may further output the control signal to the second control unit 1802 to power off the second control unit 1802, and then the first control unit 1801 is powered off by itself after a certain time delay, thereby saving electric energy.

In addition, the control system further includes a Type-C communication unit 192, which is connected in series between the second control unit 1802 and the Type-C connector 122, the second control unit 1802 may be communicated with the access device on the Type-C connector 122 through the Type-C communication unit 192, so as to obtain the port signal through the Type-C connector 122, and the port signal includes the device type, charging request, discharging request, charging voltage and discharging voltage of the access device.

In addition, the control system further includes a Type-C protection unit 152.

**The** Type-C protection unit 152 is connected in series between the first full-bridge power unit 1602 and the Type-C connector 122, and a control end of the Type-C protection unit 152 is connected with the second control unit 1802 for performing a charging/discharging protection according to protection instructions of the second control unit 1802.

The second control unit 1802 is further used to output the protection instructions to the Type-C protection unit 152 according to the battery pack state and the loop parameters.

Please refer to FIG. 37. When the battery pack 100 further includes the power supply terminal 132, the control system further includes a terminal protection unit 151.

The terminal protection unit 151 is connected in series between the power supply terminal 132 and the battery cell assembly 120, and a control end of the terminal protection unit 151 is connected with the second control unit 1801 for performing the charging/discharging protection according to protection instructions of the first control unit 1801.

The first control unit 1801 is further used to output the protection instructions to the terminal protection unit 151 according to the battery parameters.

In addition, when the battery pack 100 further includes the power supply terminal 132, the control system further includes a terminal communication unit 191.

The terminal communication unit 191 is connected in series between the power supply terminal 132 and the first control unit 1801, for communicating with the first control unit 1801 and the access device on the power supply terminal 132.

It should be noted that when the battery pack 100 further includes the power supply terminal 132, the activation signal received by the activation unit 110 may be obtained by anyone of or several of the connecting state of the Type-C connector 122, a connecting state of the power supply terminal 132, pressing the activation button or pressing the wireless charging/discharging button.

The second control unit 1802 is further used to transmit the device type of the access device on the Type-C connector 122 to the first control unit 1801.

The first control unit 1801 is further used to determine the device type of the access device according to the port signal of the power supply terminal 132, for a convenience of description, the device type of the access device on the power supply terminal 132 is recorded as a terminal device type. And the battery pack 100 is charged/discharged according to the terminal device type and battery pack working conditions, specifically:

after the first control unit 1801 receives the device type of the access device on the Type-C connector 122, if it is the charging device, it is determined whether the second control unit 1802 receives a charging request sent by the charging device, if the charging request is received, the first control unit 1801 determines the battery pack working condition, if the battery pack working condition is not a discharged mode, the battery pack 100 is determined whether it needs to be charged according to the battery pack state. If so, the second control unit 1802 controls battery pack 100 to be charged. If it is the discharging device, it is determined whether the second control unit 1802 receives a discharging request sent by the discharging device, if the discharging request is received, the first control unit 1801 determines the battery pack working condition, if the battery pack working condition is not a charging mode, the battery pack 100 is determined whether it needs to be discharged according to the battery pack state. if so, the second control unit 1802 controls the battery pack 100 to be discharged.

After the first control unit 1801 receives the device type of the access device on the Type-C connector 132, if it is the charging device, it is determined whether the second control unit 1802 receives a charging request sent by the charging device, if the charging request is received, the first control unit 1801 determines the battery pack working condition, if the battery pack working condition is not a discharged mode, the battery pack 100 is determined whether it needs to be charged according to the battery pack state. If so, the second control unit 1802 controls battery pack 100 to be charged. If it is the discharging device, it is determined whether the second control unit 1802 receives a discharging request sent by the discharging device, if the discharging request is received, the first control unit 1801 determines the battery pack working condition, if the battery pack working condition is not a charging mode, the battery pack 100 is determined whether it needs to be discharged according to the battery pack state. if so, the second control unit 1802 controls the battery pack 100 to be discharged.

Wherein, the battery pack working conditions include the charging mode, the discharge mode and an idle mode, specifically:

the first control unit 1801 setting the battery pack working condition to be the charging mode when the battery pack 100 starts charging through the Type-C connector 122 and/or the power supply terminal 132 and/or wireless interface 114;

**the** first control unit 1801 setting the battery pack working condition to be the discharging mode when the battery pack 100 starts discharging through the Type-C connector 122 and/or the power supply terminal 132 and/or wireless interface 114;

the first control unit 1801 setting the battery pack working condition to be the idle mode when there is no access device on the Type-C connector 122 or the power supply terminal 132 and/or wireless interface 114;

With this method, the battery pack 100 may be only charged or discharged at the same time, which prevents the user from misconnecting the battery pack 100 causing a damage to the battery pack 100.

It should be noted that when there is an access device on the power supply terminal 132 or wireless interface 114 and the access device is not detected on the Type-C connector 122, the first control unit 1801 further outputs the control signal to the second control unit 1802 to hibernate the second control unit 1802 and save electricity. When the first control unit 1801 receives the activation signal again and the battery pack state is not abnormal, the second control unit 1802 is activated again.

It should be noted that the first control unit and the second control unit in the above embodiments are usually a central processing unit (CPU) of an entire microcomputer digital display sensor processor system, which may be configured with a corresponding operating system, as well as control ports. Specifically, it may be a single-chip microcomputer, DSP (Digital Signal Processing), ARM (Advanced RISC Machines, ARM processor) and other digital logic processors that can be used for automatic control, which may load control instructions into memory at any time for storage and execution, at the same time, may be built-in CPU instructions and data memory, input and output units, power supply modules, digital analog and other units. This may be set according to actual use, which is not limited here.

It may be seen that the control system in the above embodiment is applied to the battery pack 100 using the Type-C connector 122, the wireless interface 114 or the power supply terminal 132 for charging/discharging, supports USB PD fast charging protocol and international wireless charging standard Qi, can detect the device type of the access device connected on the Type-C connector 122, wireless interface 114 or power supply terminal 132 in real time, and charge/discharge the battery pack 100 according to the device type. It not only can be quickly charged through the Type-C connector 122, wireless interface 114 or power supply terminal 132, but also can quickly discharge the access device with Type-C connector 122, wireless interface 114 or power supply terminal 132, and a charge/discharge power can be adjusted according to the access device within a certain range, which is suitable for a variety of access devices with different voltages, and convenient for users. And in the charging/discharging process, technical parameters of the battery pack 100 are detected in real time, and the charging/discharging protection logic is executed according to the technical parameters, and the input/output power is dynamically adjusted, which may effectively protect a safety of the battery pack 100 and extend a duration life of the battery pack 100.

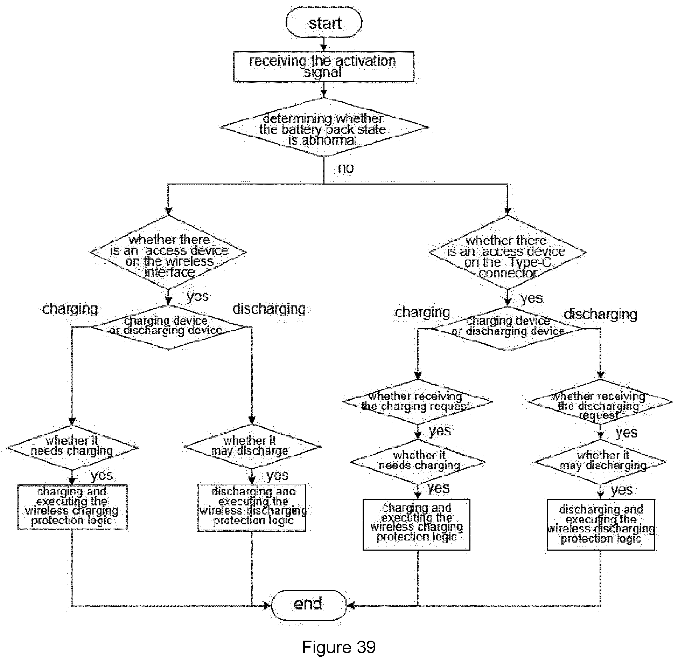

Please refer to FIG. 39, Another embodiment of the disclosure provides a charging/discharging control method applied to the battery pack 100 using the Type-C connector 122 and/or wireless interface114 for charging/discharging, the control method includes:
detecting the device type of the access device on the Type-C connector 122 and/or the wireless interface 114, and charging/discharging the battery pack 100 according to the device type. Wherein, the device types include charging device and discharging device.

In some embodiments, the control method further includes:
activating the charging/discharging control system after receiving the activation signal; and
detecting the battery pack state, if the battery pack state being not abnormal, determining whether there is an access device on the Type-C connector 122 and/or wireless interface 114. Wherein the battery pack state is obtained by determining the battery parameters in real time, the battery parameters include the voltage, current and temperature of the battery cell assembly 120.

With this method, the battery pack 100 is in the sleep state without the activation signal. Only when receiving the activation signal and the battery pack state is not abnormal, the charging / discharging process may be started, which not only saves electric energy, but also prevents damage to the battery cell assembly 120.

If the access device is detected on the Type-C connector 122, a communication handshake with the access device is conducted.

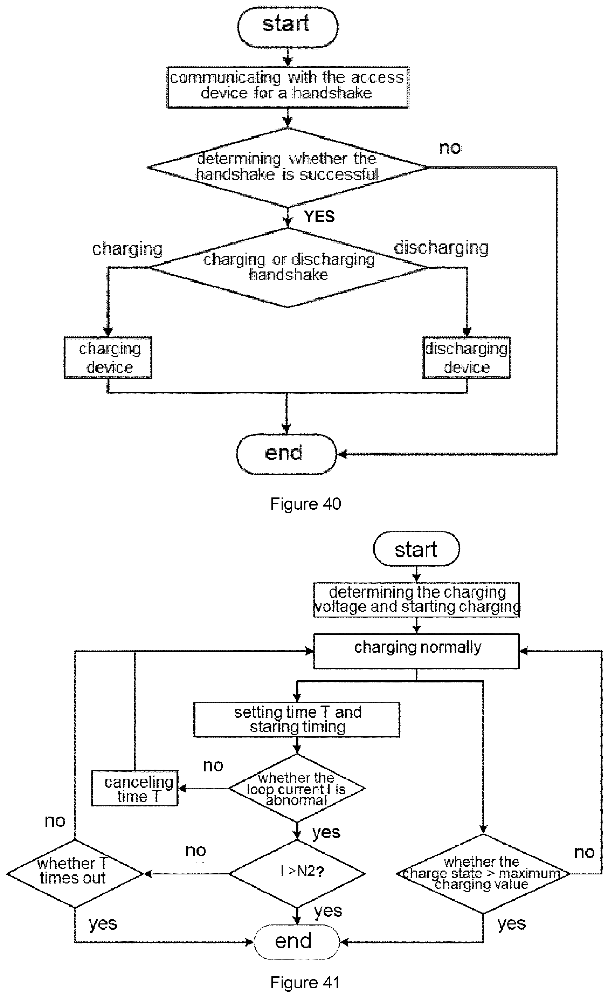

Please refer to FIG. 40. Detecting the device type of the access device on the Type-C connector 122 includes:
**communicating** with the access device for a handshake, if handshake is successful, determining a type of communication handshake, if the type of communication handshake is charging handshake, it being the charging device; If the type of communication handshake is discharging handshake, it being the discharging device.

Please refer to FIG. 38. In addition, charging/discharging the battery pack 100 according to the device type includes:
if the device type is the charging device, determining whether the charging request sent by the charging device is received, if the charging request is received, determining whether a charging is required according to the battery pack state, if necessary, setting the battery pack working condition to be the charging mode, charging the battery pack 100 and executing the charging protection logic;
if the device type is the discharging device, determining whether the discharging request sent by the discharging device is received, if the discharging request is received, determining whether a discharging can be performed according to the battery pack state, if so, setting the battery pack working condition to be the discharging mode, discharging the battery pack 100 and executing the discharging protection logic;
If the access device is detected on the wireless interface 114, determining whether it is a charging device or discharging device according to the key signal of the wireless charging/discharging button.

Please refer to FIG. 39. In addition, charging/discharging the battery pack 100 according to the device type includes:
if there is a charging device wirelessly connected with the wireless interface 114, determining whether the charging is required according to the battery pack state, if required, charging the battery pack 100 and executing the wireless charging protection logic;
if there is a discharging device wirelessly connected with the wireless interface 114, determining whether the discharging can be performed according to the battery pack state, if necessary, discharging the battery pack 100 and executing the wireless discharging protection logic;
if there is a charging device connected with the Type-C connector 122, determining whether the charging request sent by the charging device is received, if the charging request is received, determining whether the charging is required according to the battery pack state, if required, charging the battery pack 100 and executing the charging protection logic;
if there is a discharging device connected with the Type-C connector 122, determining whether the discharging request sent by the discharging device is received, if the discharging request is received, determining whether the discharging can be performed according to the battery pack state, if so, discharging the battery pack 100 and executing the discharging protection logic;

It should be noted that when receiving the charging request, the battery pack state should be detected first, and the charging should be allowed only if it is not abnormal. When receiving the discharging request, the battery pack state should be detected first, and the discharging is allowed only when it is normal, so as to avoid damage to the battery cell assembly 120 caused by overcharge or undervoltage, which affects its duration life.

Please refer to FIG. 41. The wireless charging protection logic includes:
determining the charging voltage of the battery pack 100 according to the port signal of the wireless interface 114, and charging the battery pack 100 wirelessly according to the charging voltage; during the charging process, detecting whether the loop current of the wireless loop is abnormal in real time, and stopping charging if it is abnormal; during the charging process, detecting whether there is a charging device on the wireless interface 114 in real time, and stopping charging if the charging device is not detected within a preset time; when a state of charge of the battery cell assembly 120 is greater than a preset maximum charging value, the charging being completed, specifically:
presetting a lower current limit N1 and an upper current limit N2, and a normal range of the loop current I being N1≤I≤N2;
after starting charging, setting a preset time T, starting timing, and detecting whether the loop current is normal in real time within the preset time T;
if it is normal, canceling timing, continuing charging, and resetting the preset time T to restart timing; and
if it is abnormal, determining whether the loop current I is greater than the upper current limit N2, if it is greater, determining that a fault occurs and stopping charging immediately; otherwise, continuing to determining whether the preset time T times out, if it times out, determining that there is no access device on the wireless interface 114, and stopping charging in order to save power.

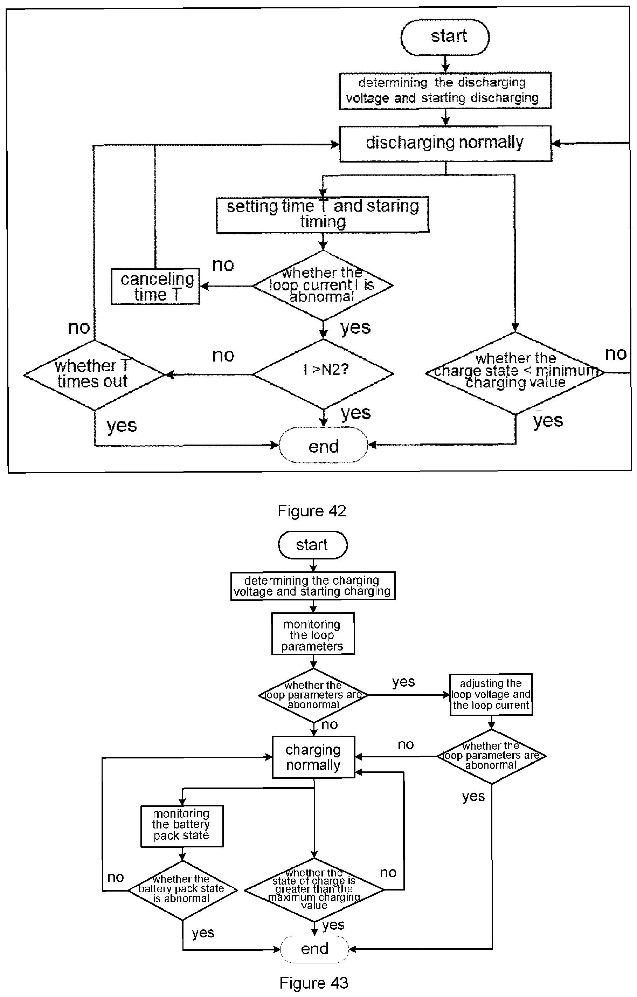

Please refer to FIG. 42. The wireless discharging protection logic includes:
**determining** the discharging voltage of the battery pack 100 according to the port signal of the wireless interface 114, and discharging the battery pack 100 wirelessly according to the discharging voltage; during the discharging process, detecting whether the loop current of the wireless loop is abnormal in real time, and stopping discharging if it is abnormal; during the discharging process, detecting whether there is a discharging device on the wireless interface 114 in real time, and stopping discharging if the discharging device is not detected within the preset time; when the state of charge of the battery cell assembly 120 is greater than a preset minimum discharging value, the discharging being completed, specifically:
presetting the lower current limit N1 and the upper current limit N2, and the normal range of the loop current I being N1≤I≤N2;
after starting discharging, setting the preset time T, starting timing, and detecting whether the loop current is normal in real time within the preset time T;

If it is normal, canceling timing, continuing discharging, and resetting the preset time T to restart timing; and
If it is abnormal, determining whether the loop current I is greater than the upper current limit N2, if it is greater, determining that a fault occurs and stopping discharging immediately; otherwise, continuing to determining whether the preset time T times out, if it times out, determining that there is no access device on the wireless interface 114, and stopping discharging in order to save power.

Please refer to FIG. 43. The charging protection logic includes:
**determining** the charging voltage of the battery pack 100 according to the port signal of Type-C connector 122;
charging the battery pack 100 according to the charging voltage;
during the charging process, monitoring whether the circuit parameters are abnormal, adjusting a loop voltage and the loop current if they are abnormal, and stopping charging if they are still abnormal after adjustment; wherein, the loop parameters including the loop voltage, loop current, power device temperature and input/output voltage; and
when the state of charge of the battery cell assembly 120 is greater than the preset maximum charging value, the charging being completed.

In some embodiments, the charging protection logic further includes:
during the charging process, monitoring the battery pack state in real time; if the battery pack state is abnormal, stopping charging.

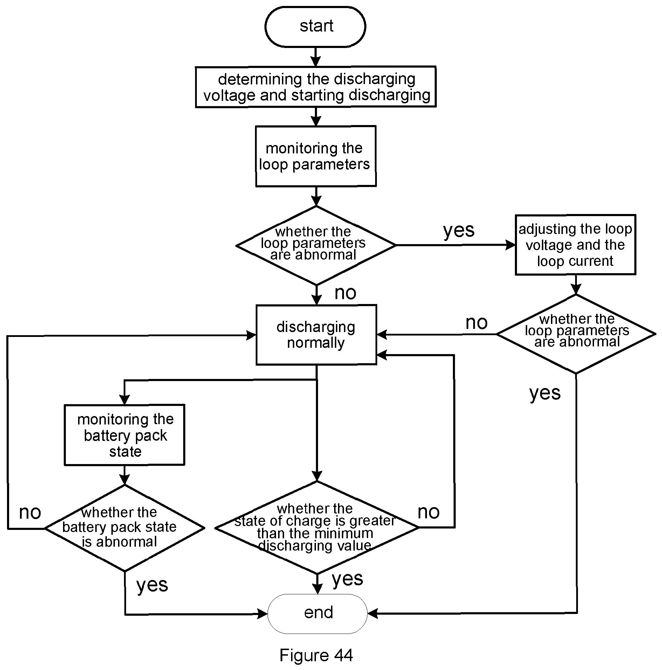

Please refer to FIG. 44. The discharging protection logic includes:
determining the discharging voltage of the battery pack 100 according to the port signal of Type-C connector 122;
during the discharging process, monitoring whether the circuit parameters are abnormal, adjusting the loop voltage and the loop current if they are abnormal, and stopping discharging if they are still abnormal after adjustment; wherein, the loop parameters including the loop voltage, loop current, power device temperature and input/output voltage; and
when the state of charge of the battery cell assembly 120 is greater than the preset minimum discharging value, the discharging being completed.

In some embodiments, the discharging protection logic further includes:
during the discharging process, monitoring the battery pack state in real time; if the battery pack state is abnormal, stopping discharging.

It should be noted that in practical applications, in the charging/discharging process, the parameter range may be set according to needs of use, when the charging parameters or discharge parameters exceed a preset parameter range, it is considered abnormal. The charging/discharging voltage and charging/discharging current are dynamically adjusted according to a preset logic. A number of adjustments may be one or more times, a specific number of times may be set according to the need, in this embodiment is 5 times.

It should be understood that the maximum charging value and the minimum discharging value are preset values, which may be determined according to index parameters of the battery pack 100. The index parameters generally include capacity, voltage, charging voltage, charging current, discharging voltage, discharging current. In the embodiment, the maximum charging value is state of charge SOC =100%, the minimum discharge value is state of charge SOC =5%. In practical applications, users may set the above values according to their needs.

In addition, when the battery pack 100 further includes the power supply terminal 132, the control method includes:
detecting the device type of the access device on the Type-C connector 122, the wireless interface 114 or the power supply terminal 132, and charging/discharging the battery pack 100 according to the device type.

In some embodiments, the control method further includes:
activating the charging/discharging control system after receiving the activation signal;
detecting the battery pack state, if the battery pack state is not abnormal, determining whether there is an access device on the Type-C connector 122, wireless interface 114 or power supply terminal 132.

If the access device is detected, the communication handshake with the access device is conducted. If no access device is detected, the battery pack condition is set to the idle mode.

Wherein, detecting the device type of the access device on the power supply terminal 132 includes:
communicating with the access device for a handshake, if handshake is successful, determining the type of communication handshake, if the type of communication handshake is charging handshake, it being the charging device; If the type of communication handshake is discharging handshake, it being the discharging device.

In addition, charging/discharging the battery pack 100 according to the device type on the power supply terminal 132 includes:
if the device type is the charging device, determining whether the charging request sent by the charging device is received, if the charging request is received, determining whether the charging is required according to the battery pack state, if so, charging the battery pack 100 through the power supply terminal 132;
if the device type is the discharging device, determining whether the discharging request sent by the discharging device is received, if the discharging request is received, determining whether the discharging can be performed according to the battery pack state, if so, discharging the battery pack 100 through the power supply terminal 132.

Another embodiment of the disclosure provides the battery pack 100. The battery pack 100 includes the charging/discharging control system, the battery cell assembly 120 and at least one Type-C connector 122.

Wherein, the charging/discharging control system is connected in series between the Type-C connector 122 and the battery cell assembly 120, the Type-C connector 122 may be detachable connected with the access device, and the charging/discharging control system charges/discharges the battery pack 100 through the Type-C connector 122 according to the device type of the access device.

It should be understood that the battery pack 100 in the embodiment may further include the power supply terminal 132, a plurality of Type-C connectors 122 and the wireless interface 114, a first end of the charging/discharging control system is connected with each Type-C connector 122, the power supply terminal 132 and the wireless interface 114, a second end is connected with the battery cell assembly 120. Each Type-C connector 122 and/or power supply terminal 132 and/or wireless interface 114 are detachably connected with the access device. The charging/discharging control system charges/discharges the battery pack 100 through each Type-C connector 122 and/or power supply terminal 132 and/or wireless interface 114 according to the device type of the access device.

It should be understood that the two Type-C connectors corresponding to a charger 200 and the battery pack 100 are male and female heads of each other, which is convenient for users to connect. Further, the above battery pack 100 and the charger 200 may further includes the power supply terminal 132 and a plugging piece 23, the charger 200 may further charge the battery pack 100 through the plugging piece 23. Correspondingly, the power supply terminals 132 and the plugging piece 23 electrically connected with each other are also matched male and female heads.

It may be seen that the control system in the above embodiment may be applied to the battery pack 100 using the Type-C connector 122 and/or the wireless interface 122 and/or the power supply terminal 132 for charging/discharging. The control system supports USB PD fast charging protocol, can detect the device type of the access device connected on the Type-C connector 122 and/or wireless interface 122 and/or power supply terminal 132 in real time, and charge/discharge the battery pack 100 according to the device type. It not only can be quickly charged through the Type-C connector 122 and/or wireless interface 122 and/or power supply terminal 132, but also can quickly discharge the access device with Type-C connector 122 and/or wireless interface 122 and/or power supply terminal 132, and the charge/discharge power can be adjusted according to the access device within a certain range, which is suitable for a variety of access devices with different voltages, and convenient for users. And in the charging/discharging process, the technical parameters of the battery pack 100 are detected in real time, and the charging/discharging protection logic is executed according to the technical parameters, and the input/output power is dynamically adjusted, which may effectively protect the safety of the battery pack 100 and extend the duration life of the battery pack 100.

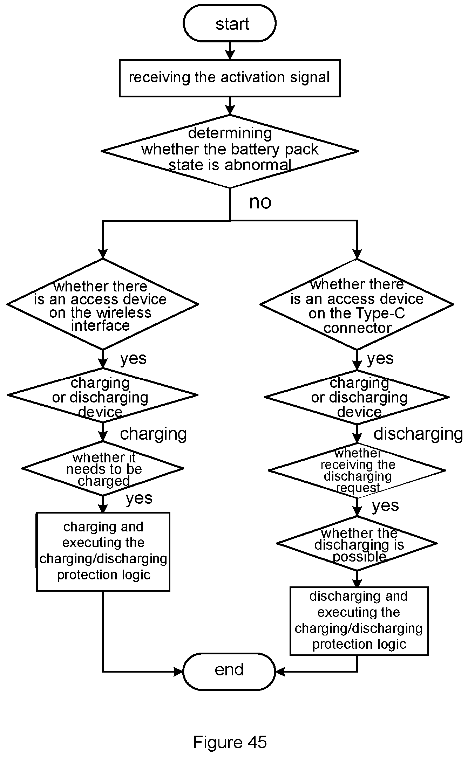

It should be noted that the above charging/discharging control method may not only charge the battery pack 100 simultaneously by one or more of the Type-C connectors 122, wireless interface 114 or power supply terminal 132, discharge the battery pack 100 simultaneously through one or more of the Type-C connectors 122, wireless interface 114 or the power supply terminal 132, but also discharge the battery pack 100 while charging the battery pack 100, and vice versa. The following is an example of simultaneous charging through the wireless interface 114 and discharge through the Type-C connector 122:
**as** shown in Fig. 45, activating the charging/discharging control system after receiving the activation signal;
**detecting** whether the battery pack state is abnormal, and if not, determining whether there is an access device;
if there is an access device on the wireless interface 114, determining whether it is the charging device or the discharging device according to the key signal of the wireless charging/discharging button; if it is the charging device, determining whether charging is required according to the battery pack state, if so, charging the battery pack 100 and executing the charging/discharging protection logic at the same time;
if there is an access device connected with the Type-C connector 122, communicating and handshaking with the access device to determine whether it is a charging device or a discharging device; if it is a discharging device, determining whether the discharging request sent by the discharging device is received and determining whether the discharging can be performed according to the battery pack state, if so, discharging the battery pack 100 and executing the discharging protection logic.

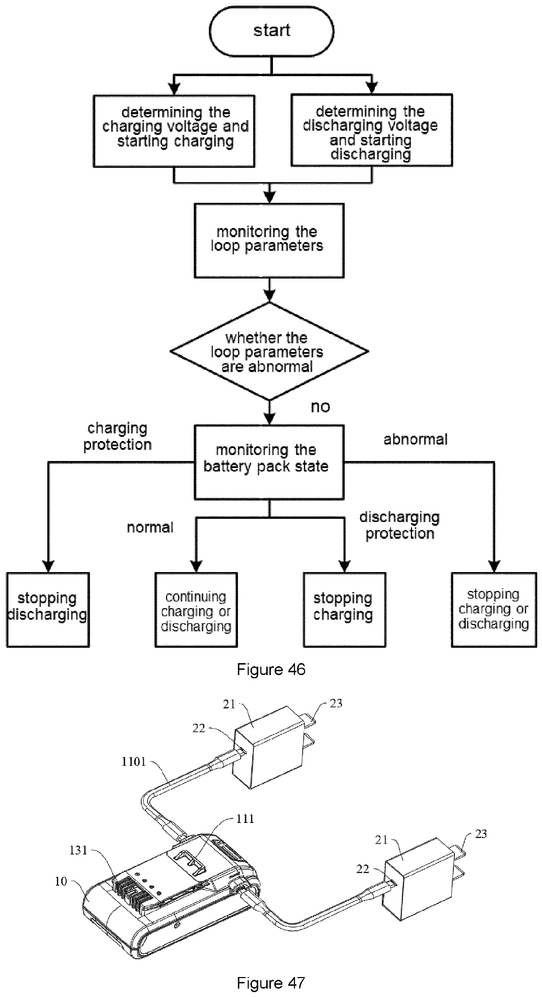

Please refer to FIG. 46. The charging/discharging protection logic includes:
**determining** the charging voltage of the battery pack 100 according to the port signal of the wireless interface 114, and then wirelessly charging the battery pack 100 according to the charging voltage; determining the discharging voltage of the battery pack 100 according to the port signal of the Type-C connector 122, and then discharging the battery pack 100 according to the discharging voltage;
during the charging/discharging process, detecting whether the loop parameters are abnormal in real time, and stopping charging/discharging if they are abnormal;
during the charging/discharging process, detecting the battery pack state in real time;
if the battery pack state is the charging protection, stopping discharging and only allowing charging;
if the battery pack state is normal, continuing to charge/discharge;
if the battery pack state is the discharging protection, stopping charging and only allowing discharging; and
if the battery pack state is abnormal, stopping charging/discharging immediately.

It should be understood that during the charging/discharging process, an access state of the access device is further detected in real time, and if the access state changes, it is adjusted to a corresponding protection logic.

It can be seen that the control system in the above embodiment is applied to the battery pack 100 using the Type-C connector 122, the wireless interface 114 or the power supply terminal 132 for charging/discharging, supports USB PD fast charging protocol and international wireless charging standard Qi, can detect the device type connected of the access device on the Type-C connector 122, wireless interface 114 or power supply terminal 132 in real time, and charge/discharge the battery pack 100 according to the device type. It not only can be quickly charged through the Type-C connector 122, wireless interface 114 or power supply terminal 132, but also can quickly discharge the access device provided with Type-C connector 122, wireless interface 114 or power supply terminal 132, and the charge/discharge power can be adjusted according to the access device within a certain range, which is suitable for a variety of access devices with different voltages, and convenient for users. And in the charging/discharging process, technical parameters of the battery pack 100 are detected in real time, and the charging/discharging protection logic is executed according to the technical parameters, and the input/output power is dynamically adjusted, which may effectively protect the safety of the battery pack 100 and extend the duration life of the battery pack 100.

Please refer to FIG. 31 and FIG. 32. Another embodiment of the disclosure provides the battery pack 100. The battery pack 100 includes the charging/discharging control system, the battery cell assembly 120, the wireless interface 114 and at least one Type-C connector 122.

**A** first end of the control system is electrically connected with the battery cell assembly 120, and a second end of the control system is electrically connected with the wireless interface 114 and each Type-C connector 122 respectively. The Type-C connector 122 and/or wireless interface 114 are detachably connected with the access device, and the control system charges/discharges the battery pack 100 according to the device type of the access device.

It should be noted that the battery pack 100 in the embodiment may include a plurality of the Type-C connectors 122, and through adjusting the charging or discharging power, the speed of charging and discharging may be accelerated, which is convenient for users.

In addition, the battery pack 100 in the embodiment may further include the power supply terminal 132, the power supply terminal 132 may be detachably connected with the access device, the control system charges/discharges the battery pack 100 according to the device type of the access device.

It may be seen that the control system in the embodiment supports the USB PD fast charging protocol and the international wireless charging standard Qi, can detect the device type of the access device on the Type-C connector 122, wireless interface 114 or power supply terminal 132 in real time, and charge/discharge the battery pack 100 according to the device type. It not only can be quickly charged through the Type-C connector 122, wireless interface 114 or power supply terminal 132, but also can quickly discharge the access device with Type-C connector 122, wireless interface 114 or power supply terminal 132, and the charge/discharge power can be adjusted according to the access device within a certain range, which is suitable for a variety of access devices with different voltages, and convenient for users. And in the charging/discharging process, technical parameters of the battery pack 100 are detected in real time, and the charging/discharging protection logic is executed according to the technical parameters, and the input/output power is dynamically adjusted, which may effectively protect the safety of the battery pack 100 and extend the duration life of the battery pack 100.

Please refer to FIG. 47. The disclosure may further charge the battery pack through connecting with a plurality of chargers to improve charging efficiency.

**The** battery pack is connected with the charger through the Type-C connector, all the activation signal may activate battery pack. After the first control unit 1801 completes a power-on initialization, a battery state is started to be detected. Except for abnormal conditions, the first control unit 1801 will open the Type-C connector, and set an OVP value according to the battery pack state. After that, the second control unit 1802 is powered on from self-calibration, and the second control unit 1802 will determine whether there is an access device according to a signal of the Type-C connector after powered on. When the second control unit 1802 determines that a charging device is connected to any Type-C connector, the first control unit 1801 and the second control unit 1802 will interact with data, the second control unit 1802 tells the first control unit 1801 that there is a charger access, and the first control unit 1801 executes the charging protection logic. And during the entire charging process, the first control unit 1801 monitors the battery state in real time, and maintains communication with the second control unit 1802 to ensure that the charging process is in a controllable state. Through a matching between the first control unit 1801 and the second control unit 1802, charging protections of a single-port Type-C charging and a dual-port Type-C connector may be realized.

**The** disclosure further proposes a system, and the system includes a first power tool, a second power tool and the battery pack in the above embodiments. The first power tool has a first rated voltage, and the first power tool is provided with a plurality of first tool Type-C connectors. The second power tool has a second rated voltage, and the second power tool is provided with a plurality of second tool Type-C connectors. When the battery pack is mounted on the first power tool, The plurality of the Type-C connectors on the battery pack are connected with the plurality of the first tool Type-C connectors, and the battery pack outputs energy to the first power tool. When the battery pack is mounted on the second power tool, the plurality of the Type-C connectors on the battery pack are connected with the plurality of the second tool Type-C connectors, the battery pack outputs energy to the second power tool, and the first rated voltage of the first power tools is different from the second rated voltage of the second power tool. In addition, it should also be noted that the battery pack may further supply power for mobile phones, laptops, wearable smart devices, etc. through the Type-C connectors on the battery pack.

**The** battery pack of the disclosure arranges a plurality of Type-C connectors on the battery pack housing, so that the electrical connection between the Type-C connectors and the circuit board may be used to realize the electrical connection between the battery cell assembly 120 and the Type-C connectors, which may provide a possibility for mobile phones, notebooks, digital cameras and other electronic products to power supply, and a plurality of chargers may also be connected to charge the battery pack to improve charging efficiency.

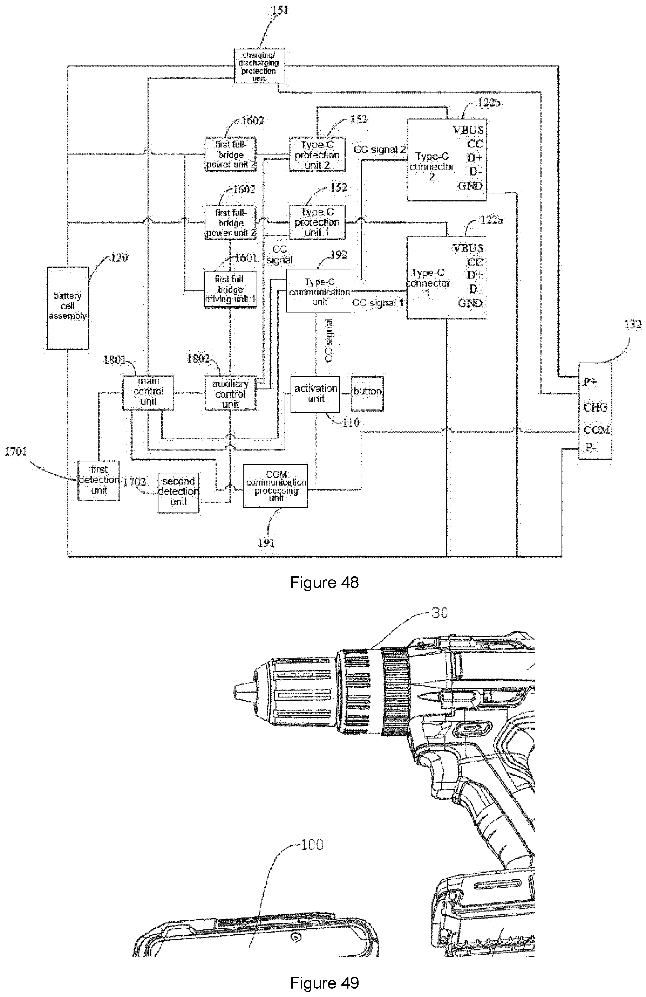

In another embodiment, please refer to FIG. 49. The embodiment provides a power supply system. The power supply system includes the mutually compatible power tool 30 and the battery pack 100, and the battery pack 100 is used to supply power for the power tool 30. The power tool 30 includes but is not limited to a string trimmer, a blower, a hedge trimmer, a chain saw, a lawn mower, a pressure washer, a vacuum cleaner, a robotic mower, a robotic cleaning device and a riding mower. The battery pack 100 is provided with the Type-C connector (defined as the first Type-C connector 122), a single Type-C connector corresponding to battery pack 100 (defined as the second Type-C connector 34) is provided on the power tool 30, and the battery pack 100 may output a rated voltage to the power tool 30 through the first Type-C connector 122.

In this embodiment, the Type-C connector 122 is an electrical connector that may realize the discharging, and the output voltage of the Type-C connector 122 is from 5V to 20V, in some embodiments, is 5V, 9V, 12V, 15V, 20V. The output current is from 1A to 5A, in some embodiments, is 1A, 2A, 3A, 4A, 5A. The output power is from 15W to 100W, in some embodiments, is 15W, 18W, 30W, 45W, 60W, 100W. It is understood that in other embodiments, the output voltage of the Type-C connector 122 may also be any value less than 5V or greater than 20V, the output current may also be any value less than 1A or greater than 5A, and the output power may also be any value less than 15W and greater than 100W.

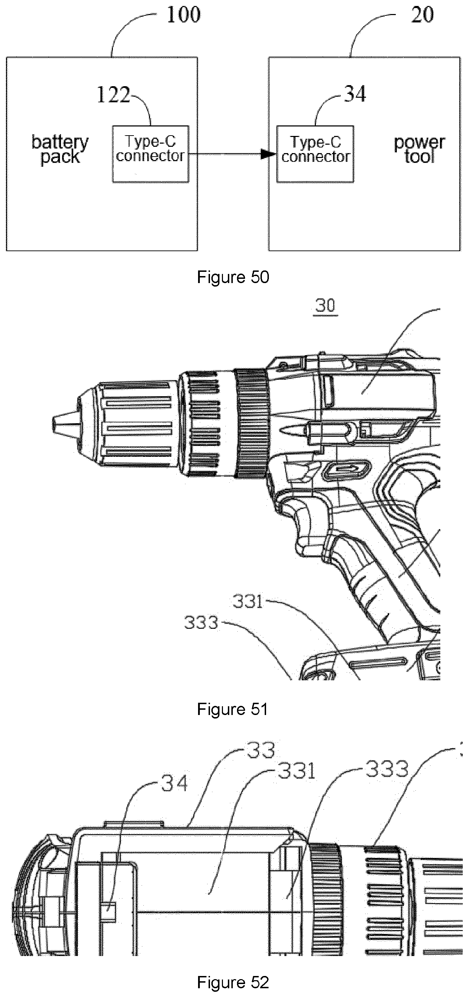

Please refer to FIG. 49 through FIG. 52. In this embodiment, the above power tool 30 includes a tool body 31 with the functional module, a handle 32 arranged on one side of the tool body 31, a base 33 arranged at an end of the handle 32 away from the tool body 31, a battery plug-in port 331 arranged on a side of the base 33 away from the handle 32 to be inserted in the battery pack 100 and the second Type-C connector 34 arranged at a bottom end (an end away from an inserting end) of the battery plug-in port 331, and the base 33 is detachbly connected with the battery pack 100.

In this embodiment, a top of the above battery pack 100 is provided with the plug-in part 1101 coupled with the battery plug-in port 331, the plug-in part 1101 of the battery pack 100 is inserted into the battery plug-in port 331 from one end (which means the inserting end) of an opening of the battery plug-in port 331, and the battery plug-in port 331 at least partially wraps the plug-in part 1101 to prevent the plug-in part 1101 of the battery pack 100 from being separated from the battery plug-in port 331 from an orientation outside the opening of the battery plug-in port 331 to ensure a stability of the battery pack 100.

When the power tool 30 is connected with the battery pack 100 through the sliding rail 1102, the first Type-C connector 122 is electrically connected with the second Type-C connector 34 of the external power tool 30, and the battery pack 100 may output the rated voltage to the power tool 30 through the first Type-C connector 122, so as to supply power for the function module of the power tool 30 to achieve a corresponding function of the power tool 30.

It should be understood that the above first Type-C connector 122 and the second Type-C connector 34 are USB standard ports, and their port type is a double-sided model and supports USB PD fast charging protocol (USB Power Delivery Specification, USB fast charging standard). All pins of the first Type-C connector 122 and the second Type-C connector 34 pins may include VBUS, CC, D+, D-, GND.

Please refer to FIG. 49 through FIG. 53. In this embodiment, a side wall of the battery plug-in port 331 of the base 33 described above is provided with a guiding groove 332, the guiding groove 322 may be an L-shaped groove, a side wall of the plug-in part 1101 of the battery pack 100 is provided with the sliding rail 1102 matched with the guiding groove 332. When the battery pack 100 is inserted into the base 33, the sliding rail 1102 is inserted into the guiding groove 332, which may prevent the battery pack 100 from being separated from the battery plug-in port 331 from a non-inserting direction.

Please refer to FIG. 49 through FIG. 53. A top of the battery pack 100 is provided with the limiting component 111, and the limiting component 111 includes a limiting body, the limiting column 1112 and the limiting pressing part 1111 arranged at two ends of the limiting body that are integrally formed with the limiting body. An end of a bottom of the battery plug-in port 331 of the base 33 close to the inserting end is provided with a limiting clamping groove 333 corresponding to the limiting column 1112 of the limiting component 111. When the battery pack 100 is inserted into the base 33, the limiting column 1112 extends into the limiting clamping groove 333, and the limiting column 1112 and the limiting clamping groove 333 are matched with each other to limit the battery pack 100 from being separated from the battery plug-in port 331 of the base 33 along an inserting direction.

Please refer to FIG. 49 through FIG. 53. In this embodiment, the top of the battery pack 100 is provided with a limiting mounting groove 112 and the mounting groove cover 1121 for sealing the limiting mounting groove 112, and the limiting mounting groove 112 is arranged at one end of a plug-in protruding part away from the inserting end. The limiting mounting groove 112 is used to mount the limiting component 111, the mounting groove cover 1121 is closed on the limiting mounting groove 112, the mounting groove cover 1121 is provided with a first opening 1122 and a second opening 1123 at positions corresponding to the limiting column 1112 and the limiting pressing part 1111, the limiting column 1112 and the limiting pressing part 1111 are exposed from the first opening 1122 and the second opening 1123, and the limiting column 1112 may protrude from a surface of the mounting groove cover 1121 under an action of an elastic element after the battery pack 100 is disassembled or inserted into the base 33 .

Please refer to FIG. 49 through FIG. 53. In this embodiment, a middle of the limiting mounting groove 112 is provided with a limiting mounting protruding block 1124, and a middle of the limiting body of the limiting component 111 is provided with a limiting through hole 1115 matched with the limiting mounting protruding block 1124, the limiting component 111 is sleeved on the limiting mounting protruding block 1124 through the limiting through hole 1115, and the limiting mounting protruding block 1124 may play a certain guiding role. The elastic element (not shown) is further provided between a bottom surface of the limiting component 111 and the limit mounting groove 112, the limiting component 111 may be reset by the elastic element when the battery pack 100 is removed or inserted in the base 33, so that the limiting column 1112 and the limiting pressing part 1111 extend from the first opening 1122 and the second opening 1123, respectively. And when the battery pack 100 is inserted into the base 33, the limiting column 1112 of the limiting component 111 is inserted into the limiting clamping groove 333 of the base 33, which plays a limiting role, prevents the battery pack 100 from sliding out of the base 33 in a first direction. And when the battery pack 100 is released, as long as the limiting pressing part 1111 is pressed downward, the limiting column 1112 moves down synchronously with the limiting pressing part 1111, and retracts into a corresponding opening of the mounting groove cover 1121, so that the limiting column 1112 comes out of the limiting clamping groove 333. At this time, the battery pack 100 may be removed from the base 33 in an opposite direction of inserting. As an example, the elastic element may be provided, for example, as two, one of the elastic elements is arranged between a bottom surface of the limiting column 1112 and the limiting mounting groove 112, the other one of the elastic elements is arranged between the limiting pressing part 1111 and a bottom surface of the limiting mounting groove 112. And structures for mounting the elastic elements are arranged on the limiting column 1112, the bottom surface of the limiting mounting groove 112 and the limiting pressing part 1111 corresponding to the positions of the elastic element.

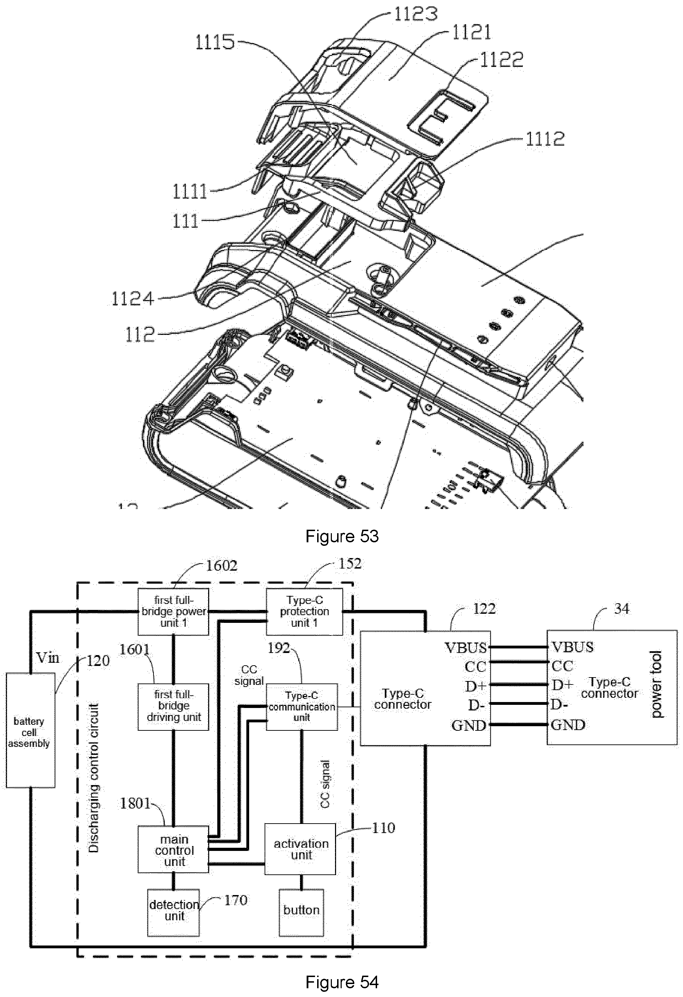

FIG. 54 is a discharging control circuit of the battery pack 100 of the embodiment, the discharging control circuit may be integrated on the circuit board 13 of the battery pack 100, and the discharging control circuit is set as a Type-C management circuit of the first Type-C connector 122. The discharge control circuit is connected in series between the first Type-C connector 122 and the battery cell assembly 120 of the battery pack 100, the discharging control circuit is used to control the battery cell assembly 120 to output the rated voltage to the power tool 30 through the first Type-C connector 122, and the discharging control circuit may automatically adapt to the rated voltage of the power tool 30, which means that the battery pack 100 of the embodiment may be adapted to the power tools 30 with different rated voltages, and the battery pack 100 forms a tool system together with the plurality of power tools with different rated voltages. Understandably, this discharging control circuit may also be used as a charging control circuit for the battery pack 100.

Please refer to FIG. 54. The discharging control circuit in the above embodiment includes a detection unit 170, a main control unit 1801, the first full-bridge power unit 1602 (full-bridge power unit 1), the first full-bridge driving unit 1601, a first Type-C charging/discharging protection unit 152 (Type-C protection unit 1), a Type-C communication processing unit 192 (Type-C communication unit), the activation unit 110, and a button. The first full-bridge driving unit 1601 and the first Type-C charging/discharging protection unit 152 are connected in series and in sequence between the battery cell assembly 120 and the first Type-C connector 122. The main control unit 1801 is connected with the first full-bridge driving unit 1601, the detection unit 170, the activation unit 110, the first Type-C charging/discharging protection unit 152 and the Type-C communication processing unit 192, respectively. The first full-bridge power unit 1602 is connected to the full-bridge drive unit 1601. The Type-C communication processing unit 192 is further connected with the activation unit 110 and the first Type-C connector 122, respectively, and the button is connected with the activation unit 110.

Specifically, the detection unit 170 is used to obtain the battery parameters of the battery cell and the loop parameters of the Type-C loop (a relevant circuit inside the battery pack from the first Type-C connector 122 to the battery cell) in real time, and transmits detection results to the main control unit 1801. Wherein the battery parameters include a cell voltage, cell current and cell temperature in the battery cell assembly 120, the loop parameters of the Type-C loop include an input/output voltage of the Type-C loop, a loop current and the power device temperature. The main control unit 1801 is used to receive data information of the detection unit 170, issue Type-C loop charging/discharging protection instructions after analyzing the data information, execute power-down to sleep operation instructions and related instructions of the main control unit 1801. The first full-bridge power unit 1602 and the first full-bridge driving unit 1601 together constitute a buck-boost module of the Type-C loop, the main control unit 1801 communicates with the external power tool 30 at the first Type-C connector 122 through a CC signal and determines the input/output voltage of the current circuit. After the input/output voltage is determined, a voltage regulation work is completed by the first full-bridge driving unit 1601. The first Type-C charging/discharging protection unit 152 is used to receive the protection instruction from the main control unit 1801 to complete a charging/discharging protection of the Type-C loop. The activation unit 110 is used for receiving activation signals from outside, including a KEY signal (buttons) and the CC signal, which completes a power-on action of the main control unit 1801. After the main control unit 1801 completes the power-on action, and at the same time the CC signal is switched from the activation loop to a communication loop with the Type-C communication processing unit 192, the main control unit 1801 begins to communicate normally with the external power tool 30.

It should be noted that the main control unit 1801 in the embodiment are usually the central processing unit (CPU) of the entire microcomputer digital display sensor processor system, which may also be configured with the corresponding operating system, as well as control ports. Specifically, it may be a single-chip microcomputer, DSP (Digital Signal Processing), ARM (Advanced RISC Machines, ARM processor) and other digital logic processors that can be used for automatic control, which may load control instructions into memory at any time for storage and execution, at the same time, may be built-in CPU instructions and data memory, input and output units, power supply modules, digital analog and other units. This may be set according to actual use, which is not limited here.

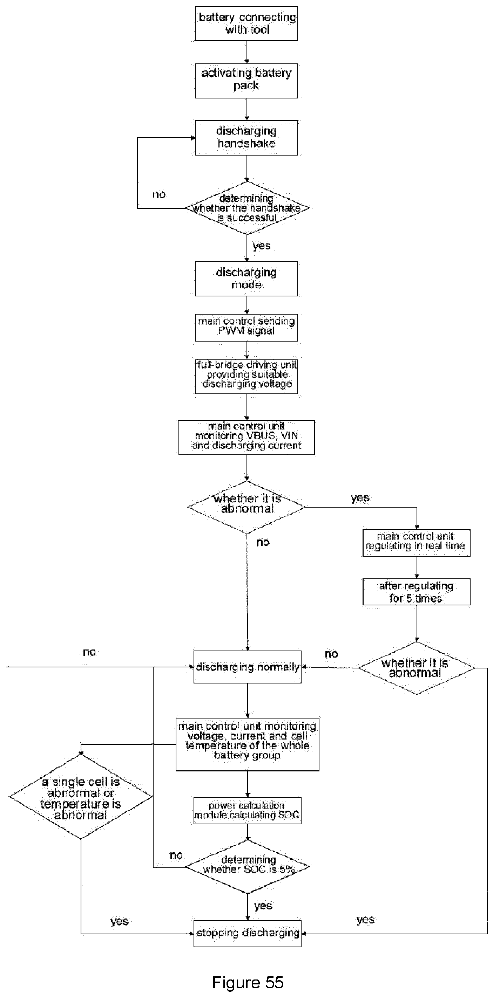

Please refer to FIG. 55. When the battery pack 100 is connected, via a Type-C connector, to the power tool 30 that is provided with a Type-C connector, the Type-C connector will be discharged by a discharging protocol matching. Specifically, when the battery pack 100 is connected with the second Type-C connector 34 of the power tool 30 through the first Type-C connector 122, the battery pack 100 is activated by the CC signal, the main control unit 1801 completes the power-on initialization, the battery pack 100 and the power tool 30 perform a discharging handshake, if the handshake is successful, the power tool 30 sends a discharging request signal, and the battery pack 100 enters the discharge mode, wherein the discharging request signal includes the rated voltage of the power tool 30. When the battery pack 100 is discharged through the first Type-C connector 122, the main control unit 1801 will send a PWM control signal to the first full-bridge driving unit 1601, and the first full-bridge driving unit 1601 provides a suitable discharging voltage according to the PWM signal. At the same time, the main control unit 1801 uses the detection unit 170 to monitor the discharging voltage VBUS, Vin and discharging current in real time. When the discharging voltage and discharging current are abnormal, the main control unit 1801 regulates in real time, and after the regulation for many times (it may be determined according to an actual situation, such as 5 times), it will determine whether there is still an abnormality. And if it is abnormal, the discharging will be stopped, otherwise it will discharge normally. In a normal discharging mode of the Type-C connector, the main control unit 1801 monitors the battery state in real time, including voltage, current and cell temperature, and when a voltage of a single cell is abnormal or the temperature is abnormal, the discharging will be stopped. At the same time, a power calculation module will calculate battery power in real time, and when SOC=5% (may also be other suitable values), the discharging will be stopped.

In another embodiment, the battery pack 100 is provided with two or more Type-C connectors (the Type-C connector 122), the power tool 30 is provided with two or more Type-C connectors (the second Type-C connector 34) corresponding to the battery pack 100, and a structure of the battery pack 100 and the power tool 30 is basically the same, so it will not be repeated here.

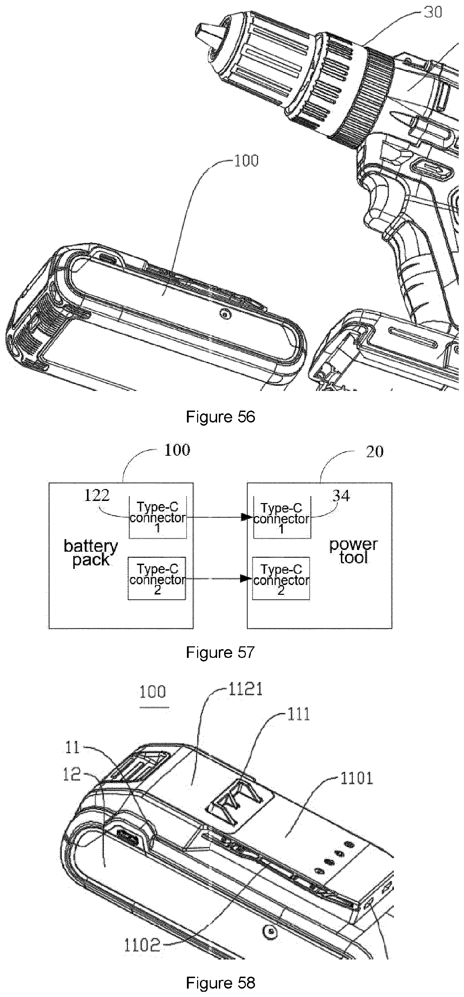

Please refer to FIG. 56 through FIG. 58. In this embodiment, the above battery pack 100 is provided with two Type-C connectors 122 arranged in parallel, which are respectively provided at the inserting end of the plug-in part 1101 of the battery pack 100, and the two Type-C connectors 122 are arranged at intervals. The corresponding power tool 30 is provided with two second Type-C connectors 34 arranged in parallel corresponding to battery pack 100, and the two second Type-C connectors 34 are arranged at intervals at the bottom end of the battery plug-in port 331. When the battery pack 100 is plugged into the power tool 30, each second Type-C connector 34 is electrically connected with the first Type-C connector 122, outputs rated voltage to the power tool 30 through one or both of the two first Type-C connectors 122, and discharges the power tool 30 simultaneously through the two first Type-C connector 122 arranged in parallel, which may improve a discharging power.

**The** discharging control circuit of the above battery pack 100 includes two Type-C management circuits, each Type-C management circuit corresponds to each first Type-C connector, each Type-C management circuit is connected in series between the first Type-C connector 122 and the battery cell assembly 120 of the battery pack 100, and other functional units are basically the same, a principle function will not be repeated one by one here. The discharging control circuit may output the rated voltage to the power tool 30 through one of or both of the two first Type-C connectors 122, and the discharging control circuit may automatically adapt to the rated voltage of the power tool 30, which means that the battery pack 100 of the embodiment may be adapted to the power tools 30 with different rated voltages, and the battery pack 100 forms the tool system together with the plurality of power tools with different rated voltages. Understandably, this discharging control circuit may also be used as the charging control circuit for the battery pack 100.

It is understandable that whether it is a single-port Type-C discharging or a double-port Type-C connector, or a three-port or more-port Type-C connector discharging, the control and protection logic of the main control of the discharging process are consistent.

The battery pack of the disclosure may discharge the power tool through the first Type-C connector, and when discharging, the battery pack may automatically adjust the discharging voltage according to the rated voltage of the power tool, so that it may be adapted to power tools with different rated voltage. The battery pack of the disclosure may discharge the power tool simultaneously through two or parallel first Type-C connectors, which may increase the discharging power.

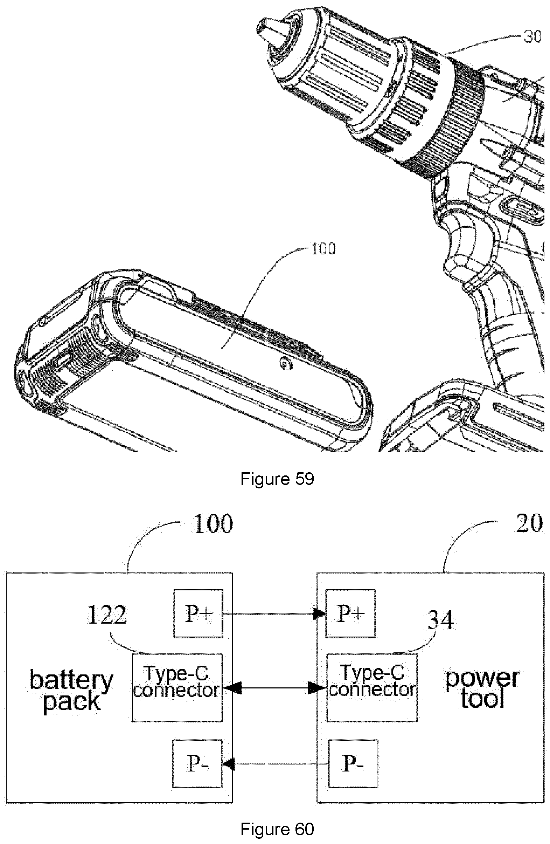

In another embodiment, please refer to FIG. 59 and FIG. 60. The embodiment provides a power supply system. The power supply system includes the mutually compatible power tool 30 and the battery pack 100, and the battery pack 100 is used to supply power for the power tool 30. The power tool 30 includes but is not limited to a string trimmer, a blower, a hedge trimmer, a chain saw, a lawn mower, a pressure washer, a vacuum cleaner, a robotic mower, a robotic cleaning device and a riding mower. The battery pack 100 is provided with the Type-C connector 122 and the first power supply terminal 132, the Type-C connector 122 and the power supply terminal 132 are arranged at the inserting end of the plug-in part 1101 and are electrically connected with the circuit board 13, and the power tool 30 is provided with the second Type-C connector 34 and a second power supply terminal 35 corresponding to the battery pack 100. The battery pack 100 may discharge the power tool 30 through the first power supply terminal 132, provide an activation power and communication for a main control of the power tool and MOS driving unit of the power tool 30 through the first Type-C connector 122, so as to realize a controllable control and protection of battery pack 100 in the entire discharging process. The structures of the battery pack 100 and power tool 30 are basically the same as the above embodiments, so it will not be repeated.

It is understood that in other embodiments, the first Type-C connector 122 may also be used only as a communication port, the battery pack 100 communicates with the main control of the power tool through the first Type-C connector 122, and the battery pack 100 provides power to the main control of the power tool and the MOS driving unit 362 through the first power supply terminal 132. It should be understood that, in other embodiments, the first Type-C connector 122 may also be arranged on one side of the first power supply terminal 132.

When the power tool 30 is connected with the battery pack 100 through the sliding rail 1102, the first Type-C connector 132 is electrically connected with the second Type-C connector 34 of the external power tool 30, the first power supply terminal 132 is electrically connected with the second power supply terminal 35, the battery pack 100 may discharge the power tool 30 through the first power supply terminal 132, so as to supply power for the function module of the power tool 30 to achieve the corresponding function of the power tool 30. And during discharging, the battery pack 100 may further provide activation power and communication for the main control of the power tool and the MOS driving unit 362 of the power tool 30 through the first Type-C connector 122, which realizes the controllable control of the entire discharging process and the protection of the battery pack 100.

It should be understood that the above first power supply terminal 132 and the second power supply terminal 35 may be plugging piece terminals for power transmission commonly used in garden tools. There are a variety of models to choose from. In this embodiment, the first power supply terminal 132 may include a first P+ terminal and a first P- terminal as a discharging connector, the second power supply terminal 35 may include a second P+ terminal and a second P- terminal as the discharging connector matched with each terminal of the first power supply terminal.

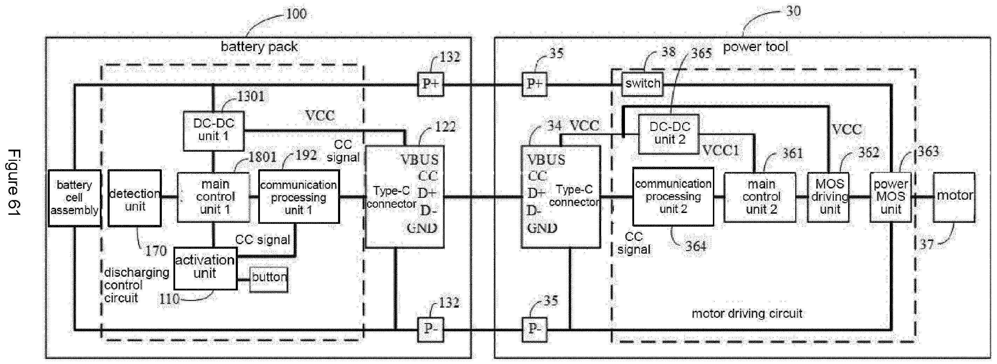

FIG. 61 is a circuit structural block view of the power supply system of the embodiment, which includes the discharging control circuit of battery pack 100 and a motor driving circuit of power tool 30. The discharging control circuit of the battery pack 100 may be integrated on the circuit board 13 of the battery pack 100, the discharging control circuit is connected in series between the first Type-C connector 122 and the battery cell assembly 120 of the battery pack 100, and the discharging control circuit is also connected in series between the first power supply terminal 132 and the battery cell assembly 120 of the battery pack 100. The discharging control circuit is used to control the battery cell assembly 120 to discharge the power tool 30 through the first power supply terminal 132, and provide activation power and communication for the main control of the power tool 30 (the main control unit 2 in FIG. 61, defined as a second main control unit 361) and for MOS driving unit 362 through the first Type-C connector 122, so as to realize the controllable control and protection of battery pack 100 in the entire discharging process.

Please refer to FIG. 61. The discharging control circuit includes the detection unit 170, the first main control unit 1801 (the main control unit 1 in FIG. 61), a first DC-DC unit 1301 (DC-DC unit 1 in FIG. 61), a first Type-C communication processing unit 192 (communication processing unit 1 in FIG. 61), the activation unit 110, and the button. A positive terminal of the battery cell assembly 120 is connected with the first P+ terminal of the first power supply terminal 132 (P+ in the battery pack in FIG. 61) and the first DC-DC unit 1301 respectively, the first DC-DC unit 1301 is further connected with the first Type-C connector 122 and the first main control unit 1801 respectively, and the first main control unit 1801 is further connected with the detection unit 170, the activation unit 110 and the first Type-C communication processing unit 192 respectively. The first Type-C communication processing unit 192 is further connected with the first Type-C connector 122 and the activation unit 110 respectively, the button is connected with the activation unit 110, and a negative terminal of the battery cell assembly 120 is connected with the first P-terminal of the first power supply terminal 132 (P- in the battery pack in FIG. 61) and the first Type-C connector 122 respectively.

The detection unit 170 may include a current detection unit, a voltage detection unit AFE and a temperature detection unit respectively connected with the first main control unit 1801. The current detection unit is used to detect a discharging loop current of the battery pack 100 and transmit detection results to the first main control unit 1801. The voltage detection unit AFE is used to detect a single-cell voltage in the battery cell assembly 120 and transmits the detection results to the first main control unit 1801. The temperature detection unit is used to detect and monitor the cell temperature and transmit the detection results to the first main control unit 1801. The first main control unit 1801 is used to obtain data information of the battery detection unit 170, including single-cell voltage, loop current, cell temperature and other information, and issues instructions to control the DC-DC unit to be powered on and off after analyzing the data information. The first DC-DC unit 1301 is used to provide VCC power. The first Type-C communication processing unit 192 is used to perform a communication between an external Type-C communication and the first main control unit 1801. The activation unit 110 is used to receive the activation signal from the outside, including the KEY signal (button) and the CC signal, to complete the power-on action of the first main control unit 1801. After power-on action of the first main control unit 1801 is completed, and the first main control unit 1801 communicates with the outside through the first Type-C communication processing unit 192.

Please refer to FIG. 61. The motor driving circuit of the power tool 30 includes the second main control unit 361 (a main control unit 2 in FIG. 61), a second DC-DC unit 365 (a DC-DC unit 2 in FIG. 61), a second Type-C communication processing unit 364 (a communication processing unit 2 in FIG. 61), a MOS driving unit 362, a power MOS unit 363 and a switch 35. The second Type-C connector 34 is connected with the second DC-DC unit 365, the MOS driving unit 362, the second Type-C communication processing unit 364 and the second P- terminal of the second power supply terminal 35 (P- in the power tool in FIG. 61) respectively, the second Type-C communication processing unit 364 is connected with the second main control unit 361, and the second main control unit 361 is further connected with the MOS driving unit 362 and the second DC-DC unit 365 respectively. The power MOS unit 363 is connected with the second P+ terminal (P+ in the power tool in FIG. 61) and the second P- terminal of the second power supply terminal 35, the MOS driving unit 362 and a motor 37 respectively, and the switch 35 is located between the second P- terminal of the second power supply terminal 35 and the power MOS unit 363.

**The** switch 35 is configured as a main switch of a tool loop, the second main control unit 361 is used to process a communication with the battery pack 100 and send PWM signals to the MOS driving unit 362. The second Type-C communication processing unit 364 is configured to process an external Type-C communication and a communication with the second main control unit 361. The second DC-DC unit 365 is used to provide a suitable power supply VCC1 for the second main control unit 361. The MOS driving unit 362 is configured for receiving the PWM signals from the second main control unit 361 to drive the power MOS unit 363. The power MOS unit 363 is used to provide a suitable voltage and current for the motor 37 to drive the motor 37. The motor 37 is configured as a power unit for power tool 30.

Please refer to FIG. 61. When the power tool 30 is connected with the battery pack 100, the first Type-C connector 122 is connected with the second Type-C connector 34, and the first power supply terminal 132 is connected with the second power supply terminal 35. The battery pack provides a power supply VCC to the power tool 30 after bucking through the first DC-DC unit 1301, on one hand, the power supply VCC is connected and supplies power for the MOS driving unit 362 on the tool side through the Type-C connector, and on the other hand, the power supply VCC provides power VCC1 to the main control unit on the tool side (second main control unit 361) after bucking through the second DC-DC unit 365 on the tool side. The power supply VCC on the tool side is provided by the battery pack, and the first DC-DC unit 1301 providing power VCC may be controlled by the first main control unit 1801 of the battery pack 100. When the battery pack 100 is under voltage or the battery pack 100 receives a discharging stop signal sent by the power tool 30 through a communication function of the first Type-C connector 122, the first main control unit 1801 of the battery pack 100 will power down the first DC-DC unit 1301, so that the power supply VCC on a tool control panel will be cut off, in this way, even if the switch 35 of the power tool 30 is in an on state, an entire system on the tool side will be turned off, which enables the entire discharging process to be controllable, and realize a protection to the battery pack 100 during discharging.

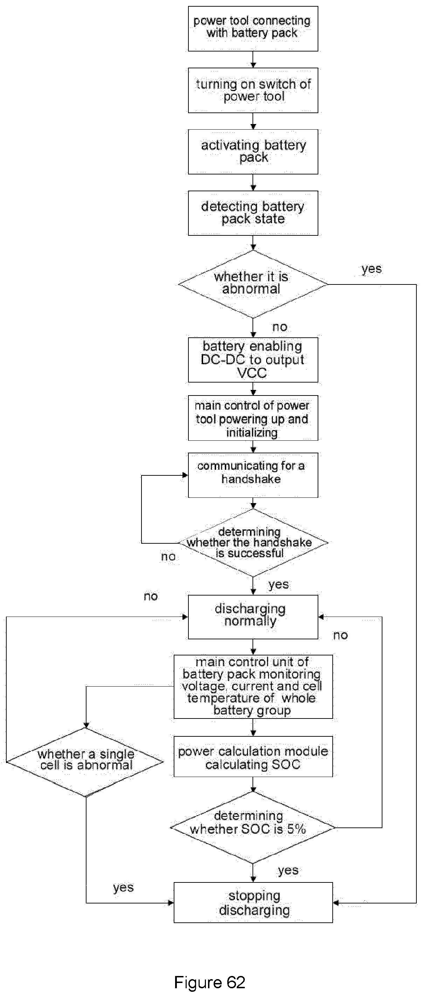

Please refer to FIG. 62. The discharging process of the battery pack 100 of the embodiment is as follows: the power tool 30 is connected with the battery pack 100, the switch 35 on the power tool is turned on, and the button is pressed to activate the battery pack 100. After the battery pack 100 is activated, the first main control unit 1801 is powered on and initialized, then the battery pack state is detected, it is determined whether the battery pack is abnormal, if there is an abnormality, it is forbidden to discharge, if there is no abnormality, the first main control unit 1801 enables the first DC-DC unit 1301 to output VCC, and after the VCC passing through the second DC-DC unit 365 on the tool side, the second DC-DC unit 365 outputs VCC1 to the second main control unit 361. In this way, the second main control unit 361 is powered on and initialized. The second main control unit 361 starts to communicate and handshake with the battery pack after the power-on initialization, and after the communication handshake is successful, the battery pack 100 begins to discharge normally. In the process of normal discharging, the first main control unit 1801 monitors the voltage, current, cell temperature and other parameters of the battery cell assembly 120 in real time through the detection unit 170, and at the same time, the power calculation module calculate the SOC in real time. When the SOC is determined to be 5% (may also be other suitable values), the discharging will be stopped, and at the same time, once it is determined that the single cell is abnormal or the cell temperature is abnormal, the discharging will also be stopped.

In summary, the battery pack of the disclosure may control the power supply of the main control and the MOS driving of the power tool through the first Type-C connector when the battery pack is discharged to the power tool through the first power supply terminal, so as to realize the controllable control of the entire discharging process and the protection of the battery pack.

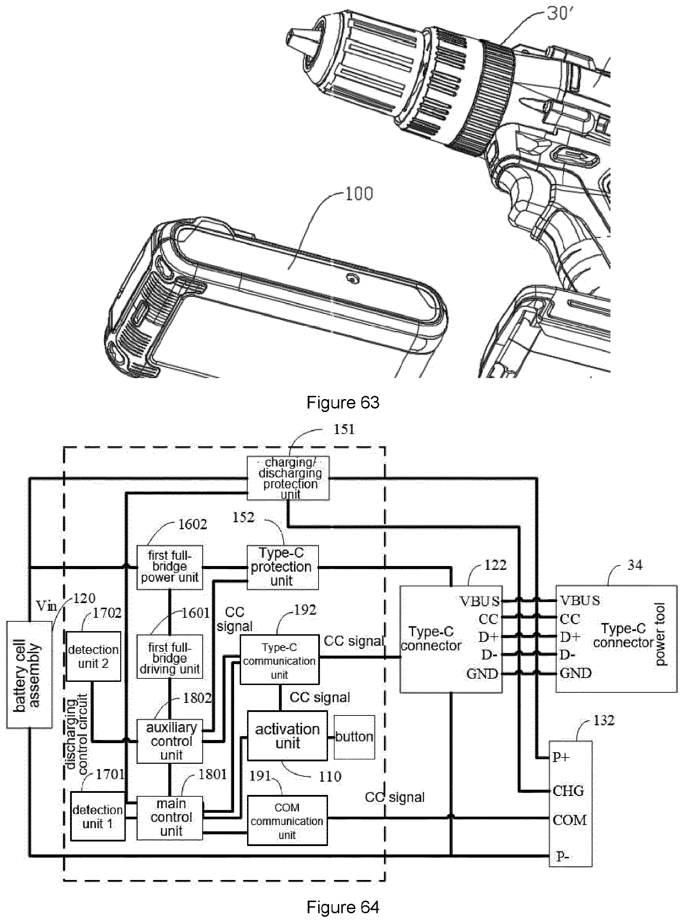

Please refer to FIG. 49 and FIG. 63. In this embodiment, the battery pack may be discharged with the power tool through the Type-C connector, or be discharged through the power supply terminal. Please refer to FIG. 49. When the power tool 30 with the second Type-C connector 34 is connected with the battery pack 100 through the sliding rail 1102, the first Type-C connector 122 is electrically connected with the second Type-C connector 34 of the power tool 30, and the battery pack 100 may discharge the power tool 30 through the first Type-C connector 122, so as to supply power for the function module of the power tool 30 to realize the corresponding function of the power tool 30. Please refer to FIG. 63. When the power tool 30' with the second power supply terminal 35 is connected with the battery pack 100 through the sliding rail 1102, the first power supply terminal 132 is electrically connected with the power supply terminal 35 of the power tool 30', and the battery pack 100 may discharge the power tool 30 through the first power supply terminal 132, so as to supply power for the function module of the power tool 30' to achieve a corresponding function of the power tool 30'. The structure of the battery pack 100 and the power tool 30 (power tool 30') is basically the same as the above embodiments, so it will not be repeated here.

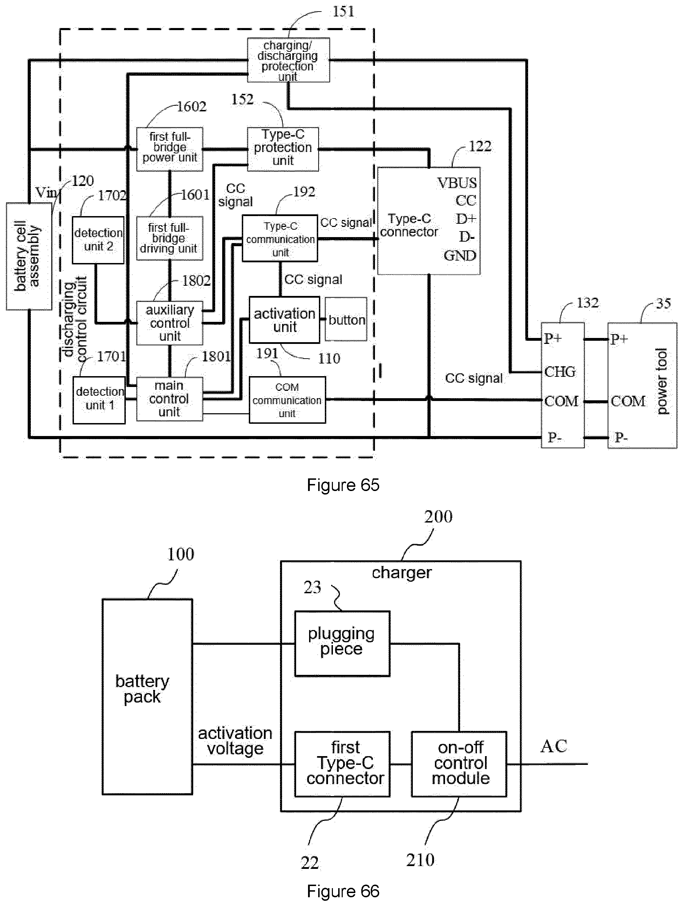

FIG. 64 and FIG. 65 are circuit structural block views of the two power supply systems of the embodiment, which includes the discharging control circuit of the battery pack 100. The discharging control circuit may be integrated on the circuit board 13 of the battery pack 100. The discharging control circuit is connected in series between the first Type-C connector 122 and the battery cell assembly 120 of the battery pack 100, and the discharging control circuit is also connected in series between the first power supply terminal 132 and the battery cell assembly 120 of the battery pack 100. The discharging control circuit is used to control the battery cell assembly 120 to discharge the power tool 30 with the second Type-C connector 34 or the second power supply terminal 35 through the first Type-C connector 122 or the first power supply terminal 132. And when the battery pack 100 discharges the power tool 30 with the second Type-C connector 34 through the first Type-C connector 122, the discharging control circuit may automatically adapt to the rated voltage of the power tool 30, which means that the battery pack 100 of the embodiment may be adapted to the power tools 30 with different rated voltages, and the battery pack 100 forms the tool system together with the plurality of power tools with a plurality of the Type-C connectors and different rated voltages. The tool system further includes the power tool 30' with the second power supply terminal 35', and the rated voltages of the power tool 30 'and the power tool 30 may be same or different. Understandably, this discharging control circuit may also be used as the charging control circuit for the battery pack 100. The discharging control circuit is the same or similar to the above charge and discharging control circuit, which will not be repeated here.

Before charging or discharging, the battery pack 100 needs to be activated, and FIG. 66 is an activation flowchart of the battery pack 100. Please refer to FIG. 66. The battery pack 100 may activate the main control unit 1801 of battery pack 100 through pressing the button (KEY signal), a COM signal of the charger or power tool 30, and the CC signal of the first Type-C connector. The main control unit 1801 of the battery pack 100 will complete the power-on initialization after being activated by the activation signal, then self-test the battery states, and decide whether to open the Type-C connector according to self-test results. The battery pack 100 in an abnormal situation will power down the main control unit 1801, the battery pack 100 will enter a power-off state, otherwise an initialization of battery pack 100 will be completed. The main control unit 1801 opens the Type-C loop, and sets a state flag bit OVP of the battery pack 100 to a corresponding value according to the self-test results, wherein, the OVP is set to 10 to indicate that the battery pack100 is in a charging protection state and only for charging, and the OVP is set to 11 to indicate that the battery pack100 is in a discharging protection state and only for discharging.

The battery pack 100 of the embodiment has two discharging methods, the first discharging method is discharging through the first power supply terminal 132 of the battery pack 100, and the second is discharging through the first Type-C connector 122 of the battery pack 100. The two methods are explained respectively below.

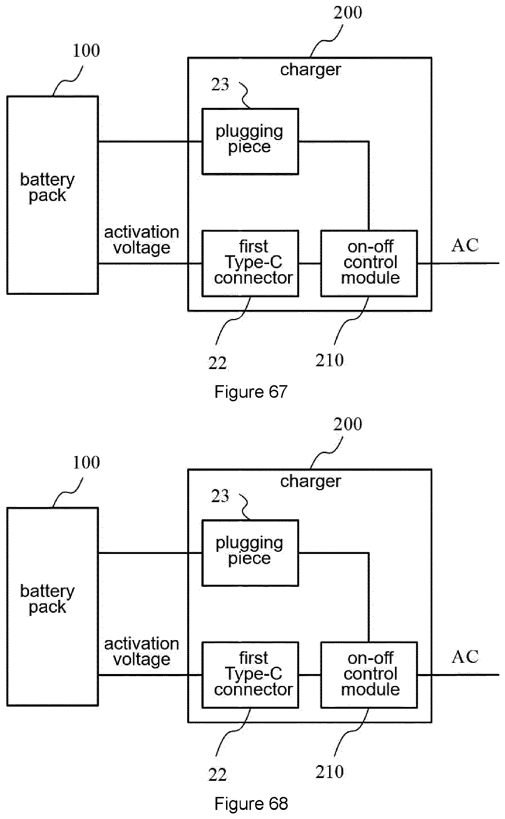

Please refer to FIG. 66 and FIG. 67. The battery pack 100 discharges to the power tool with the second power supply terminal 35 through the first power supply terminal 13, Both of the battery pack and the tool are provided with P+ terminal, COM terminals, and P-terminal, which correspond one to one. And the discharging is realized through matching of the terminals and communication. Specifically, when the battery pack 100 is plugged into the power tool 30, the P+ terminal, COM terminal, P- terminal on the battery pack 100 correspond to the P+ terminal, COM terminal, P- terminal on the power tool 30 one to one, which may activate the battery pack 100 by the above activation method. The battery pack 100 performs a discharging handshake with the power tool 30. If the handshake is successful, the battery pack 100 enters the discharging mode and discharges through the first power supply terminal 132.

Please refer to FIG. 64, FIG. 66, FIG. 68 and FIG. 69. The battery pack 100 discharges the power tool with the second Type-C connector 34 through the first Type-C connector 122. When the battery pack 100 is connected with the power tool 30 with the Type-C connector through the Type-C connector, the Type-C connector will be discharged by the discharging protocol matching. Specifically, when the battery pack 100 is connected with the second Type-C connector 34 of the power tool 30 through the first Type-C connector 122, the battery pack 100 is activated by the CC signal, the main control unit 1801 completes the power-on initialization, and the battery pack 100 and the power tool 30 carry out the discharging handshake. If the handshake is successful, the power tool 30 sends the discharging request signal, and the discharging request signal includes the rated voltage of the power tool 30. A working condition of the battery pack is detected, when the working condition of the battery pack 100 is the idle mode, it will enter a Type-C discharging mode, and when the battery pack 100 working condition is the charging mode, the Type-C discharging mode is prohibited. And when the working condition of the battery pack 100 is that the battery pack 100 discharges through the first power supply terminal 132, it will enter a double discharge mode of the first power supply terminal 132 and Type-C connector. When entering the Type-C discharging mode, the main control unit 1801 begins to detect the battery state, except for abnormal conditions, the main control will open the Type-C connector, and set the OVP value according to the battery pack state, then an auxiliary control of self-calibrating and power-on is carried out, and after the auxiliary control is powered on, and the auxiliary control will determine whether there is an access power tool 30 according to the Type-C connector signal. When an auxiliary control unit 1802 determines that there is an access power tool 30, the main control unit 1801 and the auxiliary control unit 1802 will carry out the data interaction. The auxiliary control unit 1802 tells the main control unit 1801 that there is an access power tool 30, and the main control unit 1801 performs the discharging protection logic. During the entire Type-C discharging process, the main control unit 1801 will monitor the battery state in real time, and maintain communication with the auxiliary control unit 1802 to ensure that the discharging process is in a controllable state.

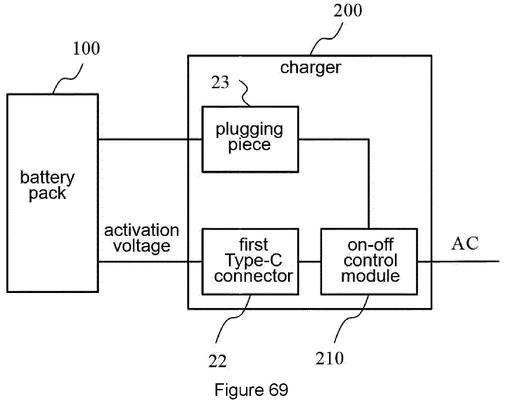

Please refer to FIG. 69. A control process of the entire Type-C discharging process is as follows: when the battery pack 100 is discharged with the first Type-C connector 122, the auxiliary control unit 1802 will send the PWM control signal to the first full-bridge driving unit 1601, and the first full-bridge driving unit 1601 provides the suitable discharging voltage matched with the rated voltage of the power tool 30 according to the PWM signal. The auxiliary control unit 1802 monitors the discharging voltage VBUS, VIN and discharging current in real time. When the discharging voltage and discharging current are abnormal, the auxiliary control unit 1802 regulates in real time, and after the regulation for many times (it may be determined according to an actual situation, such as 5 times), it will determine whether there is still an abnormality. And if it is abnormal, the discharging will be stopped, otherwise it will discharge normally. In the normal discharging mode of the Type-C connector, the main control unit 1801 monitors the battery state in real time, including voltage, current and cell temperature, and when the voltage of a single cell is abnormal or the temperature is abnormal, the discharging will be stopped. And the power calculation module will calculate battery power in real time, and when SOC=5% (may also be other suitable values), the discharging will be stopped.

In summary, the battery pack of the disclosure may be compatible and matched with the power tool with the Type-C connector or the power supply terminal to discharge, which has a wide range of application. The battery pack of the disclosure may discharge the power tool with different rated voltages through the first Type-C connector, so that it may be adapted to power tools with different rated voltage.

Please refer to FIG. 47. In this embodiment, the charger includes a charger housing 21, a first charging connector and a first power supply terminal 23, the first charging connector and the first power supply terminal 23 are located on two different sides of the charger housing 21, in some embodiments, located on two sides opposite to each other of the charger housing 21, and the charger housing 21 is mounted with a first circuit board therein. A first end of the first charging connector is electrically connected with the first circuit board, and a second end of the first charging connector is located in a through hole on a side surface of the charger housing 21 to be connected with the battery pack 100 through a charging cable. The first power supply terminal 23 is electrically connected with the first circuit board, the first power supply terminal 23 is used to connect an external power supply, and in this embodiment, the first charging connector is a third Type-C connector 22.

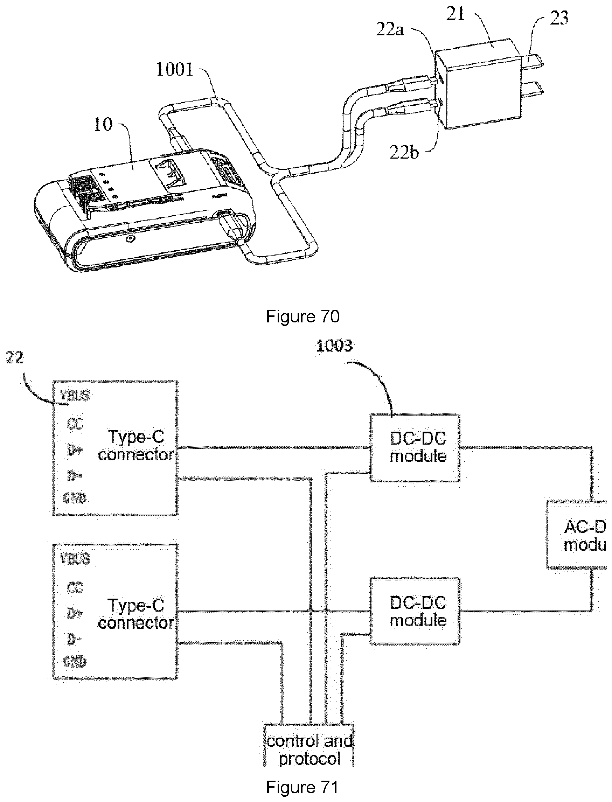

Please refer to FIG. 47, FIG. 70 and FIG. 71. The first circuit board is integrated with an AC-DC module 1002, a control and protocol module 1004, and a DC-DC module 1003. The AC-DC module 1002 is connected with the DC-DC module 1003, the DC-DC module 1003 is connected with the first charging connector, and the control and protocol module 1004 is connected with the DC-DC module 1003 and the first charging connector, respectively. The first charging connector includes a plurality of the Type-C connectors, and each Type-C connector is connected with one DC-DC module 1003. And the control and protocol module 1004 is connected with each of the DC-DC modules 1003 and each of the Type-C connectors, respectively. The AC-DC module 1002 is used to convert an alternating current into a direct current. The DC-DC module 1003 is used for giving a suitable charging voltage according to the control signal. The control and protocol module 1004 is used for a control of the entire charging system, and a protocol analysis and charging control of each Type-C connector. The first charging connector is connected with the second charging connector on the battery pack to charge the battery pack.

Specifically, please refer to FIG. 47, FIG. 70 and FIG. 71. In this embodiment, when the charger housing 21 is provided with one third Type-C connector 22, the battery pack is connected with the third Type-C connectors 22 of the two chargers through the first Type-C connector 122a and the second Type-C connector 122b, respectively. In this embodiment, when the charger housing 21 is provided with two connectors and the two connectors are a third Type-C connector 22a and a third Type-C connector 22b, the battery pack is connected with the third Type-C connector 22a and the third Type-C connector 22b on the same charger through the first Type-C connector 122a and the second Type-C connector 122b, respectively. In some other embodiments, the charger 20 may also charge different battery packs with different first charging connectors.

Another embodiment of the disclosure provides the battery pack 100. The battery pack 100 includes a plurality of Type-C connectors 122, the charging control system and the battery cell assembly 120. The charging control system is connected in series between each Type-C connector 122 and the battery cell assembly 120, each Type-C connector 122 may be detachable connected with the access device, and the charging control system detects the device type of the access device. If it is the charging device, it will charge the battery pack 100.

Please refer to FIG. 47. Another embodiment of the disclosure provides a charging combination, which includes: a detachable connected battery pack 100 and the charger. The battery pack 100 maybe charged by the charger.

The battery pack 100 includes a plurality of Type-C connectors 122, the charging control system and the battery cell assembly 120. The charging control system is connected in series between each Type-C connector 122 and the battery cell assembly 120, each Type-C connector 122 may be detachable connected with the access device, and the charging control system detects the device type of the access device. If it is the charging device, it will charge the battery pack 100.

The charger is provided with at least one Type-C connector 22, and the Type-C connector 22 of the charger matches the Type-C connector 122 of the battery pack 100.

It should be understood that the two Type-C connectors corresponding to the charger 200 and the battery pack 100 are male and female heads of each other, which is convenient for users to connect. Further, the above battery pack 100 and the charger 200 may further includes the power supply terminal 132 and the plugging piece 23, the charger may further charge the battery pack 100 through the plugging piece 23. Correspondingly, the power supply terminals 132 and the plugging piece 23 electrically connected with each other are also matched male and female heads.

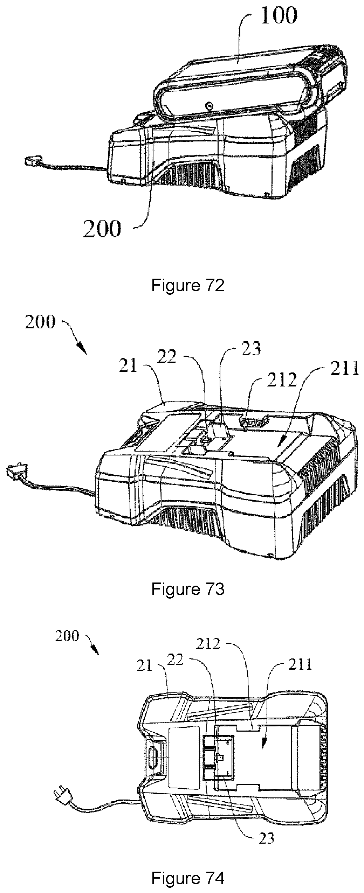

Please refer to FIG. 72 through FIG. 74. In another embodiment of the disclosure, the charger 200 is provided to charge the battery pack 100 in the above embodiment. The charger 200 includes the charger housing 21, the charger housing 21 is provided with a battery pack charging part 211, the first power supply terminal 23 is provided on the battery pack charging part 211, and the first Type-C connector 22 is arranged on the battery pack charging part 211. When the battery pack 100 is charged, the battery pack 100 is mounted inside the battery pack charging part 211, the first power supply terminal 23 is connected with the second power supply terminal 132 in the terminal connector 131, the first Type-C connector 22 is connected with the second Type-C connector 122, and charger guiding rails 212 are arranged on opposite sides of the battery pack charging part 211. The charger guiding rails 212 are matched with the sliding rail 1102. When the battery pack 100 is mounted in the battery pack charging part 211 of the charger 200 for charging, a matching between the charger guiding rail 212 and the sliding rail 1102 serves to guide or facilitate sliding, which allows a smooth mounting. The first power supply terminal 23 includes the first discharging connector P+ and the first discharging connector P-, and the first Type-C connector 22 is located between the first discharging connector P+ and the first discharging connector P-. When charging, the first discharging connector P+ and the first discharging connector P- are the charging/discharging connectors, the first Type-C connector 22 is the communication connector. In one embodiment, the first Type-C connector 22 is further used as an auxiliary power supply connector. The battery pack provides an activation power supply for a main control of the charger through the first Type-C connector 22.

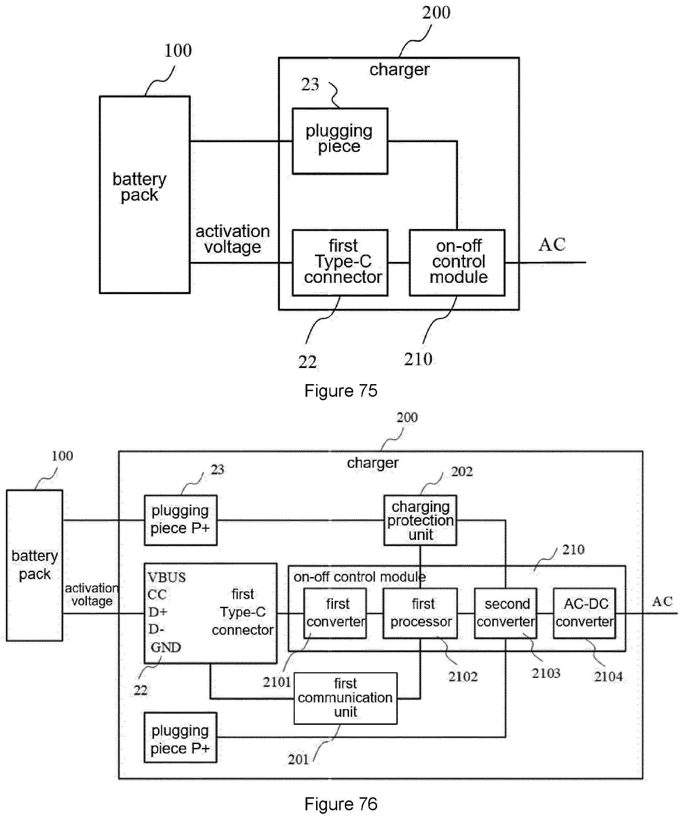

Please refer to FIG. 75. The charger 200 charges the battery pack 100 after receiving the activation voltage, and in the charging process of the battery pack 100, an output of the charger 200 is turned on or off according to an on/off of the activation voltage of the external access device. The charger 200 specifically includes the first Type-C connector 22, the plugging piece 23 and an on-off control module 210.

The first Type-C connector 22 is used for receiving the activation voltage.

The on-off control module 210 is used for controlling the charging of the charger 200 according to the activation voltage.

The plugging piece 23 is electrically connected with battery pack 100 and the on-off control module 210 and is used for outputting charging voltage to battery pack 100.

It should be understood that the first Type-C connector 22 and plugging piece 23 in the embodiment are both one, and the number of Type-C connectors in practical applications may be set to multiple as needed. Through adjusting the charging power, the speed of the charging may be accelerated, which is convenient for users.

The Type-C connector 22 is the USB standard connector, and its connector type is the double-sided model that supports the USB PD fast charging protocol (USB Power Delivery Specification, USB fast charging standard), which may realize a power transmission and the data exchange. In this embodiment, the Type-C connector pins include VBUS, CC, D+, D-, GND.

In addition, a communication protocol of the Type-C connector 122 is not limited to the above-mentioned standardized USB PD fast charging protocol, but also supports proprietary protocols, the proprietary protocols are generally designed by each manufacturer according to their own conditions, which is not limited here.

The plugging piece 23 is the commonly used connecting port in garden tools, there are a variety of models to choose, which includes a positive terminal P+ and a negative terminal P- in the embodiment.

Please refer to FIG. 76. The on-off control module 210 includes a first converter 2101, a first processor 2102, a second converter 2103 and an AC-DC converter 2104.

The first converter 2101 is connected in series between the first Type-C connector 22 and the first processor 2102 and is used to buck the activation voltage and output it to the first processor 2102, and the activation voltage should adapt to a working voltage range of the first processor 2102 after bucking.

The first processor 2102 is used for receiving the activation voltage after bucking and output the control signal to the second converter 2103, so that it begins to work. Wherein, the control signal is the PWM signal.

The AC-DC converter 2104 is used for converting external the alternating current to the direct current.

The second converter 2103 is used for bucking the direct current according to the control signal of the first processor 2102 and outputting it to the plugging piece 23.

Please refer to FIG. 76. The charger 200 further includes a first communication unit 201.

The first communication unit 201 is connected in series between the first processor 2102 and the first Type-C connector 22 and is used to realize a communication connection between the first processor 2102 and the battery pack 100. The first processor 2102 dynamically adjusts the output power according to the data transmitted by the battery pack 100 to be adapted to a load capacity of the battery pack 100, so as to avoid a wire short circuit, and even product overheating and explosion and other accidents.

Please refer to FIG. 76. The charger 200 further includes a charging protection unit 202.

The charging protection unit 202 is connected in series between the second converter 2103 and the plugging piece 23, and the control end of the charging protection unit 202 is connected with the first processor 2102 to protect the charging loop of the charger 200.

It should be understood that the charging loop of the charger 200 is an internal circuit of the charger 200, including the plugging piece 23, the first communication unit 201 and the on-off control module 210. When any part of them is abnormal, it will affect the duration life of the charger 200, and the charging process should be stopped immediately.

It may be seen that the charger 200 of the embodiment begins to charge the battery pack 100 after receiving the activation voltage input from the outside, and during the charging process, the charger 200 performs a data interaction with the battery pack 100. The output power of the charger 200 is adjusted in real time according to the charging parameters of the battery pack 100. And when the activation voltage is disconnected, the output of the charger 200 will be stopped in time, which avoids the damage caused by battery pack 100 by continuing to charge in a case of a failure or charging completion of the battery pack 100, ensures a charging safety of battery pack 100 and improves the duration life of battery pack 100.

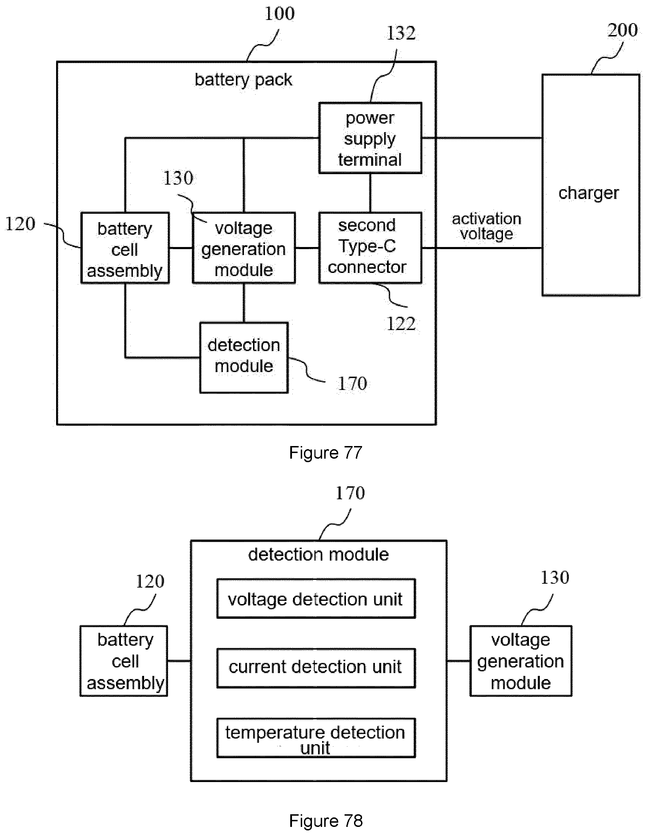

Please refer to FIG. 77. An embodiment of the disclosure provides the battery pack 100. It should be understood that the battery cell assembly 120 of the battery pack 100 includes a plurality of the battery cells, the battery cells a may be connected in series and/or parallel to form the battery cell assembly 120. The battery cell assembly 120 is used for storing the electrical energy, and it may be charged by the external charger 200 to obtain the electrical energy. The battery pack 100 specifically includes the second Type-C connector 122, the power supply terminal 132, the voltage generation module 130 and the detection module 170.

The detection module 170 is used for a real-time acquisition of the charging parameters of the battery pack 100. Wherein, the charging parameters of the battery pack 100 are the technical parameters of the battery pack charging loop, which includes a single cell voltage of the battery cell assembly 120, the loop current of the charging loop, the temperature of the battery cell assembly 120 and/or the power device in the charging circuit.

Please refer to FIG. 78. The detection module 170 includes the voltage detection unit, the current detection unit and the temperature detection unit.

The voltage detection unit is used for obtaining a voltage value of the battery cell assembly 120.

The current detection unit is used for acquiring the loop current of the charging loop of the battery pack 100.

The voltage detection unit is used for obtaining the temperature of the battery cell assembly 120 and/or of the power device in the charging loop.

It should be understood that the charging loop of the charger 100 is an internal circuit of the battery pack 100, including the power supply terminal 132, the second Type-C connector 122, the detection module 170, a voltage generation module 130 and the battery cell assembly 120. When any part of them is abnormal, it will affect the duration life of the battery pack 100, and the charging process should be stopped immediately.

The voltage generation module 130 is used for generating the activation voltage to the second Type-C connector 122. It is also used to obtain a charging state according to the charging parameters, and a generation of activation voltage will be stopped when the charging state is abnormal or is completed.

It should be understood that in the charging process, a parameter range of the charging parameters may be preset according to the needs of use, and the charging state is determined according to the parameter range. The charging state in the embodiment includes abnormal, normal, completion. In practical applications, the user may further subdivide it as needed.

Specifically, when exceeding the parameter range, the charging state is considered as the abnormal. When it is within the parameter range, the charging state is considered as the normal. When a state of charge SOC of the battery cell assembly 120 reaches a preset value, for example SOC=100%, the charging state is considered as the completion.

The second Type-C connector 122 is used to output the activation voltage of the charger 200.

The power supply terminal 132 is electrically connected with the charger 200 and used for charging the battery pack 100.

It should be understood that the second Type-C connector 122 and the power supply terminal 132 in the embodiment are both one, and the number of Type-C connectors in practical applications may be set to multiple as needed. Through adjusting the charging or discharging power, the speed of the charging and discharging may be accelerated, which is convenient for users.

A connector definition of the second Type-C connector 122 and the power supply terminal 132 is the same as the first Type-C connector 22 and plugging piece 23 in the above embodiment, in order to save space, it will not be repeated herein. Further, the power supply terminal 132 matches the plugging piece 23 in the above embodiment, and they are the male head and the female head to each other. The second Type-C connector 122 matches the first Type-C connector 22 in the above embodiment, and they are the male head and the female head to each other.

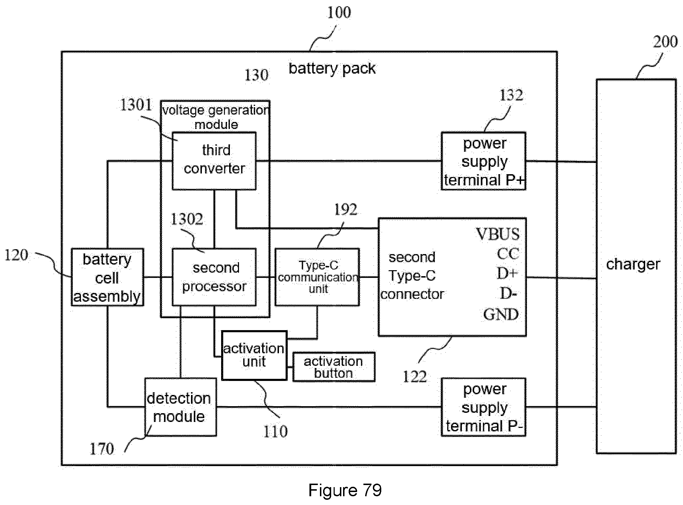

Please refer to FIG. 79. The voltage generation module 130 includes a third converter 1301 and a second processor 1302.

The second processor 1302 is electrically connected with the detection module 170 for outputting the control signal to the third converter 1301 according to the charging parameters. When the charging state is normal, and the charging is not completed, the output control signal starts a work of the third converter 1301. When the charging state is abnormal or charging is completed, the output control signal stops the work of the third converter 1301.

The third converter 1301 is connected in series between the power supply terminal 132 and the second Type-C connector 122, and its control terminal is connected with the second processor 1302 for converting an input voltage of the charger 200 into the activation voltage according to the control signal of the second processor 1302, and outputting them to the second Type-C connector 122.

It should be noted that the third converter 1301 in the embodiment, and the first converter 2101, the second converter 2103 and the AC-DC converter 2104 in the above embodiments are conventional voltage conversion devices in the conventional art, there are mature products for selection, and the disclosure does not limit its model.

Please refer to FIG. 79. The battery pack 100 further includes the activation unit 110.

The activation unit 110 is used for activating the second processor 1302 according to the activation signal, wherein, the activation signal is obtained through the second Type-C connector 122 of the battery pack 100 and/or pressing the activation button.

It should be understood that the battery pack 100 is provided with the activation button to control an on/off of a power loop, and after the activation button is pressed, an activation signal of pulling-up or pulling-down may be generated.

With this method, the battery pack 100 is in the sleep state without the activation signal. Only when receiving the activation signal, the battery pack 100 begins to work, which saves the electric energy.

Please refer to FIG. 79. The battery pack 100 further includes the Type-C communication unit 192.

The Type-C communication unit 192 is connected in series between the second processor 1302 and the second Type-C connector 122, for realizing a communication connection between the second processor 1302 and the charger 200. When the charger 200 is connected with the second Type-C connector 122, an external pulling-up signal is generated, and the pulling-up signal is transmitted to the second processor 1302 through the Type-C communication unit 192 as the activation signal. In addition, the battery pack 100 may further transmit the charging parameter of the battery pack 100 to the charger 200 through the Type-C communication unit 192, so that the output power of the charger 200 is dynamically adjusted to be adapted to the load capacity of the battery pack 100, so the wire short circuit, or even product overheating and explosion and other accidents are avoided.

It may be seen that the battery pack 100 of the embodiment outputs the activation voltage to the charger 200 after the activation to enable the charger 200 to begin to charge the battery pack 100. While charging, the battery pack 100 detects the charging state in real time. When the charging state is abnormal or completion, an output of the activation voltage is stopped, then the charging process is stopped, which avoids the damage caused by battery pack 100 by continuing to charge in the case of the failure or charging completion of the battery pack 100, ensures the charging safety of battery pack 100 and improves the duration life of battery pack 100.

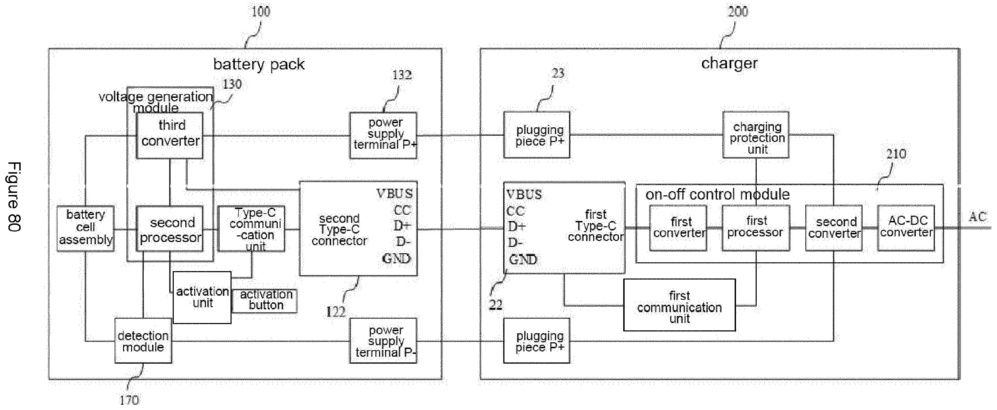

Please refer to FIG. 72 and FIG. 80. Another embodiment of the disclosure provides the charging combination, which includes charger 200 and the battery pack 100 which are detachable connected.

The charger 200 includes the first Type-C connector 22, the on-off control module 210 and the plugging piece 23.

The first Type-C connector 22 is used for receiving the activation voltage.

The on-off control module 210 is used for controlling the charging of the charger 200 according to the activation voltage.

The plugging piece 23 is electrically connected with battery pack 100 and the on-off control module 210 and is used for outputting charging voltage to battery pack 100.

The battery pack 100 includes the voltage generation module 130, second Type-C connector 122, power supply terminal 132 and detection module 170.

The voltage generation module 130 is used for generating the activation voltage of the charger 200 to the second Type-C connector 122. It is also used to obtain the charging state according to the charging parameters, and stop the generation of activation voltage when the charging state is abnormal or is completed.

The second Type-C connector 122 is used to output the activation voltage.

The power supply terminal 132 is electrically connected with the charger 200 and used for charging the battery pack 100.

The detection module 170 is used for the real-time acquisition of the charging parameters of the battery pack 100.

Wherein the first Type-C connector 22 is coupled with the second Type-C connector 122, and the plugging piece 23 is coupled with the power supply terminal 132.

It may be seen that in the charging combination of the embodiment, the battery pack 100 provides the activation voltage for the charger 200 to enable it to begin to charge the battery pack 100. While charging, the battery pack 100 detects the charging state in real time. When the charging state is abnormal or completion, an output of the activation voltage is stopped, which avoids the damage caused by battery pack 100 by continuing to charge in the case of the failure or charging completion of the battery pack 100, ensures the charging safety of battery pack 100 and improves the duration life of battery pack 100. In addition, the battery pack 100 and the charger 200 exchange data in real time during the charging process, the output power of the charger 200 is adjusted in real time according to the charging parameters of the battery pack 100 to be adapted to the load capacity of the battery pack 100, therefor the wire short circuit, or even product overheating and explosion and other accidents are avoided.

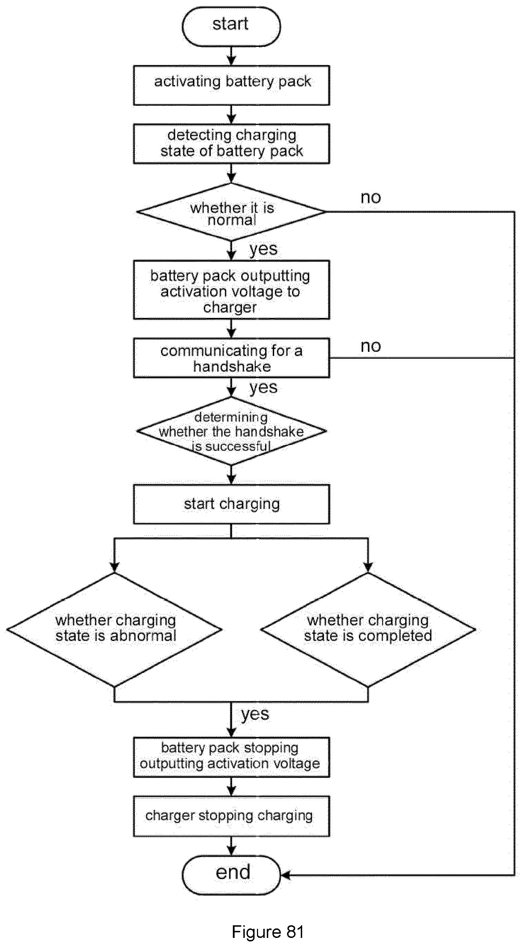

Please refer to FIG. 81. Another embodiment of the disclosure provides a charging method, the charging method includes that battery pack 100 outputs the activation voltage to the charger 200, the charger 200 charges the battery pack 100 after powering on. During the charging process, the battery pack 100 detects the charging parameters of the charging circuit of the battery pack in real time, the charging state is obtained according to the charging parameters, and the outputting of the activation voltage will be stopped when the charging state is abnormal or completed.

In some embodiments, operations before the battery pack 100 outputs the activation voltage to the charger 200 include:
activating the battery pack 100 after receiving the activation signal, wherein, the activation signal is obtained through the second Type-C connector 122 of the battery pack 100 and/or pressing the activation button.
In some embodiments, operations before the battery pack 100 outputs the activation voltage to the charger 200 include:
after activating the battery pack 100, detecting the charging parameters of the battery pack 100, obtaining the charging state according to the charging parameters, and outputting the activation voltage if the charging state is normal.

In some embodiments, after the charger 200 is powered on, operations before charging the battery pack 100 further include:
the battery pack 100 performing the communication handshake with the charger 200, and beginning to be charged after the successful handshake.

It may be seen that the charging method of the embodiment is applied to the charging combination of the above embodiments, the battery pack 100 provides the activation voltage for the charger 200 to enable it to begin to charge the battery pack 100. While charging, the battery pack 100 detects the charging state in real time. When the charging state is abnormal or completion, the output of the activation voltage is stopped, then the charging process is stopped, which avoids the damage caused by battery pack 100 by continuing to charge in the case of the failure or charging completion of the battery pack 100, ensures the charging safety of battery pack 100 and improves the duration life of battery pack 100. In addition, the battery pack 100 and the charger 200 exchange data in real time during the charging process, the output power of the charger 200 is adjusted in real time according to the charging parameters of the battery pack 100, so that the wire short circuit, or even product overheating and explosion and other accidents are avoided.

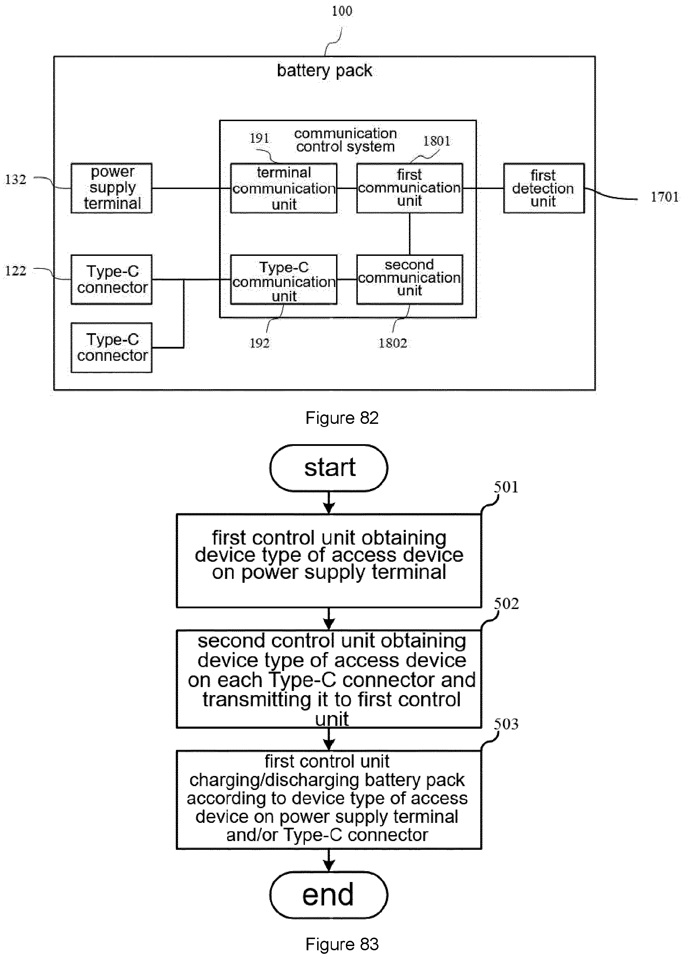

Please refer to FIG. 82. Another embodiment of the disclosure provides the battery pack 100, including the charging/discharging communication control system, the power supply terminal 132 and at least one Type-C connector 122. The communication control system is located inside the battery pack 100, and is connected with the power supply terminal 132 and each Type-C connector 122 respectively.

The communication control system includes the first control unit 1801 and the second control unit 1802 in the above embodiments.

The first control unit 1801 is electrically connected with the power supply terminal 132 and used to communicate with the access device on the power supply terminal 132.

The second control unit 1802 is electrically connected with each Type-C connector 122 and used to communicate with the access device on each Type-C connector 122.

The first control unit 1801 is communicatively connected with the second control unit 1802.

Wherein, the first control unit 1801 may be connected with the second control unit 1802 by a variety of communication methods, wherein, the communication methods include the I2C bus communication, the UART serial port communication and the SPI communication.

The communication control system further includes the terminal communication unit 191 and the Type-C communication unit 192 in the above embodiments.

The terminal communication unit 191 is connected in series between the power supply terminal 132 and the first control unit 1801, for communicating and connecting the power supply terminal 132 and the access device on the first control unit 1801.

Type-C communication unit 192 is connected in series between each Type-C connector 122 and the second control unit 1802 for communicating and connecting the second control unit 1802 and the access device on each Type-C connector 122.

Please refer to FIG. 83. Another embodiment of the disclosure provides a charging/discharging communication control method, the communication control method is applied to the battery pack 100 including the power supply terminal 132 and at least one Type-C connector 122, and the communication control method includes:
S501: the first control unit 1801 obtaining the device type of the access device on the power supply terminal 132;
S502: the second control unit 1802 obtaining the device type of the access device on the Type-C connector 122 and transmitting it to the first control unit 1801; and
S503: charging/discharging the battery pack 100 according to the device type of the access device on the power supply terminal 132 and/or the Type-C connector 122. Wherein, the device types include charging device and discharging device, and the device type is indicated by a high and low voltage level on a second transmitting end of the second control unit 1802.

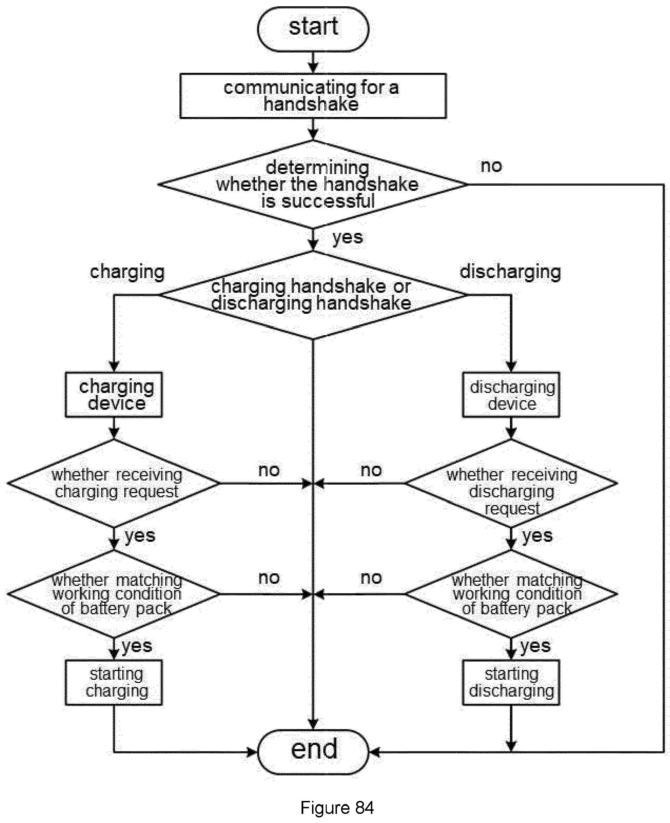

Please refer to FIG. 84. In addition, obtaining the device type of the access device on the power supply terminal 132 and/or the Type-C connector 122 includes:
the first control unit 1801 and the second control unit 1802 communicating with the access device for a handshake, if the handshake is successful, determining the type of communication handshake, if the type of communication handshake is charging handshake, the access device being the charging device; If the type of communication handshake is discharging handshake, the access device being the discharging device.

Please refer to FIG. 84. In addition, operations of the first control unit 1801 charging/discharging the battery pack 100 according to the device type on the power supply terminal 132 and/or each Type-C connector 122 include:
if it is the charging device, determining whether the charging request sent by the charging device is received, if the charging request is received, determining the working condition of the battery pack, if it is a non-discharging mode, charging the battery pack 100 through the Type-C connector 122 and/or the power supply terminal 132; and
if it is the discharging device, determining whether the discharging request sent by the discharging device is received, if the discharging request is received, determining the working condition of the battery pack, if it is a non-charging mode, discharging the battery pack 100 through the Type-C connector 122 and/or the power supply terminal 132.

Wherein, the working conditions of the battery pack include charging mode, discharging mode and idle mode. The first control unit 1801 marks the working condition of the battery pack according to the charging/discharging state of the battery pack 100 and a connecting state of the access device, and the marking method is the same as the above embodiment.

In addition, operations of the first control unit 1801 charging/discharging the battery pack 100 include:
the first control unit 1801 charging/discharging the battery pack 100 through the power supply terminal 132 according to the device type of the access device on the power supply terminal 132; and
the first control unit 1801 sending charging/discharging instructions to the second control unit 1802 according to the device type of the access device on each Type-C connector 122; the second control unit 1802 charging/discharging the battery pack 100 through each Type-C connector 122 according to the charging/discharging instructions.

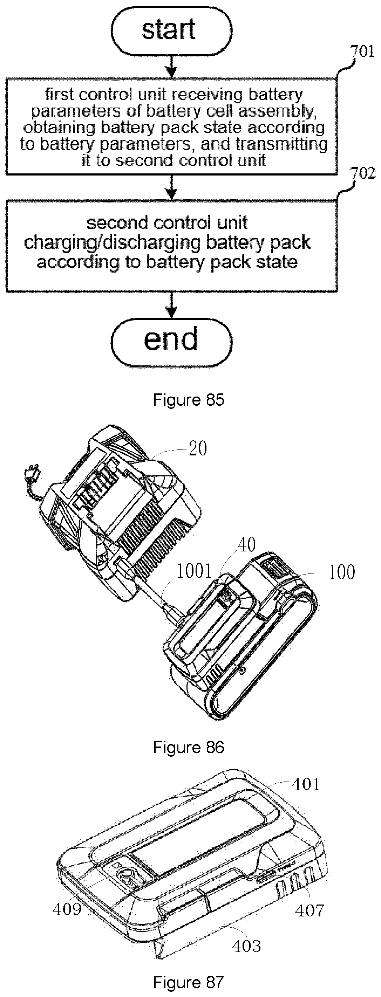

Please refer to FIG. 85. In addition, the communication control method further includes:
S701: the first control unit 1801 receiving the battery parameters of the battery cell assembly of the battery pack 100, obtaining the battery pack state according to the battery parameters, and transmitting it to the second control unit 1802, wherein, the battery pack state including power off, protection, normal and abnormal, the battery pack status being indicated by a high and low voltage level on the first transmitting terminal of the first control unit 1801; and
S701: the second control unit 1802 charging/discharging the battery pack 100 according to the battery pack state.

Specifically, when receiving the charging request, the battery pack state should be detected first, and the charging should be allowed only if it is not abnormal. When receiving the discharging request, the battery pack state should be detected first, and the discharging is allowed only when it is normal, so as to avoid damage to the battery cell assembly caused by overcharge or undervoltage, which affects its duration life.

During the charging/discharging process, the second control unit 1802 further detects the battery pack state in real time, and if there is an abnormality, the charging/discharging process will be stopped to protect the battery cell from damage.

It may be seen that the communication control method in the above embodiment is applied to the battery pack 100 including the power supply terminal 132 and at least one Type-C connector 122, supports the USB PD fast charging protocol, and is provided with three communication lines between the power supply terminal 132 and the first control unit 1801, between each Type-C connector 122 and the second control unit 1802, and between the first control unit 1801 and the second control unit 1802. During the charging/discharging process of the battery pack 100, the charging/discharging protection logic is executed according to a real-time data interaction, and the input/output power is dynamically adjusted, which can not only quickly perform the charging/discharging, but also effectively protect the safety of the battery pack 100 and extend the duration life of the battery pack 100.

FIG. 72 is a connecting view of the battery pack and the charger. The battery pack 100 is directly connected with the charger. At this time, the charger 200 is connected with the battery pack 100 to charge the battery pack 100, it is needed that the output voltage of the charger matches the input voltage of the battery pack 100 to achieve the normal charging of the battery pack 100. Or the output voltage of the charger does not exceed a maximum withstand voltage of the battery pack 100, at this time the battery pack 100 can realize a charging function, but can not achieve a best charging effect. It means that each battery pack 100 needs to match the corresponding charger to achieve the best charging state of the battery pack 100. In this embodiment, an adapter device 40 is provided capable of converting the output voltage of the charger 20 to the input voltage required by the battery pack 100 according to the input voltage requirement of the battery pack 100.

Please refer to FIG. 86. The charging system provided by the disclosure includes the charger 20, the adapter device 40 and the battery pack 100. The charger 20 is connected with the adapter device 40, the Type-C output connector 22 is provided on one side of the charger 20, and the Type-C output connector 22 is electrically connected with a voltage input terminal of the adapter device 40 via the charging line 1001.

Please refer to FIG. 86. The disclosure provides the battery pack 100, a top surface of the battery pack housing 10 is provided with the plug-in part 1101, both sides of the plug-in part 1101 are provided with the sliding rails 1102, the sliding rails 1102 are used to be connected with the adapter device 40. One end of the plug-in part 1101 is provided with the terminal 132, and the terminal 132 is arranged between the sliding rails 1102 on both sides of the plug-in part 1101. When the adapter device 40 is connected with the battery pack 100 through a second guiding rail 419, the terminal 132 is electrically connected with the voltage output terminal of the adapter device 40, and the terminal 132 is an output terminal. The structure of the battery pack is the same as the structure of the above battery packs, and it is not described repeatedly.

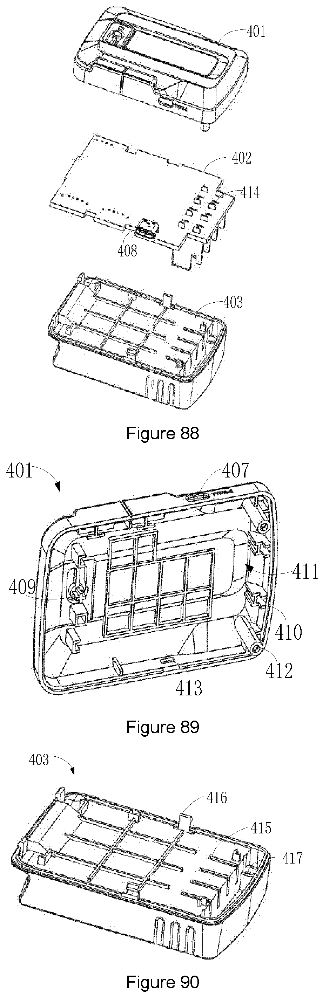

Please refer to FIG. 86 through FIG. 88. The adapter device 40 of the disclosure is arranged between the charger 20 and the battery pack 100, for converting the output voltage of the charger 20 into the input voltage required by the battery pack 100. The adapter device 40 of the disclosure includes a casing 41 and a circuit board 402, wherein, the casing 41 includes a first housing 401 and a second housing 403, the first housing 401 and the second housing 403 are both provided with a concave part, when mounting, the first housing 401 buckles on the second housing 403 to form an accommodating cavity, and the accommodating cavity is formed by the concave part of the first housing 401, for placing the circuit board 402. And the circuit board 402 is mounted in the accommodating cavity formed by the first housing 401 for fixing the circuit board 402, and the concave part of the second housing 403 is used to clamp with the battery pack 100.

Please refer to FIG. 86 through FIG. 91. In an embodiment of the disclosure, the first housing 401 is connected with the charger 20 through the charging cable 1001, a side of the first housing 401 connected with the charger 20 is provided with an input part of the adapter device 40, and an output part includes a first connector 408 connected with the charger 20. A first through hole 407 is provided on a side wall of the first concave part 411. The first connector 408 is arranged on the circuit board 402, and is located in the first concave part 411 of the first housing 401, the first connector 408 extends into the first through hole 407, the first connector 408 is electrically connected with an input end of the circuit board 402 and is an input port of the adapter device 40, and the first connector 408 is, for example, a Type-C input connector. When the adapter device 40 is connected with the charger 20 through the charging cable 1001, the Type-C output connector 22 is electrically connected with the first connector 408.

Please refer to FIG. 86 through FIG. 91. In an embodiment of the disclosure, a button 409 is arranged on a surface of the first housing 401, the button 409 extends into the first concave part 411, which may be used as a key switch of the circuit board 402. In the first concave part 411, a plurality of clamping columns 412 is arranged on an outside of the first concave part 411, which is connected with clamping points 417 on the second concave part 418 on the second housing 403, for positioning the first housing 401 and the second housing 403, and connecting the first housing 401 with the second housing 403. Wherein the clamping column 412 is a hollow cylinder, the clamping point 417 is a hollow cylinder, and an outer diameter of the clamping column 412 is equal to an inner diameter of the hollow cylinder on the clamping point 417. The clamping column 412 is clamped into the clamping point 417. The side wall of the first concave part 411 is further provided with a plurality of second clamping grooves 413, which is connected and clamped with a clamping component 416 on the second housing 403 for fixed connecting with the first housing 401 and the second housing 403. The outside of the first concave part 411 is further provided with a plurality of supporting plates 410 for reinforcing the first housing 401.

Please refer to FIG. 86 through FIG. 91. In an embodiment of the disclosure, a plurality of clamping points 417 is provided on one side of the second housing 403 connected with the first housing 401, and is clamped with the clamping column 413 on the first housing 401. And a plurality of clamping components 416 are arranged on a side of the second housing 403 connected with the first housing 401, positions of the plurality of the clamping components 416 correspond to the second clamping grooves 413, and when the first housing 401 and the second housing 403 are clamped, the clamping components 416 are connected and clamped with the second clamping grooves 413. The circuit board 402 is fixed on a side of the second housing 403 connected with the first housing 401, and when the first housing 401 and the second housing 403 are clamped, the circuit board 402 is located inside the first concave part 411. An output end of the circuit board 402 is connected with a plurality of second connectors 414, a first end of the second connector 414 is electrically connected with the output end of the circuit board 402 as an output port of the adapter device 40, a second end of the second connector 414 passes through a second through hole 415 on the second housing 403 to the second concave part 418 in sequence. When the second housing 403 is clamped on the battery pack 100, the second connector 414 is still electrically connected with the terminal 132 of the battery pack 100.

Please refer to FIG. 86 through FIG. 91. In an embodiment of the disclosure, an output part of the adapter device 40 is provided on a side of the second housing 403 opposite to a connection side between the second housing 403 and the first housing 401, i.e. on a side of the second housing 403 connected with battery pack 100, and the output part includes the second connector 414 electrically connected with the terminal 132 and the second guiding rail 419 clamped with the sliding rail 1102. Specifically, the second housing 403 is provided with the second concave part 418, the second concave part 418 is a concave part with an opening, and the second guiding rails 419 are provided on the two opposite side walls of the second concave part 418, which means that the second guiding rails 419 are arranged on side walls adjacent to the opening. Two second guiding rails 419 are arranged in parallel for clamping with sliding rails 1102 of the battery pack 100. And on a side of the opening, a bottom wall of the second concave part 418 is further provided with a first limiting groove 421, the first limiting groove 421 is adapted to a shape of the limiting column 1112 on the battery pack 100, and when the second concave part 418 of the second housing 403 is clamped on the plug-in part 1101 of the battery pack 100, the limiting column 1112 is clamped in the first limiting groove 421.

Please refer to FIG. 86 through FIG. 91. When the adapter device 40 is connected with the charger 20 and the battery pack 100, the first connector 408 on the first housing 401 is electrically connected with the Type-C output connector 22 through the charging cable 1001. The second guiding rail 419 on the second housing 403 is clamped with the sliding rail 1102 on the battery pack 100, and the second connector 414 is electrically connected with the terminal 132 of the battery pack 100. The circuit board 402 arranged in the accommodating cavity formed by the first concave part 411 of the first housing 401 convert the output voltage of the charger 20 into the input voltage required by the battery pack 100. The disclosure does not limit a length of the charging cable 1001, and both ends of the charging cable 1001 are Type-C connectors. And the disclosure does not limit a rated working voltage of the battery pack 100, for example, a first battery pack is provided with a first rated working voltage, the terminal 132 is the first battery pack terminal, then the second connector 414 is electrically connected with the first battery pack terminal, and converts the output voltage of the charger 20 into the first rated working voltage for charging the charger 20. A second battery pack is provided with a second rated working voltage, the terminal 132 is a second battery pack terminal, and then the second connector 414 is electrically connected with the second battery pack terminal and converts the output voltage of the charger 20 into the second rated working voltage for charging the charger 20.

The control system of the battery pack 100 includes: the battery cell group 120 (lithium battery), the main control unit 181, the detection unit 171 and the activation unit 110 electrically connected with the main control unit 181, a COM communication processing unit 191 electrically connected with the main control unit 181 and the activation unit 110, the DC-DC unit 130 electrically connected with the battery cell assembly 120 and the main control unit 181, a first charging/discharging protection unit 151 electrically connected with the battery cell assembly 120, the main control unit 181 and the DC-DC unit 130, and the terminal 132. Wherein, the terminal 132 includes four terminals, terminals P+, CHG, COM and P-. The terminals P+ and CHG are connected with the first charging/discharging protection unit 151, and connected to a positive pole of the battery, the COM terminal is connected with the COM communication processing unit, and the P-terminal is connected with a negative pole of the battery.

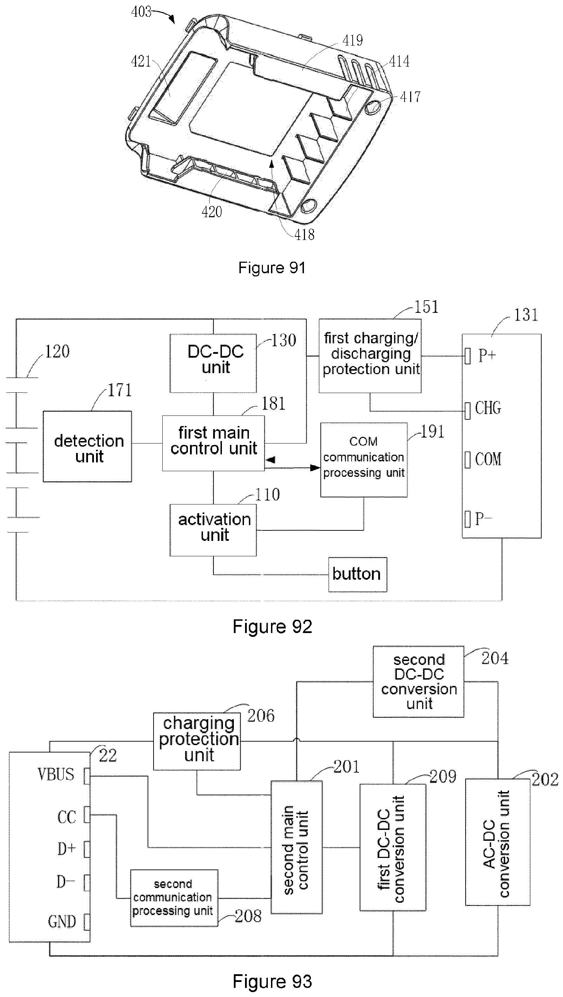

Please refer to FIG. 92. In this disclosure, the detection unit 171 is used to detect a single-cell voltage in the battery cell assembly 120, and the temperature of the battery cell assembly 120, etc., and transmits the detection results to the main control unit 181. The main control unit 181 is used to receive the data information of the detection unit 2 and loop charging/discharging information, and a corresponding protection operation will be performed after analyzing the information. Wherein, an I2C communication is used between the detection unit 171 and the main control unit. The DC-DC unit 130 converts a voltage across the battery cell assembly 120 into a voltage required for an operation of the main control unit 181 and other modules. The first charging/discharging protection unit 151 receives protection instructions from the main control unit 181, and completes charging/discharging protection actions of the circuit. The COM communication processing unit 191 processes communication between an external COM communication and the main control unit 181. The activation unit 110 receives the activation signal from the outside, including the KEY signal (button) and the COM signal, and completes the power-on action of the main control unit 181. And after the main control completes the power-on action, it communicates with the outside through the COM communication processing unit.

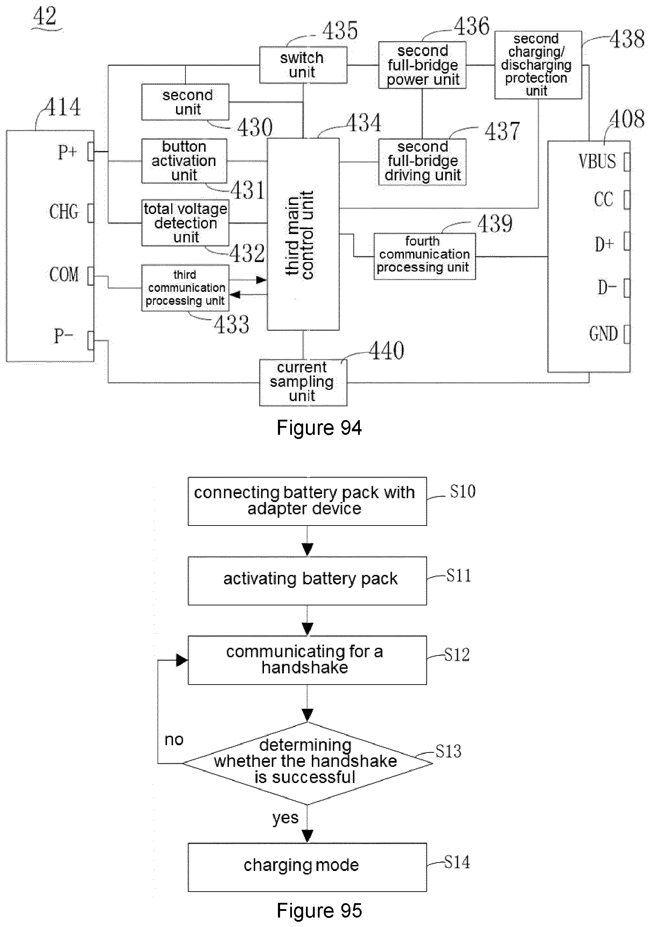

Please refer to FIG. 92 and FIG. 95. In this embodiment, the control method of the battery pack 100 includes the following operations: S10: electrically connecting the battery pack 100 with the adapter device 40; S11: activating the battery pack 100; S12: the battery pack 100 communicating with adapter device 40 for a handshake; S13: determining whether the handshake is successful, when the handshake is successfully, executing S14: entering the charging mode; otherwise, returning to S12.

Please refer to FIG. 92 and FIG. 95. In a specific embodiment of the disclosure, the control method of the battery pack 100 specifically includes: after electrically connecting the battery pack 100 with the adapter device 40, the adapter device 40 activating the battery pack 100 through the COM signal, the battery pack 100 communicating with the adapter device 40 for a handshake, and determining whether the handshake is successful, if it is not successful, remaining in a handshake mode, after the handshake is successful, the adapter device 40 sending the charging request through the COM signal, and when the battery pack 100 passes the request, the battery pack 100 entering the charging mode. When the battery pack 100 entering the charging mode, the main control unit 181 monitors the battery states in real time, the battery states includes the voltage, the current and the cell temperature, and when the single-cell voltage or the temperature is abnormal, the charging will be stopped. In this embodiment, the main control unit 181 may further include the power calculation module, and the power calculation module may calculate the battery power in real time. When the battery power of the battery pack 100 is the first threshold, which means that the state of charge SOC=the first threshold, the charging will be stopped, and the first threshold is for example 100%.

Please refer to FIG. 93. The control system of the charger 20 includes: an AC-DC conversion unit 202, a first DC-DC conversion unit 209 electrically connected with the AC-DC conversion unit 202, a second DC-DC conversion unit 204 electrically connected with the AC-DC conversion unit 202, a second main control unit 201 electrically connected with the first DC-DC conversion unit 209 and the second DC-DC conversion unit 204, and the Type-C output connector 22 electrically connected with the second main control unit 201. And the Type-C output connector 22 includes terminals like VBUS, CC, D+, D- and GND, which are electrically connected with a second communication processing unit 208 between the Type-C output connector 22 and the second main control unit 201, and electrically connected with the charging protection unit 206 between the Type-C output connector 22 and the second main control unit 201.

Please refer to FIG. 93. In this disclosure, the AC-DC conversion unit 202 is used for converting alternating current to direct current. The first DC-DC conversion unit 209 converts the direct current output by the AC-DC conversion unit 202 to the voltage required by the battery pack according to the input voltage required by the battery pack 100. The second DC-DC conversion unit 204 converts the direct current output by the AC-DC conversion unit 202 to a power supply voltage for an operation of the second main control unit 201 and other modules. The charging protection unit 206 is configured to receive protection instructions from the second main control unit 201, and complete the discharging protection of the charger 20. The second communication processing unit 208 completes a communication between the adapter device 40 and the charger 20, the second main control unit 201 processes power of and off instructions provided by the second communication processing unit 208 and by the charging protection unit 206. In this embodiment, the second communication processing unit 208 is a Type-C communication processing unit.

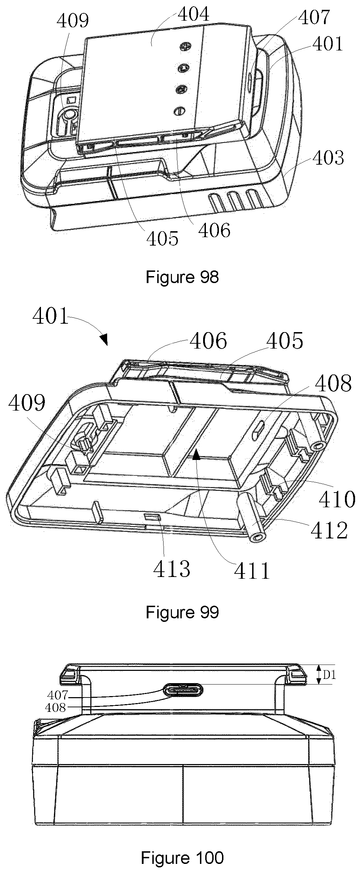

Please refer to FIG. 93 and FIG. 98. After the charging device 20 is connected with the adapter device 40, the control method of the charging device 20 includes the following operations: S30: connecting the charging device 20 with the adapter device 40; S31: the charging device 20 communicating with the adapter device 40 for a handshake; S32: determining whether the handshake is successful, when the handshake is successful, then executing S33: the charging device 20 charging the battery pack 100, otherwise returning to S31. Specifically, in an embodiment of the disclosure, after the charging device 20 is connected with the adapter device 40, and after the entire system (including the battery pack 100 and the control system in the adapter device 40) is activated, the charging device 20 communicates with the adapter device 40 through the Type-C output connector 22 for a handshake, if not successful, it remains in the handshake mode, after the handshake is successful, the second main control unit 201 starts the charging protection unit 206, and sends the charging request. After the charging request is passed, the charging device 20 charges the battery pack 100.

Please refer to FIG. 94. A charging conversion control system 42 provided by the disclosure is arranged between the control system of the charging device 20 and the control system of the battery pack 100, and the charging conversion control system 42 mainly includes: a third communication processing unit 433 electrically connected with the second connector 414, a third main control unit 434 electrically connected with the third communication processing unit 433, a second full-bridge driving unit 437 electrically connected with the third main control unit 434, a second full-bridge power unit 436 electrically connected with the second connector 414 and the second full-bridge driving unit 437, and a fourth communication processing unit 439 electrically connected with the third main control unit 434. And the second full-bridge power unit 436 and the fourth communication processing unit 439 are electrically connected with the first connector 408. Wherein, when electrically connecting the control system of the battery pack 100 and the control system of the charging device 30, the second connector 414 is electrically connected with the terminal 132 of the battery pack 100, and the first connector 408 is electrically connected with the Type-C output connector 22 of the charging device 20.

Please refer to FIG. 94. The second connector 414 of the disclosure is an output connector of the charging conversion control system 42, which is electrically connected with the terminal 132 of the battery pack 100, corresponding to the terminal 132, the second connector 414 includes four output terminals like P+, CHG, COM and P-, corresponding to the terminal 132 of the battery pack 100 one-to-one, wherein a CHG terminal is a charging connector, the P+, P- terminals are used to provide the input voltage of the battery pack 100, and the COM terminal is used for communication. The first connector 408 is an input connector of the charging conversion control system 42, which is electrically connected with the Type-C output connector 22 of the charging device 20, and the first connector 408 includes VBUS, CC, D+, D- and GND terminals, corresponding to the terminals of the Type-C output connector 22 one-to-one. Wherein, the D+, D- terminals are used for receiving an input voltage of the charging conversion control system 42, the CC terminal is used for communication between the charging conversion control system 42 and the charging device 20, the GND terminal is used as a ground terminal, and the VBUS outputs a constant voltage and supply power to each module in the charging device 20. The VBUS for example is commonly used as a voltage of 5V.

In addition, please refer to FIG. 94. The third communication processing unit 433 is electrically connected with the COM terminal of the second connector 414 and the third main control unit 434 to realize a communication between the battery pack 100 and the adapter device 40. In this embodiment, the third communication processing unit 433 is the COM communication processing unit, matching the COM communication of the battery pack 100. The third main control unit 434 receives signals of each module and sends operation instructions. A first end of the fourth communication processing unit 439 is electrically connected with third communication processing unit 434, and a second end of the fourth communication processing unit 439 is electrically connected with the first connector 408 to realize the communication between the battery pack 20 and the adapter device 40. In this embodiment, the fourth communication processing unit 439 is the Type-C communication processing unit, matching the Type-C communication of the charging device 20.

In addition, please refer to FIG. 94. The second full-bridge driving unit 437 is electrically connected with the third main control unit 434, the second full-bridge power unit 436 is electrically connected with the second connector 414 and the second full-bridge driving unit 437, the second full-bridge driving unit 437 and the second full-bridge power unit 436 constitutes a boost module, and information of the output voltage may be obtained according to a communication between the third communication processing unit 433 and battery pack 100. Information of the required input voltage may be obtained according to a communication between the fourth communication processing unit 439 and charging device 20. The third main control unit 434 determines a duty cycle of the output PWM signal according to the input voltage and the required output voltage. According to the PWM signal sent by the third main control unit 434, the second full-bridge driving unit 437 and the second full-bridge power unit 436 convert the voltage input by the charging device 20 from the first connector 408 into the voltage required by the battery pack 100 which is output by the second connector 414.

Please refer to FIG. 94. The charging conversion control system 42 in the disclosure further includes a DC-DC conversion unit 430, an input end of the DC-DC conversion unit 430 is electrically connected with the first connector 414. Specifically, the input end of the DC-DC conversion unit 430 is electrically connected with the VBUS terminal, the output end of the DC-DC conversion unit 430 is electrically connected with the third main control unit 434 and each module, the DC-DC conversion unit 430 converts the input voltage of the first connector 414 into a working voltage required for the operation of each module, and the working voltage is, for example, 5V.

Please refer to FIG. 94. The charging conversion control system 42 in the disclosure further includes a button activation unit 431, the button activation unit 431 is a triggering unit, which is connected with the button 409 on the first housing 401, when it is necessary to start the charging conversion control system 42, the button 409 is pressed, the button activation unit 431 is triggered, then the third main control unit 434 electrically connected with the button activation unit 431 is activated, and then the charging conversion control system 42 is activated. When the button 409 is pressed again, the third main control unit 434 may be turned off by the button activation unit 431, and then the charging conversion control system 42 may be turned off.

Please refer to FIG. 94. The charging conversion control system 42 in the disclosure further includes a total voltage detection unit 432, one end of the total voltage detection unit 432 is electrically connected with the second connector 414. Specifically, a first end of the total voltage detection unit 432 is electrically connected with the P+ terminal, and a second end of the total voltage detection unit 432 is electrically connected with the third main control unit 434. Before the voltage conversion, the total voltage detection unit 432 detects the input voltage required by the battery pack 100.

Please refer to FIG. 94. The charging conversion control system 42 in the disclosure further includes a current sampling unit 440, the current sampling unit 440 is electrically connected between the second connector 414 and the first connector 408, connected in series on a loop pf the charging conversion control system 42, and is electrically connected with the third main control unit 434. Specifically, a first end of the current sampling unit 440 is electrically connected with the P- terminal, a second end of the current sampling unit 440 is electrically connected with the D- terminal, and is further electrically connected with the third main control unit 434. The current sampling unit 440 is used to detect the current in the loop, and transmit the current information in the loop to the third main control unit 434. When the current in the circuit is abnormal, a voltage conversion process may be stopped.

Please refer to FIG. 94. The charging conversion control system 42 in the disclosure further includes a switch unit 435, the current sampling unit 435 is electrically connected between the second connector 414 and the first connector 408, and is electrically connected with the third main control unit 434 at the same time. Specifically, a first end of the switch unit 435 is electrically connected with the P+ terminal, a second end of the switch unit 435 is electrically connected with an input end of the second full-bridge power unit 436 and a third end of the switch unit 435 is electrically connected with the third main control unit 434. When the third main control unit 434 sends a conduction command, the switching unit 435 is turned on, the second full-bridge power unit 436 has the input voltage, and the charging conversion control system 42 may realize a voltage conversion function. When the third main control unit 434 sends a shutdown command, the switch unit 435 is turned off, the loop of the second full-bridge power unit 436 is disconnected, and the charging conversion control system 42 may not realize the voltage conversion function. In the present disclosure, when the input voltage is over/under voltage, or the current is abnormal, or the charging/discharging is abnormal, etc., the switch unit 435 will be turned off.

Please refer to FIG. 94. The charging conversion control system 42 in the disclosure further includes a second charging/discharging protection unit 438, the second charging/discharging protection unit 438 is electrically connected between the first connector 408 and the second full-bridge power unit 436, is electrically connected with the third main control unit 434, and receives the protection instruction from the third main control unit 434 to complete the charging/discharging protection of the loop. In this embodiment, the second charging/discharging protection unit 438 is the Type-C charging/discharging protection unit.

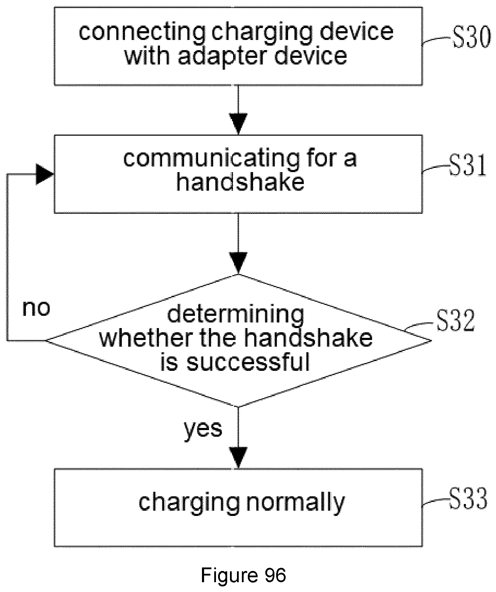

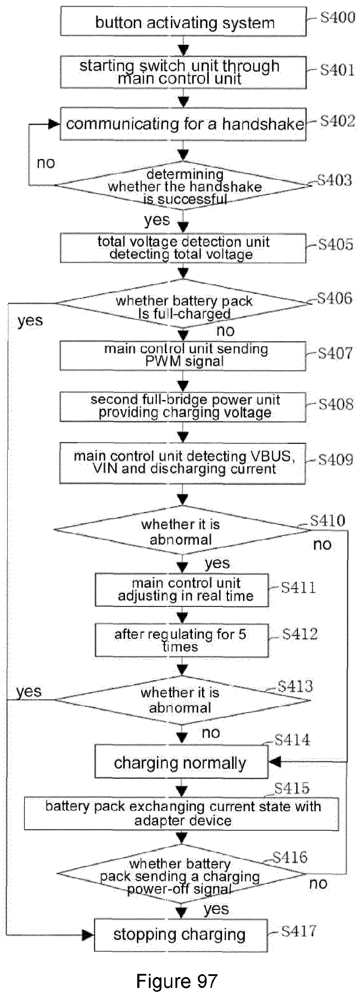

Please refer to FIG. 92 through FIG. 97. In an embodiment of the disclosure, the disclosure provides the charging conversion method, the charging conversion method specifically includes:
S400: activating the charging conversion control system 42 through the button activation unit 431;
   specifically, through pressing the button 409 on the first housing 401, the button activation unit 431 is triggered, and the third main control unit 434 electrically connected with the button activation unit 431 is activated, thereby activating the charging conversion control system 42. In this embodiment, when the button 409 is pressed again, the third main control unit 434 may be turned off through the button activation unit 431, and then the charging conversion control system 42 may be turned off.
S401: starting the switch unit 435 through the third main control unit 434;
   specifically, the switching unit 435 is arranged between the second connector 414 and the first connector 408, and is located between the second connector 414 (the input end) and the second full-bridge power unit 436. If the switching unit 435 is disconnected, then voltage conversion is not possible.
S402: communicating through the third communication processing unit 433 and the fourth communication processing unit 439 for a handshake;
   specifically, the third communication processing unit 433 is electrically connected with the COM terminal of the second connector 414, and conducts a COM communication handshake with the battery pack 100. The fourth communication processing unit 439 is electrically connected with the CC terminal of the first connector 408, and conducts a CC communication handshake with the charging device 20.
S403: determining whether the handshake is successful, if successful, executing S405, otherwise returning to S402;
S405: the total voltage detection unit 432 detecting the input voltage required by the battery pack 100;
   specifically, the total voltage detection unit 432 is electrically connected with the P+ terminal of the second connector 414 for detecting the required input voltage of the battery pack 100, and the input voltage of the battery pack 100 is the output voltage of the charging conversion control system 42.
S406: determining whether the output voltage of the battery pack 100 is fully charged;
   specifically, the total voltage detection unit 432 determines whether the power in the battery pack 100 is fully charged, which means that the state of charge SOC=the first threshold. The first threshold is for example 100%. When the battery pack 100 is not fully charged, which means that the state of charge SOC<100%, S407 will be executed, otherwise S417 will be executed to stop charging.
S407: the third main control unit 434 sending the PWM signal;
   specifically, the second full-bridge driving unit 437 and the second full-bridge power unit 436 constitute the boost module, according to the input voltage required by the battery pack 100 detected by the total voltage detection unit 432, the third main control unit 434 controls a voltage output of the second full-bridge power unit 436 through sending out the PWM signal with a certain duty cycle.
S408: the second full-bridge power unit 436 providing the charging voltage;
   specifically, after the switch unit 435 is turned on and the third main control unit 434 sends the PWM signal to the boost module, the second full-bridge power unit 436 performs the voltage conversion, and converts the output voltage of the charging device 20 into the input voltage required by the battery pack 100, and the charging voltage is the output voltage of the charging conversion control system 42.
S409: the third main control unit 434 detecting the input voltage, output voltage and loop current of the charging conversion control system 42;
   specifically, in a process of the voltage conversion of the charging conversion control system 42, the third main control unit 434 detects information in the circuit in real time, which includes detecting the output voltage of the battery pack 100 through the total voltage detection unit 432, which means the input voltage of the charging conversion control system 42; detecting the input voltage of the charging conversion control system 42 through the second charging/discharging protection unit 438; and detecting loop current of the charging conversion control system 42 through the current sampling unit 440.
S410: determining whether the input voltage, output voltage and loop current of the charging conversion control system 42 are abnormal;
   specifically, the total voltage detection unit 432 may detect whether the output voltage of the charging conversion control system 42 is abnormal. In the third main control unit 434, according to a voltage required by the charging conversion system 42, a threshold of the input voltage at a VBUS terminal of the charging conversion control system 42 may be set as the second threshold, and a threshold of the loop current in the charging conversion control system 42 is the third threshold. The second charging/discharging protection unit 438 monitors the input voltage of the charging conversion control system 42 in real time, and transmits it to the third main control unit 434. When the input voltage of the charging conversion control system 42 is within the second threshold, it is considered that no abnormality has occurred. When the input voltage of the charging conversion control system 42 is not within the second threshold, it is considered that an abnormality has occurred. The current sampling unit 440 monitors the loop current of the charging conversion control system 42 in real time, when the loop current of the charging conversion control system 42 is within the third threshold, it is considered that no abnormality has occurred, and when the loop current of the charging conversion control system 42 is not within the third threshold, it is considered that an abnormality has occurred. When any of the above abnormalities occurs, it is considered that an abnormality has occurred. When there is an abnormality, S411 is executed, otherwise S414 is executed.
S411: the third main control unit 434 adjusting in real time;
   specifically, the third main control unit 434 changes the output voltage and loop current through adjusting the duty cycle of the PWM signal. In a process of adjustment, the third main control unit 434 still monitors the input voltage, output voltage and loop current of the charging conversion control system 42 in real time.
S412: recording the number of adjustments of the third main control unit 434, when the number of adjustments of the third main control unit 434 reaches a set number of times, executing S413; wherein, the number of times being 5 times, for example.
S413: determining whether the input voltage, output voltage and loop current of the charging conversion control system 42 are abnormal;
   specifically, a determination process is the same as S410, when a determination result is not abnormal, S414 will be executed, otherwise S417 will be executed, and the charging is powered off.
S414: charging normally.
S415: exchanging circuit state with the battery pack 100 through the third communication processing unit 433;
   specifically, during the charging process of the battery pack 100, the adapter device 40 turntably interacts with the battery pack 100 via the third communication processing unit 433.
S416: determining whether the battery pack 100 has a charging power-off signal, if not, executing S414, otherwise executing S417. Wherein, the battery pack 100 is provided with the power calculation module to monitor the state of charge of the battery pack 100 in real time. When the state of charge SOC=100%, the charging power-off signal is sent.
S417: stopping charging;
   specifically, a signal is sent to the switching unit 435 through the third main control unit 434, and a work of the charging conversion control system 42 is stopped.

Please refer to FIG. 92 through FIG. 97. The charging conversion method provided by the disclosure mainly includes: after the adapter device 40 is connected to the battery pack 100, activating the charging conversion control system 42 of the adapter device 40 through the button 409 on the adapter device 40. After the charging conversion control system 42 is activated, the battery pack 100 will be activated through the COM signal and communicated for a handshake. After the handshake is successful, the total voltage detection unit 432 detects whether the battery pack 100 is fully charged, if it is not fully charged, the battery pack 100 will enter the charging mode. The control process of voltage conversion is as follows: the third main control unit 434 sends the PWM signal, the second full-bridge driving unit 437 provides a suitable voltage, the third main control unit 434 monitors parameters in the voltage conversion process, the parameters in a parameter process in the voltage conversion process generally includes the loop current, input voltage and output voltage, and a parameter range may be set as needed. When the parameters in the voltage conversion process exceed a preset parameter range, it is considered abnormal. The charging/discharging voltage and charging/discharging current may be dynamically adjusted according to the preset logic. A number of adjustments may be one or more times, a specific number of times may be set according to the need, in this embodiment is 5 times. After the adjustment, the parameters in the voltage conversion process continue to be detected, and when there is still an abnormality, the charging will be stopped, when there is no abnormality, the voltage conversion will be performed normally. During the normal charging process, the battery pack 100 and the adapter device 40 exchange data in real time through the communication, and the charging will be stopped after the battery pack 100 sends out the charging power-off signal. In this embodiment, when the state of charge SOC of the battery pack 100 equals the first threshold, or when the single cell is abnormal or the temperature is abnormal, the battery pack 100 sends out the charging power-off signal.

### (79, 80)

Generally speaking, the voltage output terminal is provided on the battery pack, the voltage input terminal is provided on the power tool, and the voltage output terminal on the battery pack is electrically connected with the voltage input terminal on the power tool to provide electricity for a normal operation of the power tool. At this time, the output voltage of the battery pack matches the input voltage of the power tool to achieve the normal operation of the power tool. Or the output voltage of the battery pack does not exceed a maximum withstand voltage of the power tool, then the power tool can work, but can not achieve an optimal working state. This means that each power tool needs to be provided with a corresponding battery pack to achieve the optimal working state of the power tool, since there are multiple handheld power tools, and a variety of the battery packs are required. In this embodiment, the adapter device 40 is provided capable of converting the output voltage of the battery pack into the input voltage required by the power tool according to an input voltage requirement of the power tool. And when the voltage output terminal of the battery pack and the voltage input terminal of the power tool are different types of terminals, a connection between the battery pack and the power tool is realized by arranging a connector on the adapter device that is compatible with the battery pack and the power tool.

The charging system provided by the disclosure includes the charger 30, the adapter device 40 and the battery pack 100. The base 33 of the power tool 30 is connected with the adapter device 40, a battery plug-in port 331 is provided on a side of the base 33 of the power tool 30 connected with the adapter device 40, and the opening of the battery plug-in port 331 is arranged on one side of the base 33 and is located on a side near a working end of the power tool 30. The limiting clamping groove 333 is arranged on the base 33 located at the opening for limiting the position of the adapter device 40. The guiding groove 332 connected with the adapter device 40 is provided on two side walls adjacent to the opening of the battery plug-in port 331, and the guiding groove 332 may be an L-shaped groove, for example, for better clamping with the adapter device 40. The Type-C connector 34 is provided on the side wall of the battery plug-in port 331 opposite to the opening, and the Type-C connector 34 is electrically connected with the first connector 408 of the adapter device 40, which is a Type-C input connector of the power tool 30.

The disclosure provides the battery pack 100, the top surface of the battery pack housing 10 is provided with the plug-in part 1101, both sides of the plug-in part 1101 are provided with the sliding rails 1102, the sliding rails 1102 are used to be connected with the adapter device 40. One end of the plug-in part 1101 is provided with the terminal 132, and is located between the sliding rails 1102 on both sides of the plug-in part 1101. When the adapter device 40 is connected with the battery pack 100 through the second guiding rail 419, the terminal 132 is electrically connected with the voltage output terminal of the adapter device 40, and the terminal 132 is an output terminal. The structure of the battery pack is the same as the structure of the above battery pack, and it is not described repeatedly.

The adapter device 40 of the disclosure is arranged between the battery pack 100 and the power tool 30, for converting the output voltage of the battery pack 100 into the input voltage required by the power tool 30. The structure of the adapter device 40 provided by the disclosure is similar to the structure of the adapter device in the above embodiment.

The difference is that, please refer to FIG. 98 through FIG. 100, in this embodiment, a side of the first housing 401 connected with the power tool 30 is an output part of the adapter device, and the output part includes a first guiding rail 405 clamped with the power tool 30 and the first connector 408 electrically connected with the Type-C connector 34. Specifically, the first housing 401 is provided with a first protruding part 404, a top surface of the first protruding part 404 extends out of the side wall to form the first guiding rail 405, and two first guiding rail 405 are arranged parallel to each other. The battery plug-in port 331 of the power tool 30 is allowed to be clamped on the first protruding part 404, and the guiding groove 332 is clamped on the first guiding rail 405.

Please refer to FIG. 98 through FIG. 100. In an embodiment of the disclosure, the first through hole 407 is further provided on the side wall of the first protruding part 404, a distance between the first through hole 407 and the top surface of the first protruding part 404 is configured as a first distance D1, which is compatible with a distance between the Type-C connector 34 on the base 33 of the power tool 30 and a bottom wall of the battery plug-in port 331, which means that the first distance D1 is equal to a distance between the Type-C connector 34 and the bottom wall of the battery plug-in port 331. The first connector 408 is arranged in the first concave part 411 of the first housing 401, the first connector 408 is electrically connected with the output end of the circuit board 402 and is the output port of the adapter device, and the first connector 408 is, for example, the Type-C output connector. When the power tool 30 is clamped with the adapter device 40, the battery plug-in port 331 is clamped on the first protruding part 404, the guiding groove 332 is clamped with the first guiding rail 405, and the Type-C connector 34 is clamped and electrically connected with the first connector 408.

Please refer to FIG. 98 through FIG. 100. In an embodiment of the disclosure, the button 409 is arranged on a side of the first protruding part 404 and is located on a surface of the first housing 401, and the button 409 extends into the first concave part 411 and may be used as the key switch of the circuit board 402.

Please refer to FIG. 98 through FIG. 100. In an embodiment of the disclosure, the limiting component 111 in the above embodiment may also be provided on the first housing 401 and the first protruding part 404 to achieve a lock of the first housing 401 and the power tool 30, which is implemented in the same way as shown in the above embodiment.

The second connector 414 on the adapter device 40 is the input port of the adapter device 40, a side of the second housing 403 opposite to a side of the second housing 403 connected with the first housing 401 is the input part of the adapter device 40, and the input part includes the second connector 414 electrically connected with the terminal 132, and the second guiding rail 419 clamped with the sliding rail 1102.

Please refer to FIG. 98 through FIG. 100. When the adapter device 40 is connected with the power tool 30 and the battery pack 100, the first guiding rail 405 on the first housing 401 is clamped with the guiding groove 332 of the power tool 30, and the first connector 408 is electrically connected with the Type-C connector 34. The second guiding rail 419 on the second housing 403 is clamped with the sliding rail 1102 on the battery pack 100, and the second connector 414 is electrically connected with the terminal 132 of the battery pack 100. The circuit board 402 arranged in the accommodating cavity formed by the first concave part 411 of the first housing 401 convert the output voltage of the battery pack 100 into the input voltage required by the power tool 30. The disclosure does not limit the rated voltage of the power tool 30, for example, the first power tool has a first rated voltage, the Type-C connector 34 is the first Type-C input connector, then the first connector 408 is electrically connected with the first Type-C input connector, the output voltage of the battery pack 100 is converted into the first rated voltage, and the first power tool works with the first rated voltage. The second power tool has the second rated voltage, the Type-C connector 34 is the second Type-C input connector, then the first connector 408 is electrically connected with the second Type-C input connector, the output voltage of the battery pack 100 is converted into the second rated voltage, and the second power tool works with the second rated voltage.

In an embodiment of the disclosure, when the battery pack is connected with the power tool through an adapter, the control system of the battery pack 100 is the same as the control system of the battery pack when the battery pack is connected with the power tool through the adapter in the above embodiment.

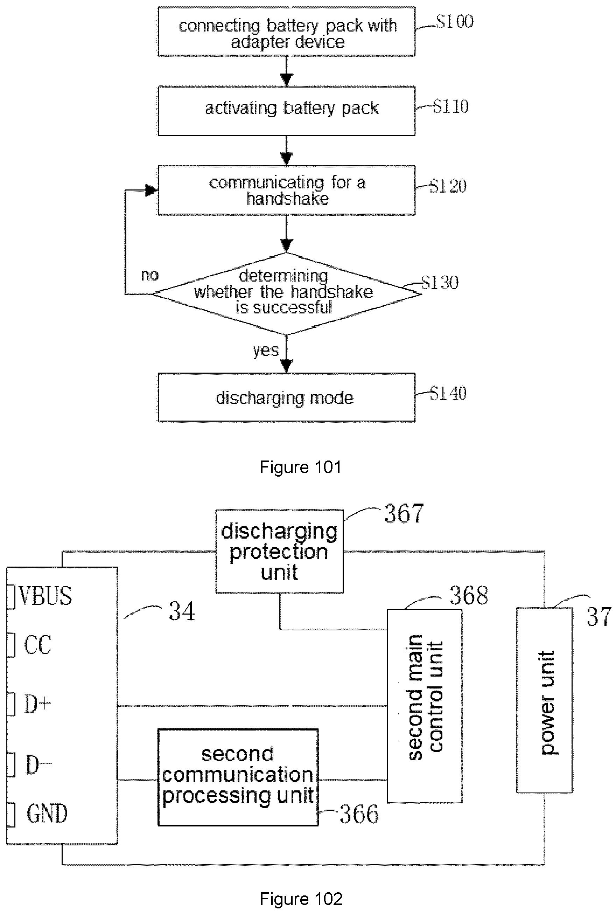

Please refer to FIG. 101. In this embodiment, after the battery pack 100 is connected with the adapter device 40, the control method of the battery pack 100 includes the following operations: S100: electrically connecting the battery pack 100 with the adapter device 40; S110: activating the battery pack 100; S120: the battery pack 100 communicating with adapter device 40 for a handshake; S130: determining whether the handshake is successful, when the handshake is successfully, executing S140: entering the charging mode; otherwise, returning to S120.

In a specific embodiment of the disclosure, the control method of the battery pack 100 specifically includes: after electrically connecting the battery pack 100 with the adapter device 40, the adapter device 40 activating the battery pack 100 through the COM signal, the battery pack 100 communicating with the adapter device 40 for a handshake, and determining whether the handshake is successful, if it is not successful, it remains in the handshake mode, after the handshake is successful, the adapter device 40 sending the discharging request through the COM signal, and when the battery pack 100 passes the request, the battery pack 100 entering the discharging mode. When the battery pack 100 entering the discharging mode, the main control unit 181 monitors the battery states in real time, including the voltage, the current and the cell temperature, and when the single-cell voltage or the temperature is abnormal, the discharging will be stopped. In this embodiment, the main control unit 181 may further include the power calculation module, and the power calculation module may calculate the battery power in real time. When the battery power of the battery pack 100 is the first threshold, which means that the state of charge SOC=the first threshold, the discharging will be stopped, and the first threshold is for example 5%.

Please refer to FIG. 102. The control system of the power tool 30 includes the Type-C connector 34, and the Type-C connector 34 includes VBUS, CC, D+, D- and GND terminals, which are electrically connected with the second main control unit 368 of Type-C connector 34, electrically connected with the second communication processing unit 366 between the Type-C connector 34 and the second main control unit 368, and electrically connected with the discharging protection unit 367 between the Type-C connector 34 and the second main control unit 368. One end of the Type-C connector 34 is electrically connected with the discharging protection unit 367 and then connected with the power unit 37 connected on the D+ terminal, and the other end of the power unit 37 is electrically connected with the D- terminal.

Please refer to FIG. 102. In this disclosure, the discharging protection unit 367 is configured to receive protection instructions from the second main control unit 368, and complete the discharging protection of the charger 30. The second communication processing unit 366 completes a communication between the adapter device 40 and the power tool 30, and the second main control unit 368 processes the power on and off instructions provided by the second communication processing unit 366 and the discharging protection unit 367.

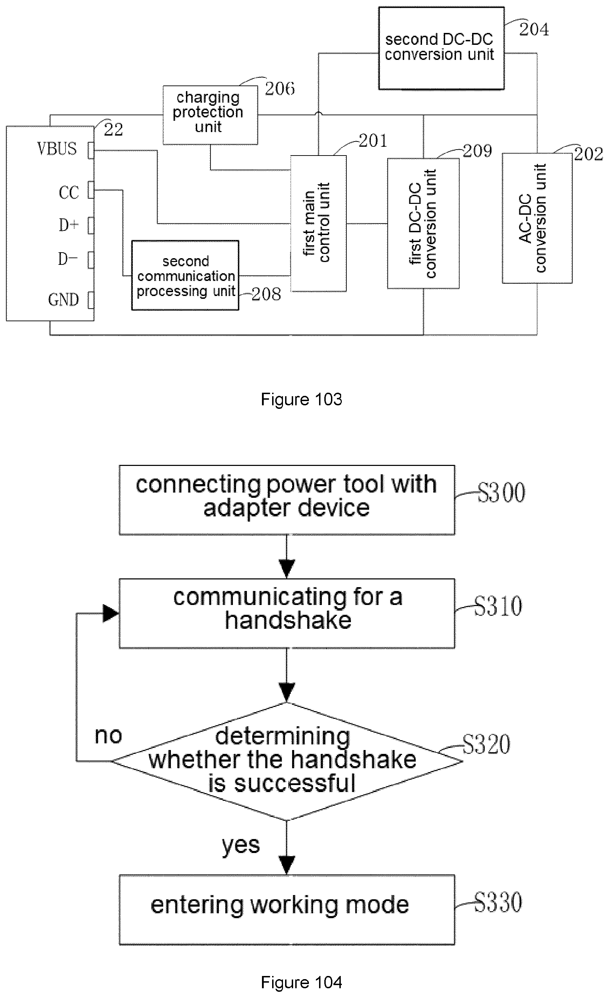

(**79**)
Please refer to FIG. 102 and FIG. 104. After the power tool 30 is connected with the adapter device 40, the control method of the power tool 30 includes the following operations: S300: connecting the power tool 30 with the adapter device 40; S310: the power tool 30 communicating with the adapter device 40 for a handshake; S320: determining whether the handshake is successful, when the handshake is successful, then executing S330: the power tool 20 entering the working mode, otherwise returning to S310. Specifically, in an embodiment of the disclosure, after the power tool 30 is connected with the adapter device 40, and after the entire system (including the control system in the power tool 30 and the control system in the adapter device 40) is activated, the power tool 30 communicates with the adapter device 40 through the Type-C output connector for a handshake, if the handshake is not successful, it remains in the handshake mode, after the handshake is successful, the second main control unit of the power tool 30 starts the discharging protection unit, and sends the discharging request. After the discharging request is passed, the power tool 30 will enter the working mode.

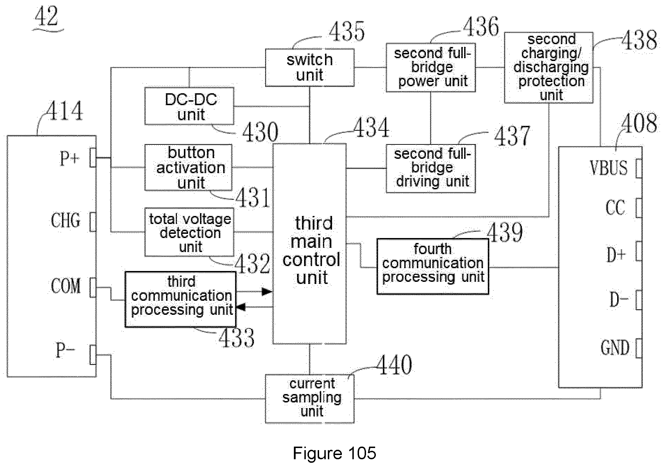

Please refer to FIG. 105. The charging conversion control system 42 provided by the disclosure is arranged between the control system of the battery pack 100 and the control system of the power tool 30, and the charging conversion control system 42 mainly includes: the third communication processing unit 433 electrically connected with the second connector 414, the third main control unit 434 electrically connected with the third communication processing unit 433, the second full-bridge driving unit 437 electrically connected with the third main control unit 434, the second full-bridge power unit 436 electrically connected with the second connector 414 and the second full-bridge driving unit 437, and the fourth communication processing unit 439 electrically connected with the third main control unit 434. And the second full-bridge power unit 436 and the fourth communication processing unit 439 are electrically connected with the first connector 408. Wherein, when electrically connecting the control system of the battery pack 100 and the control system of the charging device 30, the second connector 414 is electrically connected with the terminal 132 of the battery pack 100, and the first connector 408 is electrically connected with the Type-C connector 34 of the power tool 30.

Please refer to FIG. 105. The charging conversion control system 42 is arranged between the control system of the battery pack 100 and the control system of the power tool 30. The second connector 414 of the disclosure is the input connector of the charging conversion control system 42, which is electrically connected with the terminal 132 of the battery pack 100, corresponding to the terminal 132, the second connector 414 includes four terminals like P+, CHG, COM and P-, corresponding to the terminal 132 one-to-one. When connecting with the power tool 30, the CHG terminal is not used and is configured as an idle terminal. The P+ and P- terminals are used to provide the output voltage of the battery pack 100, and the COM terminal is used for communication. It should be noted that in a connection with the charger 20, wherein the CHG terminal is the charging connector, the P+, P- terminals are used to provide the input voltage of the battery pack 100, and the COM terminal is used for communication. The first connector 408 is the output connector of the charging conversion control system 42, which is electrically connected with the Type-C output connector 34 of the power tool 30, and the first connector 408 includes VBUS, CC, D+, D- and GND terminals, corresponding to the connectors of the Type-C connector 34 one-to-one. Wherein, the D+, D- terminals are used for receiving the output voltage of the charging conversion control system 42, the CC terminal is used for communication between the charging conversion control system 42 and the power tool 30, the GND terminal is used as the ground terminal, and the VBUS is used to output the constant voltage and supply power to each module in the power tool 30. The VBUS for example is commonly used as the voltage of 5V.

In addition, please refer to FIG. 105. The third communication processing unit 433 is electrically connected with the COM terminal of the second connector 414 and the third main control unit 434 to realize the communication between the battery pack 100 and the adapter device 40. In this embodiment, the third communication processing unit 433 is the COM communication processing unit, matching the COM communication of the battery pack 100. The third main control unit 434 receives signals of each module and sends operation instructions. A first end of the fourth communication processing unit 439 is electrically connected with third communication processing unit 434, and a second end of the fourth communication processing unit 439 is electrically connected with the first connector 408 to realize the communication between the power tool 30 and the adapter device 40. In this embodiment, the fourth communication processing unit 439 is the Type-C communication processing unit, matching the Type-C communication of the power tool 30.

In addition, please refer to FIG. 105. The second full-bridge driving unit 437 is electrically connected with the third main control unit 434, the second full-bridge power unit 436 is electrically connected with the second connector 414 and the second full-bridge driving unit 437, the second full-bridge driving unit 437 and the second full-bridge power unit 436 constitutes the boost-buck module, and information of the input voltage may be obtained according to the communication between the third communication processing unit 433 and battery pack 100. Information of the required output voltage may be obtained according to the communication between the fourth communication processing unit 439 and power tool 30. The third main control unit 434 determines the duty cycle of the output PWM signal according to the input voltage and the required output voltage. According to the PWM signal sent by the third main control unit 434, the second full-bridge driving unit 437 and the second full-bridge power unit 436 convert the voltage input by the battery pack 100 from the second connector 414 into the voltage required by the power tool 30, and the voltage required by the power tool 30 is output by the first connector 408.

Please refer to FIG. 105. The charging conversion control system 42 in the disclosure further includes the DC-DC conversion unit 430, the input end of the DC-DC conversion unit 430 is electrically connected with the second connector 414. Specifically, the input end of the DC-DC conversion unit 430 is electrically connected with the P+ terminal, the output end of the DC-DC conversion unit 430 is electrically connected with the third main control unit 434 and each module, the DC-DC conversion unit 430 converts the input voltage of the second connector 414 into the working voltage required for the operation of each module, and the working voltage is, for example, 5V.

Please refer to FIG. 105. The charging conversion control system 42 in the disclosure further includes the button activation unit 431, the button activation unit 431 is the triggering unit, which is connected with the button 409 on the first housing 401, when it is necessary to start the charging conversion control system 42, the button 409 is pressed, the button activation unit 431 is triggered, then the third main control unit 434 electrically connected with the button activation unit 431 is activated, and then the charging conversion control system 42 is activated. When the button 409 is pressed again, the third main control unit 434 may be turned off by the button activation unit 431, and then the charging conversion control system 42 may be turned off.

Please refer to FIG. 105. The charging conversion control system 42 in the disclosure further includes the total voltage detection unit 432, one end of the total voltage detection unit 432 is electrically connected with the second connector 414. Specifically, the first end of the total voltage detection unit 432 is electrically connected with the P+ terminal, and the second end of the total voltage detection unit 432 is electrically connected with the third main control unit 434. Before the voltage conversion, the total voltage detection unit 432 detects the output voltage of the battery pack 100, in the total voltage detection unit 432, a threshold of the output voltage of the battery pack 100 is configured as the second threshold, and determining whether the output voltage of the battery pack 100 is within the second threshold. The determination result is transmitted to the third main control unit 434. When the output voltage of the battery pack 100 is within the second threshold, the voltage conversion is allowed, and when the output voltage of the battery pack 100 exceeds the second threshold, voltage conversion is prohibited. The total voltage detection unit 432 may prevent the battery pack 100 from overdischarging, and prevent the charge conversion control system 42 from being burned out.

Please refer to FIG. 105. The charging conversion control system 42 in the disclosure further includes the current sampling unit 440, the current sampling unit 440 is electrically connected between the second connector 414 and the first connector 408, connected in series on the loop pf the charging conversion control system 42, and is electrically connected with the third main control unit 434. Specifically, the first end of the current sampling unit 440 is electrically connected with the P- terminal, the second end of the current sampling unit 440 is electrically connected with the D- terminal, and a third end of the current sampling unit 440 is further electrically connected with the third main control unit 434. The current sampling unit 440 is used to detect the current in the loop, and transmit the current information in the loop to the third main control unit 434. When the current in the circuit is abnormal, the voltage conversion process may be stopped.

Please refer to FIG. 105. The charging conversion control system 42 in the disclosure further includes the switch unit 435, the current sampling unit 435 is electrically connected between the second connector 414 and the first connector 408, and is electrically connected with the third main control unit 434 at the same time. Specifically, the first end of the switch unit 435 is electrically connected with the P+ terminal, the second end of the switch unit 435 is electrically connected with an input end of the second full-bridge power unit 436, and a third end of the switch unit 435 is electrically connected with the third main control unit 434. When the third main control unit 434 sends the conduction command, the switching unit 435 is turned on, the second full-bridge power unit 436 has the input voltage, and the charging conversion control system 42 may realize the voltage conversion function. When the third main control unit 434 sends the shutdown command, the switch unit 435 is turned off, the second full-bridge power unit 436 do not has the input voltage, and the charging conversion control system 42 may not realize the voltage conversion function. In the present application, when the input voltage is over/under voltage, or the current is abnormal, or the charging/discharging is abnormal, etc., the switch unit 435 will be turned off.

Please refer to FIG. 105. The charging conversion control system 42 in the disclosure further includes the second charging/discharging protection unit 438, the second charging/discharging protection unit 438 is electrically connected between the first connector 408 and the second full-bridge power unit 436, is electrically connected with the third main control unit 434, and receives the protection instruction from the third main control unit 434 to complete the charging/discharging protection of the loop. In this embodiment, the second charging/discharging protection unit 438 is the Type-C charging/discharging protection unit.

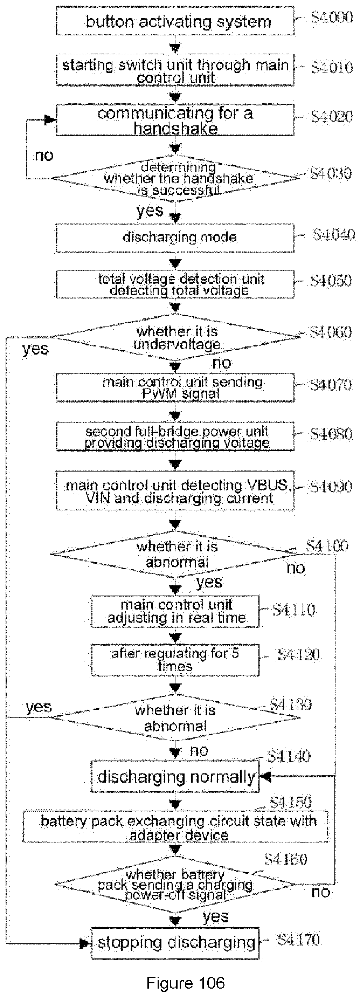

Please refer to FIG. 106. In an embodiment of the disclosure, the disclosure provides the charging conversion method, the charging conversion method specifically includes:
S4000: activating the charging conversion control system 42 through the button activation unit 431;
   specifically, through pressing the button 409 on the first housing 401, the button activation unit 431 is triggered, and the third main control unit 434 electrically connected with the button activation unit 431 is activated, thereby activating the charging conversion control system 42. In this embodiment, when the button 409 is pressed again, the third main control unit 434 may be turned off through the button activation unit 431, and then the charging conversion control system 42 may be turned off.
S4010: starting the switch unit 435 through the third main control unit 434;
   specifically, the switching unit 435 is arranged between the second connector 414 and the first connector 408, and is located between the second connector 414 and the second full-bridge power unit 436. If the switching unit 435 is disconnected, then voltage conversion can not be performed.
S4020: communicating through the third communication processing unit 433 and the fourth communication processing unit 439 for a handshake;
   specifically, the third communication processing unit 433 is electrically connected with the COM terminal of the second connector 414, and conducts the COM communication handshake with the battery pack 100. The fourth communication processing unit 439 is electrically connected with the CC terminal of the first connector 408, and conducts the CC communication handshake with the power tool 30.
S4030: determining whether the handshake is successful, if successful, executing S4040, otherwise returning to S4020;
S4040: entering the discharging mode;
   specifically, entering the discharging mode includes turning on a circuit in the power tool 30 and entering the working mode; the battery pack 100 entering the discharging mode; and the charge conversion control system 42 entering the voltage conversion mode.
S4050: the total voltage detection unit 432 detecting the output voltage of the battery pack 100;
   specifically, the total voltage detection unit 432 is electrically connected with the P+ terminal of the second connector 414 for detecting the output voltage of the battery pack 100, and the total voltage detection unit 432 is provided with an input voltage threshold of the charge conversion control system 42, for example, the second threshold.

When the battery pack 100 is connected with the power tool through the adapter, S4060 is to determine whether the output voltage of the battery pack 100 is over/undervoltage;
specifically, the total voltage detection unit 432 determines whether the output voltage of the battery pack 100 is within the second threshold of the charging conversion control system 42, when the output voltage of the battery pack 100 is within the second threshold, S4070 will be executed, otherwise S4170 will be executed, and the discharging will be stopped.

When the battery pack 100 is connected with the charger through the adapter, S4060 is to determine whether the output voltage of the battery pack 100 is full charged;
specifically, the total voltage detection unit 432 determines whether the power in the battery pack 100 is fully charged, which means that the state of charge SOC=the first threshold. The first threshold is for example 100%. When the battery pack 100 is not fully charged, which means that the state of charge SOC<100%, S4070 will be executed, otherwise S4170 will be executed to stop charging.

S4070: the third main control unit 434 sending the PWM signal;
specifically, the second full-bridge driving unit 437 and the second full-bridge power unit 436 constitute the boost module, according to the output voltage required by the battery pack 100 detected by the total voltage detection unit 432, the third main control unit 434 controls the voltage output of the second full-bridge power unit 436 through sending out the PWM signal with the certain duty cycle.

S4080: the second full-bridge power unit 436 providing the discharging voltage;
specifically, after the switch unit 435 is turned on and the third main control unit 434 sends the PWM signal to the boost/buck module, the second full-bridge power unit 436 performs the voltage conversion, and converts the output voltage of the battery pack 100 into the input voltage required by the power tool 30, and the discharging voltage is the output voltage of the charging conversion control system 42.

S4090: the third main control unit 434 detecting the input voltage, output voltage and loop current of the charging conversion control system 42;
specifically, in the process of the voltage conversion of the charging conversion control system 42, the third main control unit 434 detects the information in the circuit in real time, which includes detecting the output voltage of the battery pack 100 through the total voltage detection unit 432, which means the input voltage of the charging conversion control system 42; detecting the output voltage of the charging conversion control system 42 through the second charging/discharging protection unit 438; and detecting loop current of the charging conversion control system 42 through the current sampling unit 440.

S4100: determining whether the input voltage, output voltage and loop current of the charging conversion control system 42 are abnormal;
specifically, the total voltage detection unit 432 may detect whether the output voltage of the charging conversion control system 100 is abnormal. In the third main control unit 434, according to the voltage required by the power tool 30, a threshold of the output voltage of the charging conversion control system 42 may be set as the second threshold, and the threshold of the loop current in the charging conversion control system 42 is the third threshold. The second charging/discharging protection unit 438 monitors the input voltage of the charging conversion control system 42 in real time, and transmits it to the third main control unit 434. When the output voltage of the charging conversion control system 42 is within the second threshold, it is considered that no abnormality has occurred. When the output voltage of the charging conversion control system 42 is not within the second threshold, it is considered that an abnormality has occurred. The current sampling unit 440 monitors the loop current of the charging conversion control system 42 in real time, when the loop current of the charging conversion control system 42 is within the third threshold, it is considered that no abnormality has occurred, and when the loop current of the charging conversion control system 42 is not within the third threshold, it is considered that an abnormality has occurred. When any of the above abnormalities occurs, it is considered that an abnormality has occurred. When there is an abnormality, S4110 is executed, otherwise S4140 is executed.

S4110: the third main control unit 434 adjusting in real time;
specifically, the third main control unit 434 changes the output voltage and loop current through adjusting the duty cycle of the PWM signal. In the process of adjustment, the third main control unit 434 still monitors the input voltage, output voltage and loop current of the charging conversion control system 42 in real time.

S4120: recording the number of adjustments of the third main control unit 434, when the number of adjustments of the third main control unit 434 reaches the set number of times, executing S4130; wherein, the number of times being 5 times, for example.

S4130: determining whether the input voltage, output voltage and loop current of the charging conversion control system 42 are abnormal;
specifically, the determination process is the same as S4100, when the determination result is not abnormal, S4140 will be executed, otherwise S4170 will be executed, and the discharging is powered off.

S4140: charging normally;
S4150: exchanging circuit state with the battery pack 100 through the third communication processing unit 433;
specifically, during the discharging process of the battery pack 100, the adapter device 40 performs state exchange with the battery pack 100 through the third communication processing unit 433.

S4160: determining whether the battery pack 100 has the charging power-off signal, if not, executing S4140, otherwise executing S4170. Wherein, the battery pack 100 is provided with the power calculation module to monitor the state of charge of the battery pack 100 in real time. When the state of charge SOC=100%, the charging power-off signal is sent.

S4170: powering off the discharging;
specifically, the signal is sent to the switching unit 435 through the third main control unit 434, and the work of the charging conversion control system 42 is stopped.

In summary, please refer to FIG. 106. The charging conversion method provided by the disclosure mainly includes: after the adapter device 40 is connected to the battery pack 100, activating the charging conversion control system 42 of the adapter device 40 through the button 409 on the adapter device 40. After the charging conversion control system 42 is activated, the battery pack 100 will be activated through the COM signal and communicated for a handshake through the COM signal. After the handshake is successful, the total voltage detection unit 432 detects whether the battery pack 100 is under-voltage, if not, the battery pack 100 will enter the voltage conversion mode. The control process of voltage conversion is as follows: the third main control unit 434 sends the PWM signal, the second full-bridge driving unit 437 provides the suitable voltage, the third main control unit 434 monitors parameters in the voltage conversion process, the parameters in the parameter process in the voltage conversion process generally includes the loop current, input voltage and output voltage, and the parameter range may be set as needed. When the parameter in the voltage conversion process exceeds the preset parameter range, it is considered abnormal. The charging/discharging voltage and charging/discharging current may be dynamically adjusted according to the preset logic. A number of adjustments may be one or more times, a specific number of times may be set according to the need, in this embodiment is 5 times. After the adjustment, the parameters in the voltage conversion process continue to be detected, and when there is still abnormality, the discharging will be stopped, when there is no abnormality, the voltage conversion will be performed normally. During the normal discharging process, the battery pack 100 and the adapter device 40 exchange data in real time through the communication, and the discharging will be stopped after the battery pack 100 sends out the discharging power-off signal. In this embodiment, when the state of charge SOC of the battery pack 100 equals the first threshold, the battery pack 100 sends out the discharging power-off signal.

In summary, the adapter device and tool system of the disclosure can convert the output voltage of the battery pack into the input voltage required by the power tool. When in the discharging process, the technical parameters of the battery pack, the adapter device and the power tool is detected in real time, the charging conversion method is implemented according to the technical parameters, the input/output power is dynamically adjusted, which may effectively protect a safety of the battery pack, adapter device and power tool, and extend a duration life of the battery pack and the power tool.

### (77, 78)

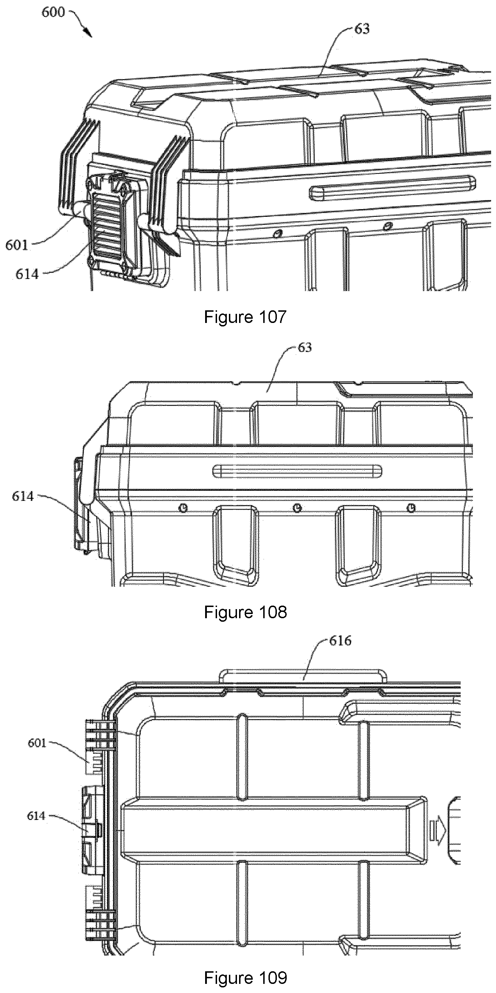

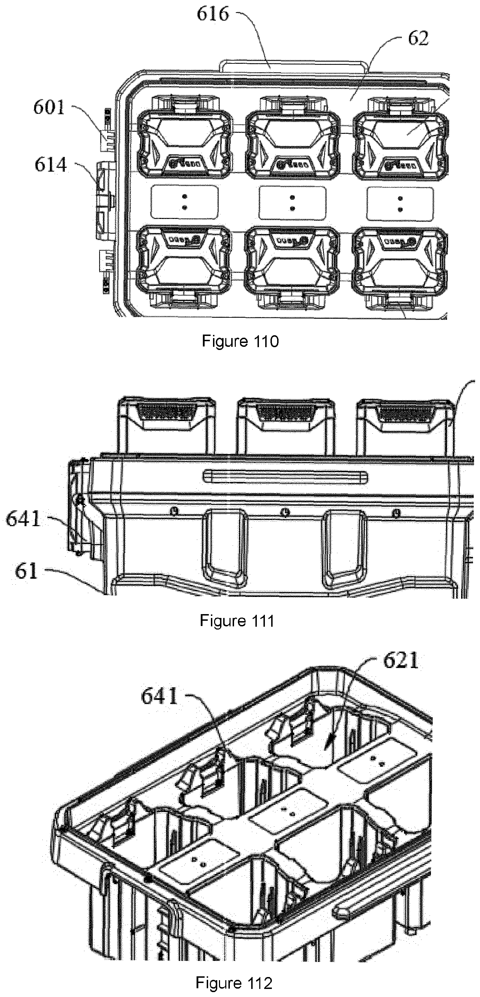

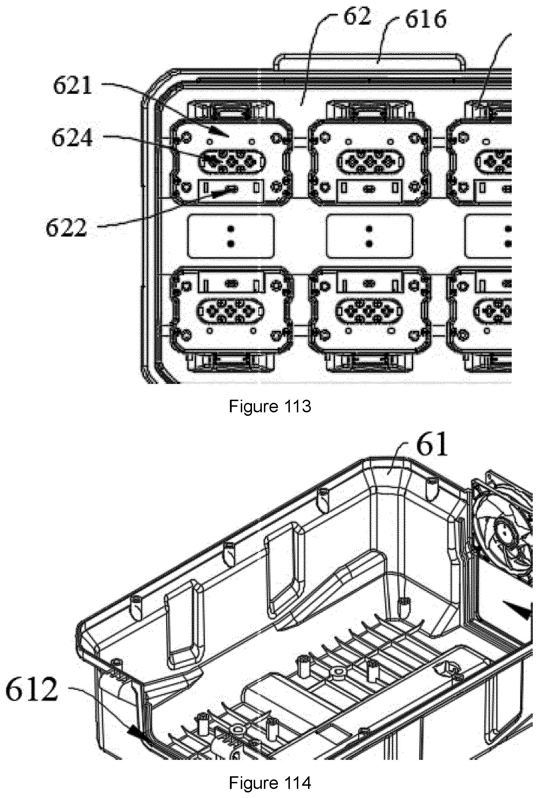

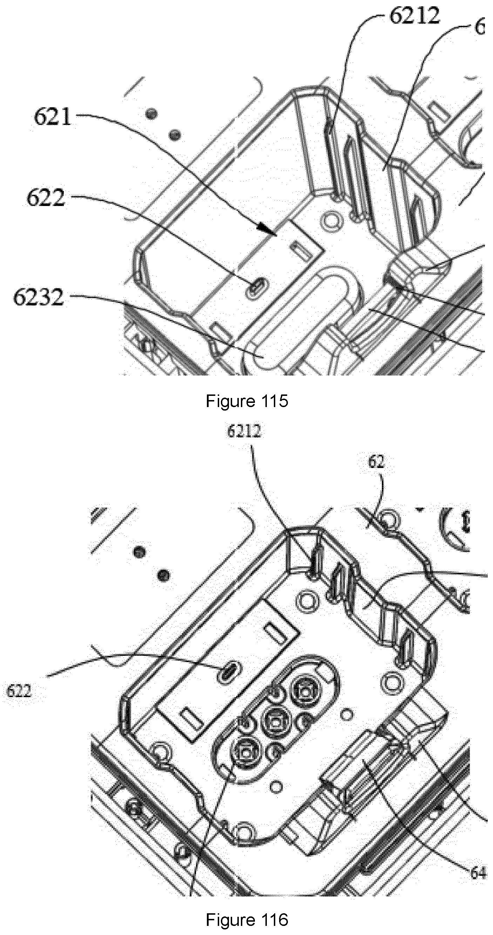

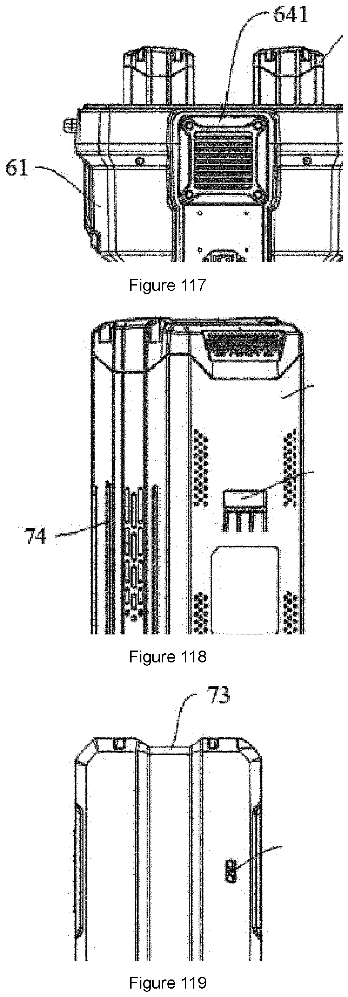

Please refer to FIG. 107 through FIG. 119. In an embodiment of the disclosure, a multi-groove charger is further provided to charge a plurality of battery packs at the same time. The multi-groove charger 600 includes a body 60, the body 60 is provided with a plurality of battery pack housing parts 621, and each battery pack housing part 621 is provided with a first mating interface, and the first mating interface is configured for mounting with a second mating interface on each battery pack. Specifically, the body 60 includes a charging housing 61, a charging box 62 and a box cover 63, the charging box 62 is located inside the charging housing 61, and an upper part of the charging box 62 is sealed by the box cover 63. Specifically, the charging box 62 includes a plurality of battery pack housing parts 621, and the plurality of the battery pack housing parts 621 are rectangularly distributed among them. The number of battery pack housing parts 621 is for example configured to 2, 4, 6, 8 or 10 cavities, in this embodiment, the number is preferably 6, and a plurality of rectangularly distributed battery pack housing parts 621 on the charging box 62 is provided with a gap among them to facilitate a heat dissipation.

Please refer to FIG. 107 through FIG. 119. In this embodiment, the battery pack housing part 621 is provided with a charging connector 622 and a battery pack bounce mechanism. In some embodiments, the battery pack bounce mechanism is located in a middle position of a bottom of the battery pack housing part 621, and the charging connector 622 is located on one side of the bottom of the battery pack housing part 621. Specifically, the charging connector 622 is the Type-C connector, a bottom middle position of the battery pack housing part 621 is concave downward to form a bounce mechanism mounting cavity 624, and the battery pack bounce mechanism is mounted in the bounce mechanism mounting cavity 624. In the embodiment, the battery pack bounce structure includes a spring 6231 and a bottom support 6232. A first end of the spring 6231 is connected with the bottom of the battery pack housing part 124, and a second end of the spring 6231 is connected with a bottom of the bottom support 6232. The charging connector 622 is connected with the Type-C connector 122 at a bottom of the battery pack, and the battery pack is locked through a limiting mechanism 64 for charging. The limiting mechanism 64 is mounted on a top edge of the battery pack housing part 621, and each battery pack housing part 621 corresponds to one limiting mechanism 64 and one battery pack bounce mechanism 12.

Please refer to FIG. 107 through FIG. 119. In this embodiment, the limiting mechanism 64 includes a mounting base 641, a limiting element 642, a rotating shaft 643 and a torsion spring 644. The mounting base 641 is mounted on a top edge of the battery pack housing part 621, the rotating shaft 643 is mounted on the mounting base 641, the limiting element 642 is connected with the rotating shaft 643, and the torsion spring 644 is sleeved on the rotating haft 643. When mounting the battery pack for charging, the limiting element 642 is pressed and rotated with the rotating shaft 643, and the torsion spring 644 is compressed until the battery pack is mounted in place for charging. The limiting element 642 is reset under an action of the torsion spring 644, and fits a second limiting groove 722 on a side surface of the battery pack housing to achieve a lock on the battery pack. When the battery pack is taken out, the limiting element 642 is pressed, so that the limiting element 642 is separated from the second limiting groove 722, a limiting effect is lost, and the battery pack is ejected under an action of the battery pack bounce mechanism to take out the battery pack.

Please refer to FIG. 107 through FIG. 119. Specifically, when the battery pack is mounted in the battery pack housing part 621, the bottom support 6232 of the battery pack bounce mechanism is lowered, and the spring 6231 is compressed until the charging connector 622 is connected with the Type-C connector 122. And under an action of the limiting mechanism 64, the battery pack is locked for charging. When the limiting element 141 of the limiting mechanism 64 is pressed, and a limiting effect disappears, and the bottom support 6232 is lifted under an elastic force of the spring 6231, thereby, the battery pack is pushed out, and the charging connector 622 and the Type-C connector 122 are separated at the same time.

Please refer to FIG. 107 through FIG. 119. In this embodiment, the multi-groove charger 600 further includes the box cover 63, a first side of the box cover 63 is connected with the charging housing 61 by a hinge 601, and a second side of the box cover 63 is provided with a locking structure to lock the charging housing 61 and the box cover 63 together. And in this embodiment, there is a gap between a bottom of the charging box 62 and a bottom of the charging housing 61, a circuit board is mounted in the gap (not indicated in the figure), and the circuit board is electrically connected with the charging connector 622 at a bottom of each battery pack housing part 622.

Please refer to FIG. 107 through FIG. 119. In this embodiment, the charging housing 61 is for example set as rectangular, two short sides of the rectangular charging housing 61 are provided with a notch which is formed from a top of the charging housing 61 to the bottom of the charging housing, and depths of the notches on the two short sides are different. Specifically, in the embodiment, a deeper notch is defined as the first notch 611, a shallower notch is defined as the second notch 612, and there is a gap between the plurality of rectangularly distributed battery pack housing parts 621 on the charging box 62. And the gap between the battery pack housing parts 621 arranged along the short side exactly faces the first notch 611 and the second notch 612 on the two short sides of the charging housing 61 to facilitate the heat dissipation.

Please refer to FIG. 107 through FIG. 119. In this embodiment, the deeper notch on the charging housing 61 is mounted with a heat dissipation fan 613, and a top of the heat dissipation fan 613 is flush with the top of the charging housing 61. Specifically, the heat dissipation fan 613 is mounted on the first notch 611, through a role of the heat dissipation fan 613 to achieve the heat dissipation. In addition, in this embodiment, both sides opposite each other of the charging housing 61 is mounted with a heat dissipation window 614. Specifically, the heat dissipation window 614 is respectively mounted at the first notch 611 and the second notch 612, and the heat dissipation fan 613 is located inside the heat dissipation window 614, so that while protecting the heat dissipation fan 613, the first gap 611 can be covered.

In addition, please refer to FIG. 107 through FIG. 119, in this embodiment, the charging housing 61 is mounted with a power connector 615, the power connector 615 includes an input end and an output end, the input end is connected with the external power supply, and the output end is electrically connected with the charging connector 622. The power connector 615 is connected on the circuit board between the bottom of the charging box 62 and the bottom of the charging housing 61. Specifically, the power connector 615 is preferably located below the heat dissipation fan 613, and the power connector 615 is fixed mounted at a bottom of the heat dissipation window 614, and is connected with the external power supply. Further, holding parts 616 are provided on both long sides of the rectangular charging housing 61 to facilitate moving.

Please refer to FIG. 107 through FIG. 119. Specifically, in an embodiment of the disclosure, the first mating interface includes a protruding structure 6211 and a plurality of guiding rails 6212, and the plurality of the guiding rails 6212 are located on both sides of the protruding structure 6211. The second mating interface includes a concave groove structure 723 and a plurality of first sliding grooves 724, the plurality of the first sliding grooves 724 are located on both sides of the concave groove structure 723 respectively. When the battery pack is mounted in the battery pack housing part 621, the concave groove structure 723 is matched with the protruding structure 6211, and the first sliding groove 724 is matched with the guiding rail 1211. The protruding structure 6211 and the concave groove structure 723 are equivalent to a mutual matching of a sliding block and the sliding rail, and a mutual matching between the guiding rail 6212 and the first sliding groove 724 plays a guiding role, so that the Type-C connector 122 at the bottom of the battery pack can be smoothly and accurately connected with the charging connector 622 at the bottom of the battery pack housing part 621 for charging.

Please refer to FIG. 107 through FIG. 119. In this embodiment, the multi-groove charger 600 includes an AD-DC module, a plurality of DC-DC modules, a plurality of charging connectors 622 and a control and protocol module. Each battery pack housing part 621 corresponds to one DC-DC module 1003 and one charging connector 622. In the embodiment, the number of DC-DC modules and the number of the plurality of the charging connectors 622 are both, for example, set to six. The AD-DC module is respectively connected with the six DC-DC modules, and each DC-DC module is respectively connected with one charging connector 622. The control and protocol module is respectively connected with each DC-DC module and the charging connector 622, the AD-DC module is used to convert the alternating current into the direct current, and the DC-DC module is used to provide a suitable charging voltage according to a signal of a control chip. The control and protocol module is used for a control of the entire charging system, a protocol analysis and charging control of each Type-C connector. The multi-groove charger determines whether there is a battery pack accessed according to the CC signal of a Type-C connector, and may determine which battery pack is accessed. Each Type-C connector corresponds to one DC-DC module, and the corresponding DC-DC module is turned on after the CC signal handshake is successful, so as to realize the charging of the battery through the Type-C.

Please refer to FIG. 107 through FIG. 119, in this embodiment, each battery pack corresponds to one battery pack housing part 621. It should be understood that the battery pack is provided with the Type-C connector, and a battery cell set is arranged inside it. A Type-C power supply loop is an entire charging/discharging loop from the Type-C connector to the battery cell set, and a plurality of cells inside the battery cell set constitutes a cell set circuit. A controllable switch may be arranged in the charging/discharging loop in practical applications, which enables an activation or shutdown function of the Type-C power supply loop.

In this embodiment, an end of the multi-groove charger may determine which terminal has the battery pack access through the CC signal, and activate the accessed battery pack through the CC signal. After the battery pack is activated, it will communicate with the multi-groove charger through the CC signal for a handshake, and the corresponding DC-DC module 1003 will be turned on after the handshake is successful to realize the charging of the battery. A control process of the battery pack charging is as follows:
after the battery pack is connected with the charger, the CC signal activating the battery pack, after the battery pack is activated, the battery pack conducting a charging handshake with the multi-groove charger, and after the handshake is successful, entering a charging management mode;
when the battery enters the charging management mode, the main control unit 180 sending the PWM control signal to the first full-bridge driving unit 1601, and the first full-bridge driving unit 1601 providing the suitable charging voltage according to the PWM signal;
at the same time, the main control unit 180 monitoring of discharging voltage VBUS, VIN and discharging current in real time;
when the charging voltage and charging current are abnormal, the main control unit 180 adjusting in real time, and after adjusting 5 times, determining whether there is still an abnormality, if abnormal, stopping charging, otherwise charging normally;
when the Type-C connector entering the normal charging mode, the main control unit 180 monitoring the battery states in real time, the battery states including the voltage, the current and the cell temperature, and when the single-cell voltage or the temperature is abnormal, stopping charging, otherwise charging normally; and
at the same time, the power calculation module calculating the battery power in real time, and when SOC=100%, stopping charging.

The disclosure provides the multi-groove charger and charging system, the multi-groove charger includes the charging housing and the charging box, the charging box is located inside the charging housing, and the charging box includes a plurality of rectangularly distributed battery pack housing parts to accommodate a plurality of battery packs at the same time, so that it can charge multiple battery packs at the same time, as well as portable movement and storage of battery packs, shortening charging time and effectively improving work efficiency.

### (91, 92)

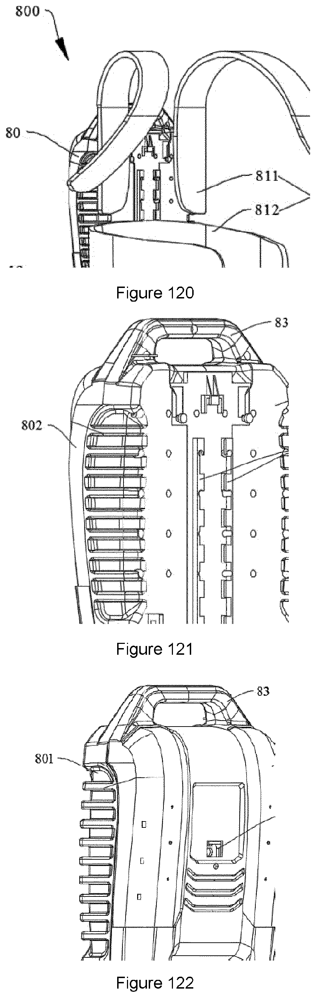

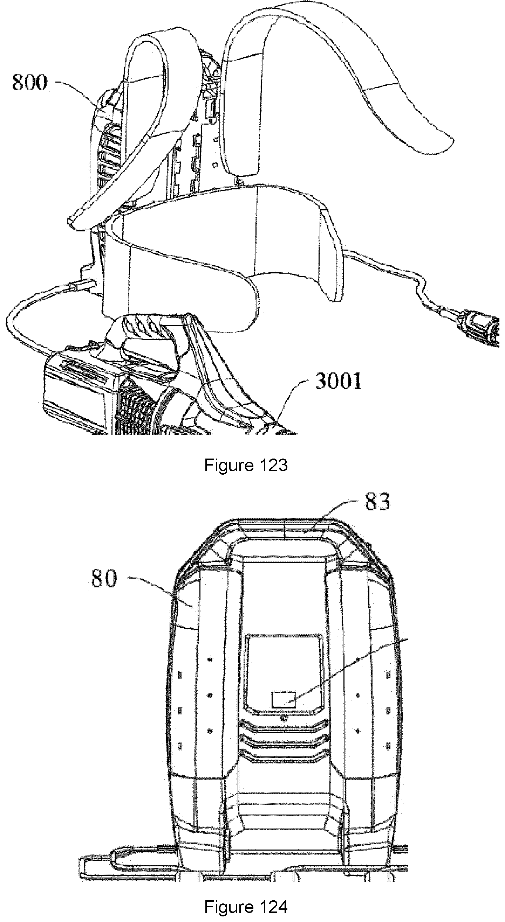

Please refer to FIG. 121 through FIG. 124. The disclosure provides a backpack battery pack 800, including a strap 81, and a backpack housing 80 mounted on the strap 81, where the battery pack is mounted in the backpack housing 80, and the backpack housing 80 is connected with the external device through the charging connector 12.

Please refer to FIG. 121 through FIG. 124. In this embodiment, the backpack housing 80 includes a back housing 801 and a front housing 802, the back housing 801 and the front housing 802 are fixedly connected to form the accommodating cavity, the accommodating cavity is mounted with the battery cell assembly and the circuit board, and the cell in the battery cell assembly and the circuit board are electrically connected with each other. The battery assembly includes a plurality of cells, the plurality of the cells is mounted in the battery cell bracket, the battery cell bracket is located in the backpack housing 80.

Please refer to FIG. 121 through FIG. 124. In this embodiment, the strap 81 is mounted on one side of the backpack housing 80, specifically, mounted on the back housing 801, for attaching a backpack personnel. In this embodiment, the strap 81 includes a shoulder strap 811 and a hip belt 812, the shoulder strap 811 is mounted on the back housing 801 close to both sides, and is arranged along a height direction of the backpack housing 80 for attaching a shoulder of the backpack personnel. The hip belt 812 is mounted on a side of the back housing 801 near a bottom surface, for attaching a waist of the backpack personnel. In addition, in this embodiment, one side of the backpack housing 80 mounted with the strap 81 is provided with a sliding adjustment concave groove. The sliding adjustment concave groove includes at least two second sliding grooves 813, the second sliding groove 813 is arranged along the height direction of the backpack housing 80, and the two second sliding grooves 813 are spaced and arranged parallel to each other. A sliding block is arranged on a side of the hip belt 812 connected with the back housing 801, the sliding block fits the second sliding groove 813. A height adjustment of the hip belt is achieved by sliding the sliding block on the second sliding grooves 813.

Please refer to FIG. 121 through FIG. 124. In this embodiment, the backpack housing 80 is mounted with a second display device 803, the second display device 803 is located on an opposite side of the backpack housing 80 mounted with the strap 81, which means that the second display device 803 is mounted on the front housing 802. Specifically, the second display device 803 is preferably located in a middle position of the front housing 802. In an embodiment of the disclosure, the second display device 803 is used to display the remaining power and/or voltage and/or current and/or temperature of battery cell and/or fault of the battery pack. When the battery pack is combined with the power tool and works, the second display device 803 may also display operating parameters of the power tool, such as the rotating speed of the motor and so on. The second display device 803 is preferably the LCD display, but should not be limited to this.

Please refer to FIG. 121 through FIG. 124. In this embodiment, the bottom surface of the backpack housing 80 is arranged as a horizontal structure to facilitate a placement of the battery pack, and a top of the backpack housing 80 is provided with a grip 83. The grip 83 and the backpack housing 80 are preferably integrated to facilitate moving and carrying.

Please refer to FIG. 121 through FIG. 124, in this embodiment, the battery pack further includes the charging connector 12, the charging connector 12 is mounted on the circuit board and electrically connected with the circuit board, and the charging connector 12 is located on a side surface of the backpack housing 80. In some embodiments, the charging connector 12 is located on the side of the backpack housing 80 near the bottom surface. In this embodiment, the charging connector 12 is configured as the Type-C connector, and the number of the Type-C connectors is preferably two. The two Type-C connectors are located on both sides of the backpack housing 80, which means that when the backpack personnel carries the battery pack, the two Type-C connectors are close to left and right arms of the backpack personnel respectively for ease of use. In this embodiment, the two Type-C connectors may be connected with different electrical devices, such as the first power tool 3001 and the second power tool 3002, respectively, to perform different functions, thereby improving work efficiency. The first power tool 3001 and the second power tool 3002 are similar to the power tool in the above embodiments, including the functional module performing the corresponding function, and the functional module is driven by the battery pack in the above embodiments.

Please refer to FIG. 121 through FIG. 124. The charging connector 12 includes the first Type-C connector and the second Type-C connector, the first Type-C connector is connected with the first power tool 3001, and the first power tool 3001 has the first rated voltage. The second Type-C connector is connected with the second power tool 3002, and the second power tool 3002 has the second rated voltage. The first rated voltage and the second rated voltage may be the same or different, and the first power tool 3001 and the second power tool 3002 may be used simultaneously or not. In addition, it should also be noted that the backpack battery pack may further supply power for mobile phones, laptops, wearable smart devices, etc. through the Type-C connector on the backpack battery pack.

Another embodiment of the disclosure provides a charging/discharging combination, including the backpack battery pack 800. The backpack battery pack 800 is detachably connected with the access device, and the access device may charge/discharge the backpack battery pack 800.

The backpack battery pack 800 includes the backpack housing 80, the strap 81, and at least one Type-C connector 122.

The backpack housing 80 is provided with the battery cell assembly 120 and a charging/discharging control system therein.

The strap 81 is mounted on one side of the backpack housing 80.

Each Type-C connector 122 is arranged on the backpack housing 80.

The charging/discharging control system is connected in series between the battery cell assembly 120 and each Type-C connector 122, used to detect the device type of an access device on each Type-C connector, and charge/discharge the backpack battery pack 800 according to the device type. The device types include the charging device and discharging device.

The access device is provided with at least one Type-C connector, and each Type-C connector of the access device matches the Type-C connector 122 of the battery pack, and the Type-C connectors are male and female heads of each other. In addition, the access device may further be provided with the plugging piece, and the access device may also charge/discharge the battery pack through the plugging piece. Correspondingly, the interconnected plugging piece and the power supply terminal 132 of the backpack battery pack are also male and female heads of each other.

Please refer to FIG. 121 through FIG. 124. The access device includes at least one charging device and a discharging device.

The discharging device includes the first tool 3001 and the second tool 3002.

When the backpack battery pack 800 is connected with the first tool 3001 and the second tool 3002, the backpack battery pack 800 will simultaneously output a first voltage to the first tool 3001, and output a second voltage to the second tool 3002.

In some embodiments, the access device includes at least one charging device and a discharging device.

The discharging device includes the first tool 3001 or the second tool 3002.

When the backpack battery pack 100 is connected with the first tool 3001 or the second tool 3002, the backpack battery pack 800 will output the first voltage to the first tool 3001, or output the second voltage to the second tool 3002.

Wherein, the first voltage and the second voltage are determined according to parameter values of the discharging device.

The backpack battery pack is provided with the charging/discharging control system therein, the charging/discharging control system is similar to the charging/discharging system of the battery pack in the above embodiments, and its charging/discharging method is also similar, and will not be repeated again.

The disclosure supports the USB PD fast charging protocol, can detect the device type of the access device on the Type-C connector, and charge/discharge the backpack battery pack according to the device type. It not only can be quickly charged through the Type-C connector, but also can quickly discharge the access device with Type-C connector 122, and the charge/discharge power can be adjusted according to the access device within a certain range, which is suitable for a variety of access devices with different voltages, and convenient for users to carry and use. And in the charging/discharging process, the technical parameters of the backpack battery pack are detected in real time, the charging/discharging protection logic is executed according to the technical parameters, and the input/output power is dynamically adjusted, which may effectively protect a safety of the backpack battery pack and extend a duration life of the backpack battery pack.

**The** disclosure provides the backpack battery pack and power tool system, the battery pack housing is provided with the strap. When it is necessary to carry the battery pack to outdoor work, the battery pack may be carried by the strap, which is convenient and labor-saving. And the backpack battery pack is provided with a plurality of Type-C connectors, which can charge and discharge at the same time. And each Type-C connector may be connected to different power tools or different chargers to improve work efficiency and charging efficiency.

module is driven by the battery pack in the above embodiments.

Please refer to FIG. 121 through FIG. 124. The charging connector 12 includes the first Type-C connector and the second Type-C connector, the first Type-C connector is connected with the first power tool 3001, and the first power tool 3001 has the first rated voltage. The second Type-C connector is connected with the second power tool 3002, and the second power tool 3002 has the second rated voltage. The first rated voltage and the second rated voltage may be the same or different, and the first power tool 3001 and the second power tool 3002 may be used simultaneously or not. In addition, it should also be noted that the backpack battery pack may further supply power for mobile phones, laptops, wearable smart devices, etc. through the Type-C connector on the backpack battery pack.

Another embodiment of the disclosure provides a charging/discharging combination, including the backpack battery pack 800. The backpack battery pack 800 is detachably connected with the access device, and the access device may charge/discharge the backpack battery pack 800.

The backpack battery pack 800 includes the backpack housing 80, the strap 81, and at least one Type-C connector 122.

The backpack housing 80 is provided with the battery cell assembly 120 and a charging/discharging control system therein.

The strap 81 is mounted on one side of the backpack housing 80.

Each Type-C connector 122 is arranged on the backpack housing 80.

The charging/discharging control system is connected in series between the battery cell assembly 120 and each Type-C connector 122, used to detect the device type of an access device on each Type-C connector, and charge/discharge the backpack battery pack 800 according to the device type. The device types include the charging device and discharging device.

The access device is provided with at least one Type-C connector, and each Type-C connector of the access device matches the Type-C connector 122 of the battery pack, and the Type-C connectors are male and female heads of each other. In addition, the access device may further be provided with the plugging piece, and the access device may also charge/discharge the battery pack through the plugging piece. Correspondingly, the interconnected plugging piece and the power supply terminal 132 of the backpack battery pack are also male and female heads of each other.

Please refer to FIG. 121 through FIG. 124. The access device includes at least one charging device and a discharging device.

The discharging device includes the first tool 3001 and the second tool 3002.

When the backpack battery pack 800 is connected with the first tool 3001 and the second tool 3002, the backpack battery pack 800 will simultaneously output a first voltage to the first tool 3001, and output a second voltage to the second tool 3002.

In some embodiments, the access device includes at least one charging device and a discharging device.

The discharging device includes the first tool 3001 or the second tool 3002.

When the backpack battery pack 100 is connected with the first tool 3001 or the second tool 3002, the backpack battery pack 800 will output the first voltage to the first tool 3001, or output the second voltage to the second tool 3002.

Wherein, the first voltage and the second voltage are determined according to parameter values of the discharging device.

The backpack battery pack is provided with the charging/discharging control system therein, the charging/discharging control system is similar to the charging/discharging system of the battery pack in the above embodiments, and its charging/discharging method is also similar, and will not be repeated again.

The disclosure supports the USB PD fast charging protocol, can detect the device type of the access device on the Type-C connector, and charge/discharge the backpack battery pack according to the device type. It not only can be quickly charged through the Type-C connector, but also can quickly discharge the access device with Type-C connector 122, and the charge/discharge power can be adjusted according to the access device within a certain range, which is suitable for a variety of access devices with different voltages, and convenient for users to carry and use. And in the charging/discharging process, the technical parameters of the backpack battery pack are detected in real time, the charging/discharging protection logic is executed according to the technical parameters, and the input/output power is dynamically adjusted, which may effectively protect a safety of the backpack battery pack and extend a duration life of the backpack battery pack.

**The** disclosure provides the backpack battery pack and power tool system, the battery pack housing is provided with the strap. When it is necessary to carry the battery pack to outdoor work, the battery pack may be carried by the strap, which is convenient and labor-saving. And the backpack battery pack is provided with a plurality of Type-C connectors, which can charge and discharge at the same time. And each Type-C connector may be connected to different power tools or different chargers to improve work efficiency and charging efficiency.

## Claims

1. A battery pack (100), comprising:
a battery pack housing (10) having a battery cell assembly (120) and a circuit board (13) arranged therein, the circuit board (13) being electrically connected with the battery cell assembly (120);
a plurality of Type-C connectors (122), arranged on the circuit board (13) and electrically connected to the circuit board (13) to realize an electrical connection between the battery cell assembly (120) and the Type-C connectors (122), the Type-C connectors (122) being configured to connect external devices;
a power supply terminal (132), arranged on the circuit board (13) and electrically connected to the circuit board (13), and
a first control unit (1801) and a second control unit (1802),
**characterized in that**
the first control unit (1801) is configured to obtain a battery pack state after completion of a power-on initialization, , wherein the first control unit (1801) is configured to open a Type-C connector (122), and set an Over Voltage Protection ,OVP, value according to the obtained battery pack state, and in response thereto, the second control unit (1802) is configured to power-on by self-calibration, and determine if an external device is connected to the Type-C connector, and if it is determined, by the second control unit (1802), that the external device is a charging device connected to the Type-C connector, the first control unit (1801) and the second control unit (1802) are configured to interact with data, wherein the the second control unit (1802) is configured to tell the first control unit (1801) that the charging device is connected, and the first control unit (1801) is configured to execute a charging protection logic, during which charging protection logic process, the first control unit (1801) is configured to monitor the battery pack state in real time, and maintain communication with the second control unit (1802).

2. The battery pack according to claim 1, wherein, the battery pack housing (10) is further provided with a display device (1115), the display device (1115) is configured to display a remaining power and/or a voltage and/or a current and/or a temperature of a battery cell and/or a fault of the battery pack (100).

3. The battery pack according to claim 1, wherein, the battery pack housing (10) is provided with a plug-in port (113), the Type-C connector (122) is arranged in the plug-in port (113), and the plug-in port (113) is provided with a protective cover (118).

4. The battery pack according to claim 3, wherein, the protective cover (118) is a protective plug (117), a first end of the protective plug (117) is inserted into the Type-C connector (122) and matches the Type-C connector (122), a second end of the protective plug (117) is matched with the plug-in port (113),or the protective cover (118) is a rotating protective cover, the rotating protective cover matches the Type-C connector (122), and one end of the rotating protective cover (118) is rotatably connected to the battery pack housing (10) by a rotation shaft; the protective cover is a protective sliding cover, matching the Type-C connector (122).

5. The battery pack according to claim 1, wherein, the Type-C connector comprises at least a first Type-C connector (122a) and a second Type-C connector (122b), and the first Type-C connector (122a) and the second Type-C (122b) connector are respectively arranged on the circuit board (13), and are electrically connected with the circuit board (13).

6. The battery pack according to claim 5, wherein, a top of the battery pack housing (10) is provided with a plug-in part (1101), and two sides of the plug-in part (1101) are provided with sliding rails.

7. The battery pack according to claim 6, wherein, the first Type-C connector (122a) and the second Type-C connector (122b) are arranged on two sides or the same side of the plug-in part (1101).

8. The battery pack according to claim 6, wherein, the first Type-C connector (122a) and the second Type-C connector (122b) are arranged on a top surface of the plug-in part (1101).

9. The battery pack according to claim 5, wherein, the first Type-C connector (122a) and the second Type-C (122b) connector are arranged on two sides or the same side of the battery pack housing (10).

10. The battery pack according to claim 6, wherein, the battery pack housing (10) comprises an upper housing (11) and a lower housing (12), the upper housing (11) is fixedly connected with the lower housing (12), the plug-in part (1101) is arranged on a top surface of the upper housing (12);
an edge connecting the lower housing (11) and the upper housing (12) is provided with a sealing groove (1320), the sealing groove (1320) is provided with a sealing ring (1324) therein, when the lower housing (12) and the upper housing (11) are fixedly assembled, and the sealing ring (1324) is deformed under an extrusion of the upper housing (11) and the lower housing (12) to fill a gap between the upper housing (11) and the lower housing (12) so as to form a sealing.

11. A power tool system, comprising a battery pack (100) according to any one of claims 1-10 and a power tool (30), the power tool comprises (30) a functional module performing a corresponding function and a plurality of tool Type-C connectors (34) arranged on the power tool (30); wherein
when the battery pack is connected with the power tool, the plurality of the Type-C connectors (122) of the battery pack (100) is connected with the plurality of the tool Type-C connectors (34), and the battery pack (100) outputs energy to the power tool (30) to drive the functional module to work.

12. The power tool system according to claim 11, wherein, the power tool (30) is one of a string trimmer, a hedge trimmer, a blower, a chain saw, a lawn mower, a pressure washer, a vacuum cleaner, an electric drill, an electric hammer, a riding mower, a robotic mower, and a robotic cleaning device.

13. A charging system, comprising:
a battery pack (100) according to any one of claims 1-10, and
a charger (200), comprising:
a charger housing (21), a first circuit board (being arranged in the charger housing (21), the charger housing (21) being provided with a first charging connector (22), the first charging connector (22) being electrically connected with the first circuit board; wherein
when the charger charges the battery pack (100), the first charging connector (22) and the Type-C connectors (122) are electrically connected.

## Patentansprüche

1. Batteriepack (100), umfassend:
ein Batteriepackgehäuse (10), aufweisend eine darin angeordnete Batteriezellenbaugruppe (120) und eine Leiterplatte (13), wobei die Leiterplatte (13) elektrisch mit der Batteriezellenbaugruppe (120) verbunden ist;
eine Vielzahl von Typ-C-Verbindern (122), die auf der Leiterplatte (13) angeordnet und elektrisch mit der Leiterplatte (13) verbunden sind, um eine elektrische Verbindung zwischen der Batteriezellenbaugruppe (120) und den Typ-C-Verbindern (122) zu realisieren, wobei die Typ-C-Verbinder (122) ausgebildet sind, um externe Vorrichtungen zu verbinden;
einen Leistungsversorgungsanschluss (132), angeordnet auf der Leiterplatte (13) und elektrisch mit der Leiterplatte (13) verbunden, und
eine erste Steuereinheit (1801) und eine zweite Steuereinheit (1802),
**dadurch gekennzeichnet, dass**
die erste Steuereinheit (1801) ausgebildet ist, um nach Abschluss einer Einschaltinitialisierung einen Batteriepackzustand zu erhalten, wobei die erste Steuereinheit (1801) ausgebildet ist, um einen Typ-C-Verbinder (122) zu öffnen, und einen Überspannungsschutz-, OVP, -wert gemäß dem erhaltenen Batteriepackzustand einzustellen, und als Antwort darauf ist die zweite Steuereinheit (1802) ausgebildet ist, um sich durch Selbstkalibrierung einzuschalten, und zu bestimmen, ob eine externe Vorrichtung mit dem Typ-C-Verbinder verbunden ist, und falls bestimmt wird, durch die zweiten Steuereinheit (1802), dass die externe Vorrichtung eine Ladevorrichtung ist, die mit dem Typ-C-Verbinder verbunden ist, sind die erste Steuereinheit (1801) und die zweite Steuereinheit (1802) ausgebildet, um mit Daten zu interagieren, wobei die zweite Steuereinheit (1802) ausgebildet ist, um der ersten Steuereinheit (1801) mitzuteilen, dass die Ladevorrichtung verbunden ist, und die erste Steuereinheit (1801) ausgebildet ist, um eine Ladeschutzlogik auszuführen, während dieses Ladeschutzlogikprozesses ist die erste Steuereinheit (1801) ausgebildet, um den Batteriepackzustand in Echtzeit zu überwachen, und Kommunikation mit der zweiten Steuereinheit (1802) aufrecht zu erhalten.

2. Batteriepack nach Anspruch 1, wobei das Batteriepackgehäuse (10) weiter mit einer Anzeigevorrichtung (1115) bereitgestellt ist, wobei die Anzeigevorrichtung (1115) ausgebildet ist, um eine verbleibende Leistung und/oder eine Spannung und/oder einen Strom und/oder eine Temperatur einer Batteriezelle und/oder einen Fehler des Batteriepacks (100) anzuzeigen.

3. Batteriepack nach Anspruch 1, wobei das Batteriepackgehäuse (10) mit einem Einsteckanschluss (113) bereitgestellt ist, der Typ-C-Verbinder (122) in dem Einsteckanschluss (113) angeordnet ist, und der Einsteckanschluss (113) mit einer Schutzabdeckung (118) bereitgestellt ist.

4. Batteriepack nach Anspruch 3, wobei die Schutzabdeckung (118) ein Schutzstecker (117) ist, ein erstes Ende des Schutzsteckers (117) in den Typ-C-Verbinder (122) eingeführt ist und mit dem Typ-C-Verbinder (122) übereinstimmt, ein zweites Ende des Schutzsteckers (117) mit dem Einsteckanschluss (113) übereinstimmt, oder die Schutzabdeckung (118) eine drehende Schutzabdeckung ist, die drehende Schutzabdeckung mit dem Typ-C-Verbinder (122) übereinstimmt, und ein Ende der drehenden Schutzabdeckung (118) über eine Drehwelle mit dem Batteriepackgehäuse (10) drehbar verbunden ist; die Schutzabdeckung eine Schieberschutzabdeckung ist, die mit dem Typ-C-Verbinder (122) übereinstimmt.

5. Batteriepack nach Anspruch 1, wobei der Typ-C-Verbinder mindestens einen ersten Typ-C-Verbinder (122a) und einen zweiten Typ-C-Verbinder (122b) umfasst, und der erste Typ-C-Verbinder (122a) und der zweite Typ-C-Verbinder (122b) jeweils auf der Leiterplatte (13) angeordnet sind und elektrisch mit der Leiterplatte (13) verbunden sind.

6. Batteriepack nach Anspruch 5, wobei eine Oberseite des Batteriepackgehäuses (10) mit einem Einsteckteil (1101) bereitgestellt ist, und zwei Seiten des Einsteckteils (1101) mit Schieberschienen bereitgestellt sind.

7. Batteriepack nach Anspruch 6, wobei der erste Typ-C-Verbinder (122a) und der zweite Typ-C-Verbinder (122b) an zwei Seiten oder an derselben Seite des Einsteckteiles (1101) angeordnet sind.

8. Batteriepack nach Anspruch 6, wobei der erste Typ-C-Verbinder (122a) und der zweite Typ-C-Verbinder (122b) auf einer oberen Oberfläche des Einsteckteils (1101) angeordnet sind.

9. Batteriepack nach Anspruch 5, wobei der erste Typ-C-Verbinder (122a) und der zweite Typ-C-Verbinder (122b) an zwei Seiten oder an derselben Seite des Batteriepackgehäuses (10) angeordnet sind.

10. Batteriepack nach Anspruch 6, wobei das Batteriepackgehäuse (10) ein oberes Gehäuse (11) und ein unteres Gehäuse (12) umfasst, das obere Gehäuse (11)fest mit dem unteren Gehäuse (12) verbunden ist, das Einsteckteil (1101) an einer oberen Oberfläche des oberen Gehäuses (12) angeordnet ist;
ein Rand, der das untere Gehäuse (11) und das obere Gehäuse (12) verbindet, ist mit einer Dichtungsnut (1320) bereitgestellt, die Dichtungsnut (1320) ist mit einem Dichtungsring (1324) darin bereitgestellt, wenn das untere Gehäuse (12) und das obere Gehäuse (11) fest zusammengebaut sind, und der Dichtungsring (1324) wird durch eine Extrusion des oberen Gehäuses (11) und des unteren Gehäuses (12) verformt, um einen Spalt zwischen dem oberen Gehäuse (11) und dem unteren Gehäuse (12) zu füllen, um eine Dichtung auszubilden.

11. Leistungswerkzeugsystem, umfassend einen Batteriepack (100) nach einem der Ansprüche 1 - 10 und ein Leistungswerkzeug (30), wobei das Leistungswerkzeug (30) ein funktionales Modul, das eine entsprechende Funktion durchführt, und eine Vielzahl von Werkzeug-Typ-C-Verbindern (34) umfasst, die an dem Leistungswerkzeug (30) angeordnet sind; wobei
wenn der Batteriepack mit dem Leistungswerkzeug verbunden ist, die Vielzahl von Typ-C-Verbindern (122) des Batteriepacks (100) mit der Vielzahl von Werkzeug-Typ-C-Verbindern (34) verbunden sind, und der Batteriepack (100) Energie an das Leistungswerkzeug (30) abgibt, um das funktionale Modul zur Arbeit anzutreiben.

12. Leistungswerkzeugsystem nach Anspruch 11, wobei das Leistungswerkzeug (30) ein Rasentrimmer, ein Heckentrimmer, ein Laubbläser, eine Kettensäge, ein Rasenmäher, ein Hochdruckreiniger, ein Staubsauger, ein elektrischer Bohrer, ein elektrischer Hammer, ein Aufsitzmäher, ein Mähroboter oder eine Roboterreinigungsvorrichtung ist.

13. Ladesystem, umfassend:
einen Batteriepack (100) nach einem der Ansprüche 1-10, und
ein Ladegerät (200), umfassend:
ein Lagegerätgehäuse (21), eine erste Leiterplatte (die im Ladegerätgehäuse (21) angeordnet ist, wobei das Ladegerätgehäuse (21) mit einem ersten Ladeverbinder (22) bereitgestellt ist, der erste Ladeverbinder (22) elektrisch mit der ersten Leiterplatte verbunden ist; wobei, wenn das Ladegerät den Batteriepack (100) lädt, der erste Ladeverbinder (22) und die Typ-C-Verbinder (122) elektrisch verbunden sind.

## Revendications

1. Bloc-batterie (100), comprenant :
un boîtier (10) de bloc-batterie présentant un ensemble d'éléments de batterie (120) et une carte de circuit (13) disposés dans celui-ci, la carte de circuit (13) étant connectée électriquement à l'ensemble d'éléments de batterie (120) ;
une pluralité de connecteurs de type C (122), disposés sur la carte de circuit (13) et connectés électriquement à la carte de circuit (13) pour réaliser une connexion électrique entre l'ensemble d'éléments de batterie (120) et les connecteurs de type C (122), les connecteurs de type C (122) étant configurés pour connecter des dispositifs externes ;
une borne d'alimentation électrique (132), disposée sur la carte de circuit (13) et connectée électriquement à la carte de circuit (13), et
une première unité de commande (1801) et une deuxième unité de commande (1802), **caractérisé en ce que**
la première unité de commande (1801) est configurée pour obtenir un état de bloc-batterie après l'achèvement d'une initialisation de mise sous tension, dans lequel la première unité de commande (1801) est configurée pour ouvrir un connecteur de type C (122), et régler une valeur de protection contre les surtensions (OVP) selon l'état de bloc-batterie obtenu, et en réponse à cela, la deuxième unité de commande (1802) est configurée pour se mettre sous tension par auto-étalonnage, et déterminer si un dispositif externe est connecté au connecteur de type C, et s'il est déterminé, par la deuxième unité de commande (1802), que le dispositif externe est un dispositif de charge connecté au connecteur de type C, la première unité de commande (1801) et la deuxième unité de commande (1802) sont configurées pour interagir avec des données, dans lequel la deuxième unité de commande (1802) est configurée pour indiquer à la première unité de commande (1801) que le dispositif de charge est connecté, et la première unité de commande (1801) est configurée pour mettre en oeuvre une logique de protection de charge, pendant lequel processus de logique de protection de charge, la première unité de commande (1801) est configurée pour surveiller l'état de bloc-batterie en temps réel, et maintenir une communication avec la deuxième unité de commande (1802).

2. Bloc-batterie selon la revendication 1, dans lequel, le boîtier (10) de bloc-batterie est en outre muni d'un dispositif d'affichage (1115), le dispositif d'affichage (1115) étant configuré pour afficher une charge restante et/ou une tension et/ou une intensité et/ou une température d'un élément de batterie et/ou un défaut du bloc-batterie (100).

3. Bloc-batterie selon la revendication 1, dans lequel, le boîtier (10) de bloc-batterie est muni d'un orifice de branchement (113), le connecteur de type C (122) étant disposé dans l'orifice de branchement (113), et l'orifice de branchement (113) étant muni d'un couvercle de protection (118).

4. Bloc-batterie selon la revendication 3, dans lequel, le couvercle de protection (118) est un bouchon de protection (117), une première extrémité du bouchon de protection (117) est insérée dans le connecteur de type C (122) et est associée au connecteur de type C (122), une deuxième extrémité du bouchon de protection (117) est associée à l'orifice de branchement (113), ou le couvercle de protection (118) est un couvercle de protection rotatif, le couvercle de protection rotatif est associé au connecteur de type C (122), et une extrémité du couvercle de protection rotatif (118) est reliée de manière rotative au boîtier (10) de bloc-batterie par un arbre de rotation ; le couvercle de protection est un couvercle de protection coulissant, associé au connecteur de type C (122).

5. Bloc-batterie selon la revendication 1, dans lequel, le connecteur de type C comprend au moins un premier connecteur de type C (122a) et un deuxième connecteur de type C (122b), et le premier connecteur de type C (122a) et le deuxième connecteur de type C (122b) sont respectivement disposés sur la carte de circuit (13), et sont connectés électriquement à la carte de circuit (13).

6. Bloc-batterie selon la revendication 5, dans lequel, une partie supérieure du boîtier (10) de bloc-batterie est munie d'une partie de branchement (1101), et deux côtés de la partie de branchement (1101) sont munis de rails de coulissement.

7. Bloc-batterie selon la revendication 6, dans lequel, le premier connecteur de type C (122a) et le deuxième connecteur de type C (122b) sont disposés sur deux côtés ou du même côté de la partie de branchement (1101).

8. Bloc-batterie selon la revendication 6, dans lequel, le premier connecteur de type C (122a) et le deuxième connecteur de type C (122b) sont disposés sur une surface supérieure de la partie de branchement (1101).

9. Bloc-batterie selon la revendication 5, dans lequel, le premier connecteur de type C (122a) et le deuxième connecteur de type C (122b) sont disposés sur deux côtés ou du même côté du boîtier (10) de bloc-batterie.

10. Bloc-batterie selon la revendication 6 dans lequel, le boîtier (10) de bloc-batterie comprend un boîtier supérieur (11) et un boîtier inférieur (12), le boîtier supérieur (11) étant relié à demeure au boîtier inférieur (12), la partie de branchement (1101) étant disposée sur une surface supérieure du boîtier supérieur (12) ;
un bord reliant le boîtier inférieur (11) et le boîtier supérieur (12) est muni d'une rainure d'étanchéité (1320), la rainure d'étanchéité (1320) est munie d'une bague d'étanchéité (1324) dans celle-ci, lorsque le boîtier inférieur (12) et le boîtier supérieur (11) sont assemblés à demeure, et la bague d'étanchéité (1324) est déformée sous une extrusion du boîtier supérieur (11) et du boîtier inférieur (12) pour remplir un espace entre le boîtier supérieur (11) et le boîtier inférieur (12) de manière à former une étanchéité.

11. Système d'outil électrique, comprenant un bloc-batterie (100) selon l'une quelconque des revendications 1 à 10 et un outil électrique (30), l'outil électrique comprend (30) un module fonctionnel exécutant une fonction correspondante et une pluralité de connecteurs d'outil de type C (34) disposés sur l'outil électrique (30) ; dans lequel
lorsque le bloc-batterie est connecté à l'outil électrique, la pluralité des connecteurs de type C (122) du bloc-batterie (100) est connectée à la pluralité des connecteurs d'outil de type C (34), et le bloc-batterie (100) délivre de l'énergie à l'outil électrique (30) pour entraîner le module fonctionnel à fonctionner.

12. Système d'outil électrique selon la revendication 11, dans lequel, l'outil électrique (30) est l'un parmi un taille-bordure, un taille-haies un souffleur, une tronçonneuse, une tondeuse à gazon, un nettoyeur haute pression, un aspirateur, une perceuse électrique, un marteau électrique, une tondeuse autoportée, une tondeuse robotisée et un dispositif de nettoyage robotisé.

13. Système de charge, comprenant :
un bloc-batterie (100) selon l'une quelconque des revendications 1 à 10, et
un chargeur (200), comprenant :
un boîtier (21) de chargeur, une première carte de circuit (disposée dans le boîtier (21) de chargeur), le boîtier (21) de chargeur étant muni d'un premier connecteur de charge (22), le premier connecteur de charge (22) étant connecté électriquement à la première carte de circuit ; dans lequel lorsque le chargeur charge le bloc-batterie (100), le premier connecteur de charge (22) et les connecteurs de type C (122) sont connectés électriquement.
